# FASCICULE DE BREVET EUROPEEN

(11) **EP 1 377 615 B1**
(45) Date de publication et mention de la délivrance du brevet: **24.06.2009**
(21) Numéro de dépôt: 02713002.0
(22) Date de dépôt: 28.02.2002
(51) Int. Cl.: C08F 20/06, C08F 2/38

(54) **PROCEDE DE POLYMERISATION RADICALAIRE CONTROLEE DE L'ACIDE ACRYLIQUE ET DE SES SELS, LES POLYMERES DE FAIBLE POLYDISPERSITE OBTENUS, ET LEURS APPLICATIONS**
VERFAHREN ZUR KONTROLLIERTEN RADIKAL-POLYMERISATION VON ACRYLSÄURE UND VON SEINEM SALZ, POLYMERE MIT SCHWACHER POLYDISPERSITÄT SO HERGESTELLT, UND DEREN VERWENDUNG
METHOD FOR CONTROLLED FREE RADICAL POLYMERISATION OF ACRYLIC ACID AND SALTS THEREOF, RESULTING LOW-POLYDISPERSITY POLYMERS, AND THEIR USES

(30) Priorité: 02.03.2001 FR 0102848
(43) Date de publication de la demande: 07.01.2004
(73) Titulaire: COATEX S.A.S., 69730 Genay (FR)
(72) Inventeur: SUAU, Jean-Marc, F-69480 Lucenay (FR); EGRAZ, Jean-Bernard, F-69130 Ecully (FR); CLAVERIE, Jérôme, Durham, NH 03824 (US); LADAVIERE, Catherine, F-69110 Sainte Foy les Lyon (FR)
(74) Mandataire: Richebourg, Michel François
(86) Numéro de dépôt international: PCT/FR2002/000722
(87) Numéro de publication internationale: WO 2002/070571

(56) Documents cités:
- WO-A-98/01478
- FR-A- 2 794 463

## Description

### Secteur technique de l' invention

La présente invention concerne le secteur technique de la polymérisation de l'acide acrylique et de ses sels, plus particulièrement en solution, plus particulièrement par voie radicalaire contrôlée, l'utilisation des agents de transfert organo-soufrés correspondants, les polymères d'acide acrylique ainsi obtenus, présentant une très faible polydispersité PD (ou très faible Indice de polymolécularité IP, qui est un terme équivalent), et leurs applications dans l'industrie.

### Problème technique posé

Le problème technique principal vise à réduire la polydispersité des polymères d'acide acrylique et de ses sels.

Un problème connexe réside dans l'obtention d'un taux de conversion suffisant en sortie de polymérisation, de l'ordre de au moins 90 %, de préférence plus de 95 %.

Un autre problème connexe réside dans l'obligation de rechercher, pour les applications industrielles, des molécules d'agent de transfert relativement simples et relativement simples à mettre en oeuvre, avec un coût acceptable dans l'industrie.

On a privilégié une polymérisation dans un système solvant, ce qui pose également des problèmes de protection de l'environnement, et on souhaite de plus que le (co)polymère obtenu présente une quantité résiduelle d'agent(s) de transfert aussi faible que possible.

C'est pourquoi, de manière préférentielle le système solvant de la polymérisation est un système aqueux ou hydro-alcoolique, les alcools considérés possédant un à quatre atomes de carbone inclus, et pouvant être primaires, secondaires ou tertiaires, de préférence primaires ou secondaires.

Comme le comprendra l'homme du métier, ces objectifs sont difficiles à atteindre, surtout ensemble.

Les problèmes ci-dessus sont aggravés par le fait que l'acide acrylique et ses sels sont des monomères bien connus pour polymériser très rapidement (cinétique très rapide). Cette cinétique est très sensible à de nombreux paramètres tels que notamment la variation de pH, le choix du ou des solvants ou encore la variation de température. L'ensemble de ces paramètres fait que la polymérisation de l'acide acrylique est difficile à contrôler.

Il existe de nombreuses façons de définir le contrôle en polymérisation (voir par exemple les discussions dans Quirk, R.P. ; Lee, B. polym. Int. 1992, 27,359 ou Penczek, S., ; Kubisa, P. ; Szymanski, R. Makromol. Chem, ; Rapid Commun. 1991, 12,77. et "Living Polymerization : Rationale for Uniform Technology", J.Pol. Sci., A: Pol. Chem, 38, 1706-1752,2000).

Par contrôle, on entend :
a) Une réaction où le polymère est formé en l'absence de gel, même lorsque le degré d'avancement de la réaction est proche de 100 % (supérieur à 90 %). En raison de sa très grande réactivité, la polymérisation de l'acide acrylique s'accompagne généralement de réactions de transfert au polymère, qui sont par exemple décrites dans "The Chemistry of Free Radical Polymerization", Moad, G., Solomon, D.H., Pergamon, 1995. La présence combinée de réactions de transfert et de réactions de couplage bimoléculaire, inhérentes à la polymérisation radicalaire, génère des réseaux tridimensionnels de polyacide acrylique. Ces réseaux tridimensionnels sont les constituants du gel qui se forme spontanément lors de la polymérisation radicalaire de l'acide acrylique, ce qui a pour conséquence de créer des gels lors de la polymérisation radicalaire de l'acide acrylique, et cela quel que soit le poids moléculaire souhaité. On peut facilement caractériser cette densité de réticulation par le nombre de branches pour 1000 carbones. Ce nombre de branches est directement relié au rapport de la vitesse de réaction de transfert au polymère à la vitesse de réaction de propagation (voir par exemple Flory, P.J. Principles of Polymer Chemistry) ; Cornell University Press : New York, 1953). Ce rapport n'est pas affecté par l'utilisation de la méthode de contrôle qui est décrite ici, donc le nombre de branches est identique entre une polymérisation radicalaire conventionnelle et une polymérisation telle que décrite ci-dessous. Néanmoins, l'utilisation de la méthode de contrôle permet de générer du polyacide acrylique de faible masse molaire à des taux de conversion importants. En conséquence, le nombre de chaînes de polymère susceptibles de croître est beaucoup plus grand avec la méthode contrôlée qu'en polymérisation conventionnelle. Donc, dans la méthode contrôlée, le nombre de branches n'est pas assez grand pour lier toutes les chaînes ensemble : le seuil de percolation n'est pas atteint, et il n'y a pas formation de gel. L'absence de gel est une condition nécessaire pour pouvoir dire si la réaction est contrôlée.
b) Une réaction dont l'indice de polymolécularité (ou polydispersité PD) « vrai » (IPv) est inférieur à 1,5 ou dont l'indice de polymolécularité (= PD) expérimental IPₑₓₚ est inférieur à 2, lorsque le degré d'avancement de la réaction est proche de 1 (supérieur à 90 %). Dans une polymérisation radicalaire, il est connu de l'homme de l'art que la distribution cumulée des masses molaires est la fonction qui relie la fraction molaire des chaînes d'une masse molaire donnée à la masse molaire de ces chaînes. Cette distribution est caractérisée par une moyenne arithmétique, appelée masse molaire moyenne en nombre (Mₙ) et une masse molaire moyenne en masse (M_{w}) qui correspond au second moment de la distribution. Le rapport des masses molaires M_{w} à Mₙ est défini comme l'indice de polymolécularité « vrai », IPᵥ et donne un aperçu de l'étalement de la distribution. Si toutes les chaînes de la distribution ont exactement la même masse molaire, alors IPᵥ atteindra sa valeur inférieure : 1. Une polymérisation radicalaire non contrôlée possédé un IPᵥ nécessairement supérieur à 1,5, donc tout IPᵥ inférieur à 1,5 est le signe irréfutable que la polymérisation est contrôlée. L'inverse n'est pas vrai. L'homme de l'art évalue les valeurs de Mₙ et IPᵥ au moyen d'une chromatographie d'exclusion stérique (CES). Les valeurs expérimentales qui en sont extraites (Mₙₑₓₚ et IPₑₓₚ) dépendent des conditions opératoires qui ont été utilisées pour effectuer l'analyse. En particulier, les valeurs Mₙₑₓₚ et IPₑₓₚ dépendent des paramètres suivants :
   - Choix de l'instrument, des colonnes séparatrices et détecteur(s) et température de travail.
   - Choix de l'éluant. Pour l'analyse de polymères d'acide acrylique, le choix de l'éluant est crucial, car le polymère est plus ou moins ionisé suivant le pH et les tampons contenus dans l'éluant.
   - Choix des standards de calibration de l'appareil, et méthode d'étalonnage.
   - Absence et/ou présence de purification et/ou d'un procédé chimique et/ou physique de modification du polymère. Par exemple, il est connu de l'homme de l'art (US 5,242,594 ; EP 0 717 051) qu'une précipitation du polymère suivi d'une dissolution dans l'éluant avant analyse par chromatographie d'exclusion stérique s'accompagne souvent d'un rétrécissement de IPexp. dans le cas d'un acide polyacrylique et de ses sels.
   - Choix de la ligne de base et des bornes d'intégration du pic de polymère.

En conclusion, les valeurs de IPₑₓₚ ne peuvent fournir qu'une indication de la valeur d'IPᵥ et ne peuvent en aucun cas fournir une valeur exacte. D'autre part, ces valeurs sont dépendantes des conditions expérimentales précises utilisées pour les déterminer. Par conséquent, il est reconnu par l'homme de l'art que pour des distributions 1,2,... i, ... , n, ayant des IPv obéissant à un classement IP _{V1}<IPᵥ₂<IPᵥᵢ<...IPᵥₙ,, alors l'analyse expérimentale donnera IPₑₓₚ₁<IPₑₓₚ₂<... IP_{exp¡}<...IPₑₓₚₙ et réciproquement à la condition que toutes ces valeurs soient mesurées dans des conditions expérimentales similaires. Pour qu'une réaction soit contrôlée, il est donc suffisant d'avoir IPᵥ<1,5. Comme il n'existe pas de moyen exact de déterminer IPᵥ, nous utiliserons comme définition qu'une réaction est contrôlée si IPₑₓₚ, déterminé dans les conditions expérimentales strictement décrites ci-dessous, est plus petit que 2.

Pour déterminer IP_{exp,} nous avons utilisé la méthode suivante, dite méthode IP:

1 ml de la solution alcaline de polymérisation est mise sur une coupelle, qui est ensuite évaporée à température ambiante sous un vide inférieur à 1 mm de mercure. Le soluté est repris par 1 ml de l'éluant de la CES, et l'ensemble est ensuite injecté dans l'appareil de CES. L'éluant de la CES est une solution de NaHCO₃: 0,05 mol/l, NaNO₃ : 0,1 mol/l, triéthylamine : 0,02 mol/l, NaN_{;} 0,03 % massique. La chaîne de CES contient une pompe isocratique (Waters 515) dont le débit est réglé à 0,5 ml/min, un four contenant une précolonne de type "Guard Column Ultrahydrogel Waters ^{™}" une colonne linéaire de type "Ultrahydrogel Waters ^{™}" de 30 cm de long et 7,8 mm de diamètre intérieur et un détecteur réfractométrique de type RI Waters^{™} 410. Le four est porté à la température de 60°C, et le réfractomètre est porté à la température de 50°C. Le logiciel de détection et de traitement du chromatogramme est le logiciel SECential, fourni par "L.M.O.P.S CNRS, Chemin du Canal, Vernaison, 69277". La CES est étalonnée par une série de 5 étalons de polyacrylate de sodium fourni par Polymer Standard Service sous les références PAA 18K, PAA 8K, PAA 5K, PAA 4K, PAA 3K.

De plus, il est souvent établi que par contrôle, on entend les critères supplémentaires suivants :
c) Une réaction où les masses molaires en nombre augmentent de manière strictement monotone lorsque l'avancement de la réaction augmente. Dans une polymérisation, le degré moyen de polymérisation, Xn, est défini simplement comme la moyenne arithmétique du nombre de monomères par chaîne de polymères. On peut alors obtenir la masse molaire moyenne en nombre, Mₙ, c'est-à-dire le degré moyen de polymérisation multiplié par la masse molaire du monomère.

De manière générale, on peut définir deux types de réaction macromoléculaires, à savoir la polycondensation - qui ne permet pas la synthèse du polyacide acrylique - et la polymérisation. Une polymérisation est constituée d'un certain nombre de procédés différents tels que l'amorçage, la propagation et la terminaison (typiquement par dismutation, recombinaison ou transfert). Dans le cas où la terminaison n'est pas le produit de recombinaison (ou autres procédés bimoléculaires pour l'espèce active), il a été montré (voir par exemple : Odian, G. Principles of Polymerization ; John Wiley & Sons, Inc.: New York, 1991 ; Gregg, R.A. ; Mayo, F.R. J. Am. Chem. Soc. 1948, 70,2373 ; Mayo, F.R. J. Am. Chem. Soc. 1943, 65,2324 ; Brown, W.B. ; Szwarc, M Trans. Faraday Soc. 1958,54,416. Shulz, G.V. Z. Physik. Chem. 1939, B43,25) que le degré moyen de polymérisation à un instant donné et l'indice de polymolécularité sont donnés par: ${X}_{n} = \frac{1}{1 - p}$ ${IP}_{v} = 1 + p$
où p est le rapport de la vitesse de propagation à la somme des vitesses de chaque étape du mécanisme en chaînes. Pour la polycondensation, les formules (1) et (2) sont encore valables, mais p est plus simplement le degré d'avancement de la réaction. La polymérisation et la polycondensation ne permettent pas d'obtenir le même contrôle du degré moyen de polymérisation Xₙ en fonction de l'avancement de la réaction. Pour une polymérisation, Xₙ est plus ou moins constant dès les faibles degrés d'avancement de la réaction, alors que pour une polycondensation, il n'y a augmentation dramatique de Xₙ qu'à partir des très hauts degrés d'avancement. La polymérisation de l'acide acrylique est reconnue par l'homme de l'art comme faisant partie de la classe des réactions de polymérisation radicalaire, et donc on s'attend à ce que le degré de polymérisation moyen ne varie pas avec le degré d'avancement (conversion). En pratique, dans la polymérisation de l'acide acrylique, il se forme souvent des gels insolubles (comme décrit ci-dessus) qui compliquent l'analyse des degrés moyens de polymérisation.

S'il n'y a pas d'étapes de terminaison ou de transfert, la polymérisation est alors vivante. Dans ce cas là, il a été montré que le degré moyen de polymérisation est le quotient du nombre de monomères consommés par le nombre d'armorceurs consommés (voir par exemple Flory, P.J. J. Am. Chem. Soc. 1940 62, 1561). Dans le cas où les constantes cinétiques de propagation (kₚ) et d'amorçage (kᵢ) sont égales, Flory a démontré les relations reliant Xₙ et le IPᵥ avec l'avancement de la réaction : ${IP}_{v} = 1 + \frac{v}{{\left(v+1\right)}^{2}}$ ${X}_{n} = \frac{{\left[MON\right]}_{-} \left[M\right]}{\left[INIT\right]}$
où v est le degré d'avancement, et [MON] et [INIT] sont respectivement les concentrations initiales du monomère et de l'amorceur, et [M] la concentration du monomère au temps t considéré. Le comportement de IPᵥ est remarquable, après une augmentation rapide de IPᵥ jusqu'à 1,2 à bas degré d'avancement, sa valeur diminue asymptotiquement vers 1, à haut degré d'avancement. Lorsque les constantes d'amorçage et de propagation sont différentes, Gold a montré que l'on peut écrire Xₙ et le IPᵥ en fonction du degré d'avancement de manière non triviale (voir Gold, L.J. Chem, Phys. 1958, 28,91). Dans ce cas, il faut remplacer INIT, qui est une concentration initiale, par la fraction de l'amorceur qui a réagi au temps t considéré. Le IPᵥ varie qualitativement de manière identique, cependant la décroissance asymptotique est plus lente, et la valeur finale est plus haute. La masse molaire croît avec le degré d'avancement, c'est-à-dire ici la conversion, mais la variation n'est plus linéaire. 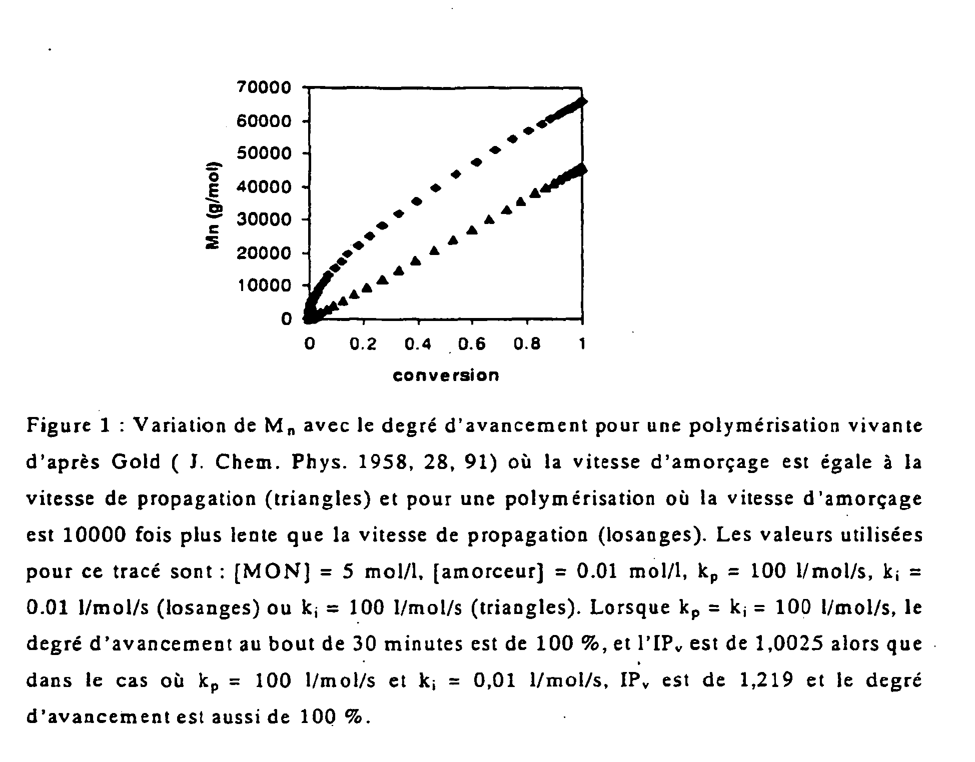 Le modèle théorique de la polymérisation vivante indique que lorsque la vitesse d'amorçage n'est pas aussi rapide que la vitesse de propagation, la masse molaire augmente de manière monotone mais non linéaire avec le degré d'avancement. Dans la polymérisation de l'acide acrylique, où la valeur de kₚ est très grande et non constante avec la conversion (V.A. Kabanov, 1.A. Topchiev, T.M. Karaputadze, J.Polymer Sci. : Symposium n° 42, 173-183, 1973 et Kuchtà F.D., Van Herk A.L.V., German A.N., Macromolecules 2000, 33, 3641), il arrive souvent que l'amorçage soit plus lent que la propagation. Donc, une condition nécessaire mais non suffisante pour que la polymérisation soit contrôlée est que la masse molaire du polymère évolue de manière croissante et monotone avec le degré d'avancement. Lorsque la polymérisation est très rapide, ce qui est le cas dans la polymérisation radicalaire de l'acide acrylique, l'échantillonnage de la réaction s'avère être trop difficile. Ce critère de contrôle ne peut être alors vérifié expérimentalement. On conçoit aisément que lorsque deux expériences sont conduites quantitativement avec des quantités de monomère différentes, tout autre paramètre étant identique par ailleurs, les masses molaires des polymères issus de ces expériences sont conceptuellement identiques à celles que l'on aurait obtenu dans une seule et même expérience à des conversions différentes (avec un ajout continu d'acide acrylique par exemple). On peut donc remplacer le critère ci-dessus par un critère équivalent : la masse molaire du polymère final (obtenu à conversion supérieure à 90 %) croît de manière strictement monotone lorsque le rapport des concentrations de l'agent de transfert à monomère diminue.

d) Une réaction où la quantité d'agent de transfert est limitée. Plus précisément, les limites de quantité d'agent de transfert sont fixées de telle façon que le rapport molaire d'agent de transfert à monomère soit compris entre 0,001 % et 20 % et le rapport massique d'agent de transfert à monomère soit compris entre 0,01 % et 50 %, plus particulièrement entre 0,01 % et 10 % et encore plus particulièrement entre 0,01 % et 5 %. Dans la polymérisation radicalaire conventionnelle de l'acide acrylique, un agent de transfert peut être introduit pour limiter les masses molaires du polymère. Par exemple, Cellard et coll. a déterminé (Makromol. Chem. 1935, 1982) une constante de transfert au n-dodecanethiol-1 de l'ordre de 2 à 45°C. Dans ce cas, pour obtenir des masses molaires Mₙ de l'ordre de 1600 g/mol, les quantités [acide acrylique] : [CTA] sont dans un rapport molaire de 8,4 : 1, en entendant par [CTA] la quantité d'agent de transfert en moles par litre. D'un point de vue plus général, afin d'obtenir des polymères de faible masse molaire Mₙ, il faut ajouter une quantité d'agent de transfert importante. Dans le cas contraire, l'IPᵥ sera plus grand que 2. En effet, il a été démontré que pour une polymérisation de conversion p, et de constante de transfert C_{if}, (voir par exemple E. Ranucci, F. Bignotti, End-Functionalized Oligomers by Chain Transfer Technique in Polymeric Materials Encyclopedia, J.D. Salamone, 1996, Version 1.1) alors, ${X}_{n} = \frac{\left[MON\right]}{\left[CTA\right]} \times \frac{p}{1 - {\left(1-p\right)}^{{C}_{u}}}$ ${IP}_{v} = \frac{2}{{C}_{u} ⁢ \left(2-{C}_{u}\right)} \times \frac{\left(1-{\left(1-p\right)}^{{C}_{u}}\right) ⁢ \left(1-{\left(1-p\right)}^{2 - {C}_{u}}\right)}{{p}^{2}} \to si . {C}_{u} \neq 2$
où [MON] et [CTA] sont les quantités initiales de monomère et d'agent de transfert en moles par litre. Puisque chaque chaîne de polymère consomme un agent transfert, la conversion en agent de transfert est donné directement par [MON]/[CTA](p/Xₙ).

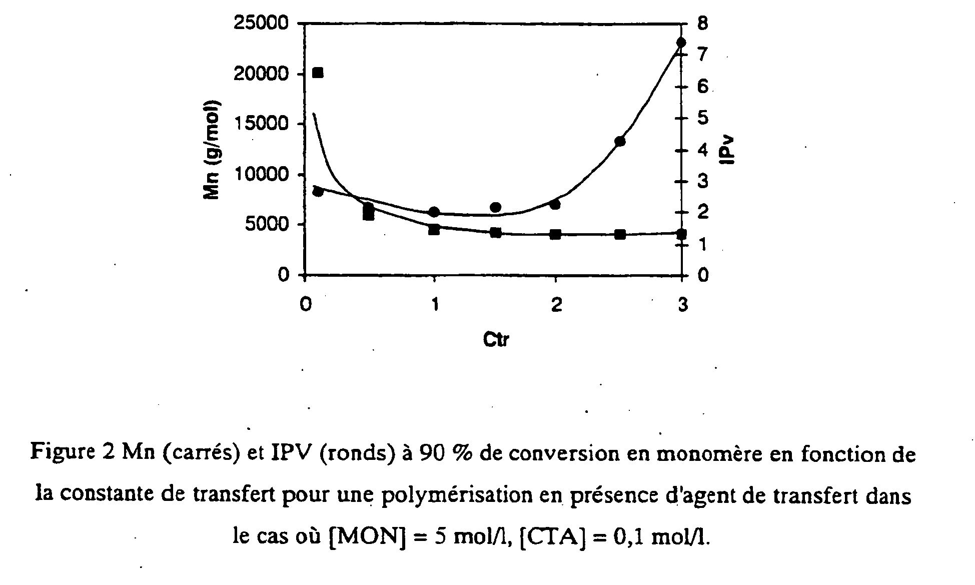

La figure 2 donne une représentation graphique des équations 5 et 6. De manière évidente, lorsque la constante de transfert est faible (< 1), la masse molaire du polymère est grande donc peu d'agent de transfert est consommé. Dans ce cas, une grande quantité d'agent de transfert est nécessaire pour que la masse molaire diminue : le quatrième critère de contrôle n'est pas vérifié. De plus, la conversion en agent de transfert est faible. Lorsque la constante de transfert est grande (> 1), la masse molaire est nettement plus petite, et tout l'agent de transfert est rapidement consommé. Donc, en fin de polymérisation se créent des chaînes de polymères non transférées, de très haute masse molaire. L'IPᵥ augmente alors fortement et le second critère de contrôle n'est pas vérifié.

En résumé, la Demanderesse entend scientifiquement par « contrôlée » une réaction où les deux conditions suivantes sont simultanément remplies :
a) le polymère est formé en l'absence de gel, même lorsque le degré d'avancement de la réaction est proche de 100 % (supérieur à 90 %),
b) l'indice de polymolécularité vrai (IPᵥ) (= PD vraie) est inférieur à 1,5 (ou dont l'indice de polymolécularité expérimental IPexp est inférieur à 2),
   et, où les deux conditions supplémentaires sont préférentiellement remplies
c) les masses molaires en nombre augmentent de manière strictement monotone lorsque l'avancement de la réaction augmente,
d) la quantité d'agent de transfert est comprise dans des limites qui seront par exemple dans le cas d'espèce de 0,001 % à 20 % (molaires) et 0,01 % à 50 % (massiques), plus particulièrement entre 0,01 % et 10 % et encore plus particulièrement entre 0,01 % et 5 %.

La polymérisation radicalaire de l'acide acrylique en milieu hydro-alcoolique, lorsqu'elle est effectuée dans les conditions conventionnelles de polymérisation radicalaire telles qu'elles sont connues par l'homme de l'art, est caractérisée par une vitesse de polymérisation extrêmement rapide **:** les polymérisations sont exothermiques. Le polymère qui est obtenu à haute conversion est réticulé et a l'aspect d'un gel gonflé en présence d'eau lorsque la masse molaire n'est pas maîtrisée. En présence d'agents de transfert, il est connu qu'il est possible de réduire la masse molaire du polymère résultant, comme indiqué plus haut (EP 0 405 818) mais le produit obtenu n'obéit pas à l'ensemble des conditions de contrôle tel que défini ci-dessus, dans le sens où
a) L'IPₑₓₚ est plus grand que 2, même lorsque le polymère est obtenu par la mise en oeuvre d'un agent de transfert (EP 0 002 771). L'IPₑₓₚ peut être alors réduit en fractionnant le polymère, par un système de séparation physique ou physico-chimique (EP 0 046 573 ; EP 0 717 051).
b) Le contrôle se fait en présence de quantités importantes d'agent de transfert : dans certains cas, comme celui précité ci-dessus, l'agent de transfert est aussi le solvant de polymérisation.

La Demanderesse s'est donc imposée un objectif ambitieux, qui correspond aux besoins non satisfaits de l'industrie à ce jour, c'est-à-dire d'atteindre SIMULTANEMENT les critères ci-dessous :
a) IPᵥ très faible pour des masses molaires Mₙ supérieures à 1000, c'est-à-dire un IPₑₓₚ< 2 sans séparation physique ou physico-chimique et déterminé selon la méthode dite IP.
b) Absence de gel à la polymérisation même aux taux de conversion très élevés à savoir supérieurs à 90 %.
c) Taux de conversion très élevé (> 90 %) dans un temps de réaction raisonnable pour l'industrie, c'est-à-dire au bout de 4 heures à 100°C, de préférence au bout de 2 heures à 90°C et sous pression atmosphérique.
d) En utilisant une quantité d'agent(s) de transfert limitée et acceptable dans l'industrie, c'est-à-dire dans des limites qui seront par exemple dans le cas d'espèce de 0,001 % à 20 % (molaires) et 0,01 % à 50 % (massiques), plus particulièrement entre 0,01 % et 10 % et encore plus particulièrement entre 0,01 % et 5 %.

De plus, de manière tout à fait préférée, on recherchera à atteindre avec le plus de précision possible le poids moléculaire visé.

De manière préférentielle, on fera alors en sorte qu'un cinquième critère soit également simultanément atteint à savoir que les masses molaires en nombre augmentent de manière strictement monotone lorsque l'avancement de la réaction augmente.

Par « strictement » monotone, la Demanderesse entend le fait que les masses molaires en nombre augmentent en permanence, sans même un palier horizontal ; ni naturellement une régression ce qui serait contraire au caractère « monotone ».

On obtiendra ainsi, de plus, un contrôle total de la réaction.

### Art antérieur

On connaît une première voie pour réduire l'IPᵥ des polymères d'acide acrylique et de ses sels, qui est d'opérer par élimination des fractions de bas poids moléculaires, notamment par extraction (EP 0 046 573).

La voie choisie par la Demanderesse est d'opérer par une réduction directe de l'IPᵥ durant la polymérisation, avec donc un IPᵥ très réduit en sortie du réacteur de polymérisation.

II est rappelé ici que l'IPᵥ doit être défini avec précision dans un système de référence complet et précis, ce qui sera fait ci-dessous, faute de quoi une comparaison avec, par exemple, l'art antérieur, n'aurait aucun sens.
Dans l'art antérieur, on peut discerner deux périodes principales.

Avant 1996, il existe des brevets concernant la polymérisation de l'acide acrylique, mais dont le produit final ne peut en aucun cas répondre aux critères visés par l'invention, qui ont été développés ci-dessus.

Par exemple, ou bien l'IPᵥ était bien trop élevé, ou bien le taux de conversion était bien trop faible.

On pouvait par exemple obtenir un IPᵥ très satisfaisant mais au prix d'un taux de conversion, dans les conditions acceptables dans l'industrie, de seulement 15 %, ou bien un excellent taux de conversion (95 %) mais au prix d'un IPᵥ très médiocre (voir tableau 1 suivant ).

**TABLEAU 1**

| **REFERENCE** | **SOCIETE** | **Mw (g/mole)** | **IPₑₓₚ** |
|---|---|---|---|
| GX86 | COATEX | 3320 | 2,26 |
| AB 100 | COATEX | 5570 | 2,40 |
| P50 | COATEX | 10170 | 3,10 |
| COLLOID 211 | RHODIA INC. | 4380 | 2,29 |
| NOPCOSPERSE 44 | HENKEL | 7565 | 2,60 |
| DISPEX N40 | CIBA | 4655 | 2,51 |
| OROTAN 963 | ROHM & HAAS | 3550 | 2,35 |
| BELSPERSE 164 | CIBA | 3935 | 2,34 |
| ACUSOL 445 | ROHM & HAAS | 6030 | 2,26 |
| ACUMER 9300 | ROHM & HAAS | 5780 | 2,38 |
| POLYSTABIL MO | STOCKHAUSEN | 6520 | 2,39 |

Après 1996, est apparue la technologie connue sous le vocable de « RAFT », dont l'art antérieur correspondant sera relaté ci-dessous.

La polymérisation radicalaire de type RAFT (transfert réversible par addition fragmentation) est un procédé de polymérisation découvert très récemment. Dans ce procédé, un agent de transfert spécifique (composé 1 CTA) est introduit dans le milieu réactionnel, en plus du monomère (M) et de l'amorceur de polymérisation (I).

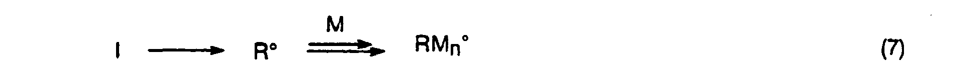

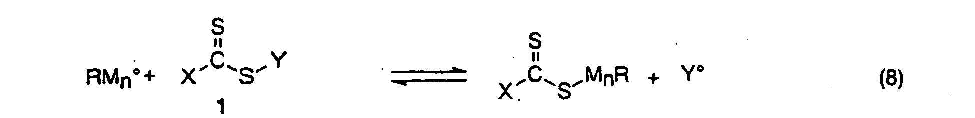

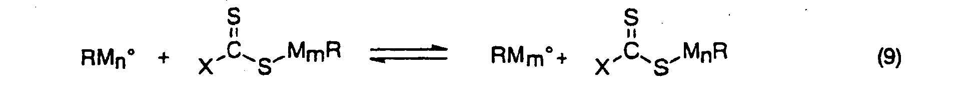

RMₙ° + RMₘ° → chaînes mortes (10)

A très bas taux de conversion, l'amorceur génère des radicaux libres qui se propagent (équation 7). Eventuellement, ces radicaux réagissent avec l'agent de transfert 1 pour donner un nouveau radical Y° et une chaîne transférée, terminée par le groupe X-C=S-S-. Il faut remarquer que ces chaînes transférées ne diffèrent de l'agent de transfert initial que par le groupement Y. Elles peuvent donc être considérées comme des macro agents de transfert. Après un certain temps, la proportion de chaînes transférées est assez grande pour que le transfert ait lieu entre les radicaux libres et les chaînes dormantes (équation 9) et non entre les radicaux libres et le CTA. La réaction de transfert (9) étant rapide (c'est l'une des conditions nécessaires pour que la polymérisation soit contrôlée), toutes les chaînes (radicalaires et transférées) s'échangent rapidement entre elles, et croissent donc à la même vitesse. Donc, en fin de polymérisation, toutes les chaînes ont la même longueur (à un élargissement statistique près) et l'indice de polymolécularité final est donc faible. Théoriquement, comme le transfert ne change pas la concentration de radicaux libres, [R°], la vitesse de propagation n'est pas affectée par la présence du composé. De plus, le nombre de chaînes mortes (produites par couplage radicalaire) correspond exactement à la quantité d'amorceur efficace décomposé. Donc, la polymérisation présente des caractéristiques de polymérisation contrôlée si [I]<<[CTA].

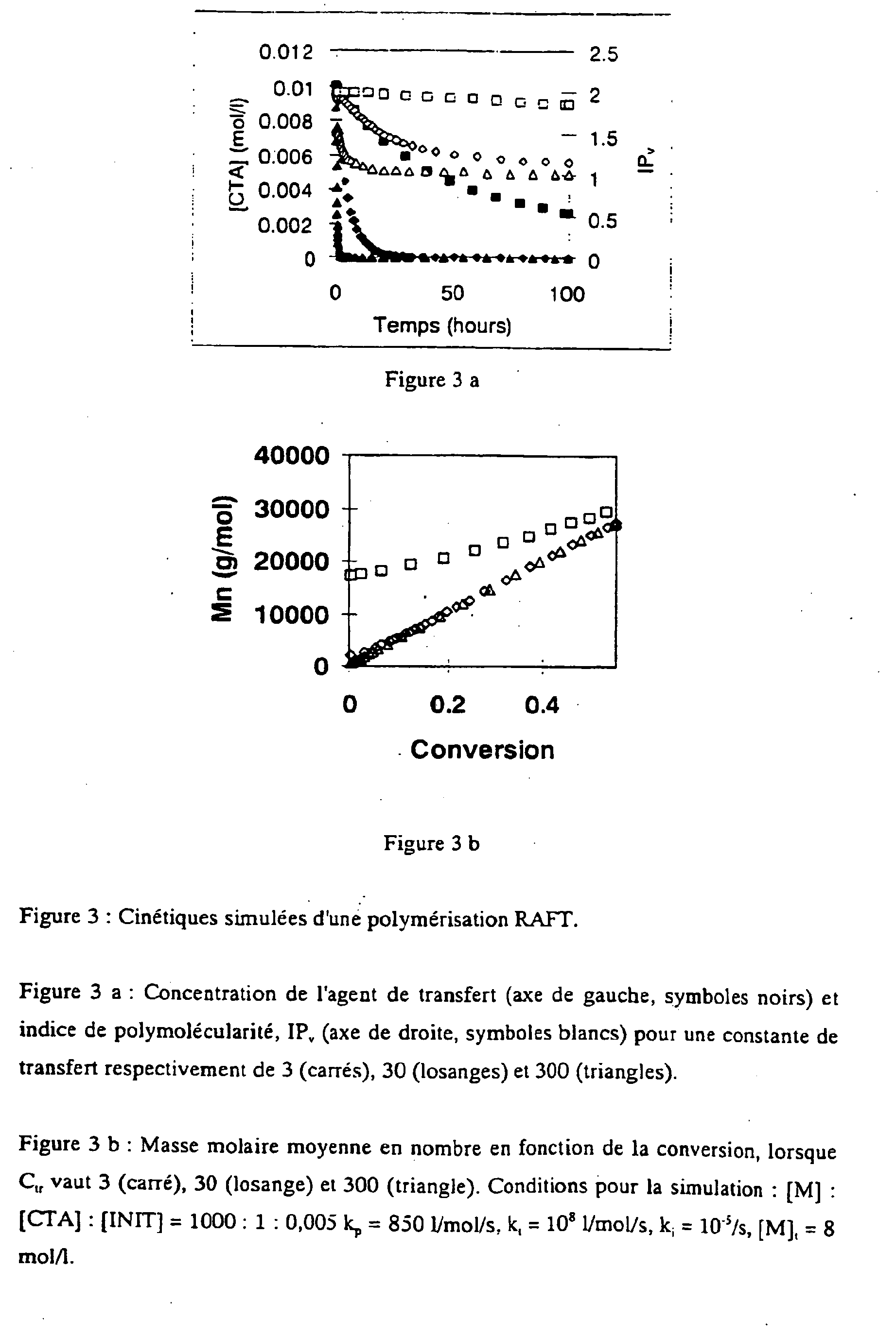

La figure 3 qui est issue de nos travaux antérieurs (I Uzulina, S. Kanagasabapathy. J Claverie, Macromol. Symp, 33-38, 2000) illustre le comportement de la polymérisation lorsque la constante de transfert (définie comme le rapport des constantes cinétiques de transfert à propagation) augmente. Plus celle-ci est grande, plus IPᵥ s'approche de 1, plus la masse molaire croît linéairement avec la conversion. Une condition nécessaire de contrôle pour la polymérisation de l'acide acrylique est donc que la constante de transfert soit grande. Il faut noter qu'il n'existe pas de moyen de bien choisir un agent de transfert pour que cette condition soit vérifiée. Des brevets récents (WO 98/01478, WO 99/05099, WO 99/31144) préconisent l'emploi de certains agents de transfert pour remplir cette fonction. Dans aucun de ces brevets, la polymérisation de l'acide acrylique en milieu alcoolique, hydroalcoolique et aqueux n'est cependant décrite.

Il a été montré que certains des composés préconisés par ces brevets n'étaient pas adéquats pour la polymérisation de l'acide acrylique.

Par exemple, le brevet WO 98/01478 décrit l'utilisation d'agents du type R-C(=S)-SR'. Dans ce brevet, la synthèse du polyacide acrylique est décrite. Exemple 22 : Réaction dans le DMF en utilisant PhC(=S)S-CHMePh. A 60°C, au bout de 4 heures, la conversion est de 17,5 %.

Il n'y a pas d'analyse directe des masses molaires, et le polymère est méthylé par une méthode non décrite pour donner du polyméthyl acrylate, qui, lui, est analysé par CES. Dans l'exemple 31, un copolymère à blocs ABu-AA (où ABu est l'acrylate de butyle, AA est l'acide acrylique) est préparé dans le diméthylformamide (DMF). Le rendement en AA est de 8,3 % .

Les résultats de ce brevet sont repris dans l'article "Living Free Radical Polymerization by Réversible Addition-Fragmentation Chain Transfer : the RAFT Process", Macromolecules, 1998, 31, 5559 by J Chiefari, K.B. Chong, F.Ercole, J. Krstina, J. Jeffery, T.P.T. Le, R.T.A. Mayadunne, G.F.Meijs, C.L. Moad, G.Moad E.Rizzardo, S.H. Thang.

La polymérisation de l'acide acrylique est décrite dans le DMF (qui ne fait pas partie des solvants industriellement acceptables ou privilégiés, pour des raisons bien connues d'emploi, d'environnement, et de problèmes liés à l'élimination du DMF après la polymérisation) à 60°C, donnant 18 % de conversion en 4 heures.

Dans le livre intitulé « Controlled/ living Radical Polymerization » édité par K. Matyjaszewski ACS Symposium Séries 768, Année 2000, un chapitre écrit par E.Rizzardo, J. Chiefari, Roshan T.A.Mayadunne, G.Moad et San H.Thang enseigne à la Demanderesse qu'il est possible de polymériser l'acide acrylique en présence d'agent de transfert du type Phényle -C(=S)-S-C-(CH₃)₂-C≡N dans le méthanol pour des taux de conversion de l'ordre de 50 % au bout de 16 heures de réaction. A nouveau, des polymères sont analysés après méthylation.

Or, il se trouve que, particulièrement à l'échelle industrielle, il est nécessaire de polymériser à des conversions élevées (plus de 90 %, voire plus de 95 %), tout en gardant le contrôle, tel que défini ci-dessus. D'autre part, il est nécessaire à l'échelle industrielle de pouvoir effectuer la polymérisation dans des conditions modérées de température (moins de 100°C) sans que la polymérisation ne dure trop longtemps.

Aucun des brevets précités, ni des brevets (WO 97/09400 ; WO 99/35177) qui traitent de la synthèse de copolymères à blocs avec des composés de la même famille ne permettent de sélectionner une classe de composés de type agents de transfert qui remplissent l'ensemble des conditions qu'il est nécessaire de remplir pour polymériser avec contrôle l'acide acrylique en milieu aqueux ou hydroalcoolique.

En fait, dans un même brevet, il est possible de trouver des composés qui soient clairement néfastes pour le contrôle et d'autres qui peuvent convenir. Notre invention comprend donc la sélection d'une classe adéquate de composés qui permettent la polymérisation de l'acide acrylique. Par exemple, au contraire, nous avons trouvé que les composés de type PhC(=S)SR sont des inhibiteurs très puissants de la polymérisation de l'acide acrylique (exemples 26, 27 et 28), alors que leur utilisation est préconisée dans les brevets WO 98/01478, WO 99/05099, et WO 99/31144. De même, nous avons trouvé que certains dithiocarbamates (exemples 30 et 31) ne permettent pas d'obtenir un contrôle satisfaisant de la polymérisation alors que ces mêmes dithiocarbamates sont préconisés dans les brevets WO 99/31144 et WO 99/35177. Nous notons finalement que les brevets WO 99/35177 et FR 2764892 exemplifient les synthèses de copolymères à blocs à partir de composés xanthates, dithiocarbamates ou dithioesters. Dans aucun de ces brevets, la polymérisation de l'acide acrylique est exemplifiée en tant que premier ou second bloc, c'est-à-dire après réamorçage par une espèce de type macromoléculaire. Comme les brevets WO 99/35177 et FR 2764892 divulguent des copolymères à blocs sans unité acide acrylique, ils ne peuvent aider l'homme du métier à sélectionner un agent de transfert adéquat pour l'homopolymérisation contrôlée de l'acide acrylique ou pour la copolymérisation statistique avec un comonomère hydrosoluble, objet de la présente invention.

Le brevet WO 99/31144 ne décrit pas la polymérisation de l'acide acrylique, alors que celle ci était décrite dans le document précédent.

Le brevet FR 2764892 décrit la synthèse de nouveaux copolymères à blocs obtenus en mettant en présence un générateur de radicaux (amorceur classique), des monomères vinyliques (parmi lesquels sont cités l'acide acrylique et l'acide méthacrylique) et un précurseur polymère, de formule générale A-C(S)B-P obtenu par polymérisation radicalaire de monomères courants, mis en présence de catalyseurs RAFT. Parmi ces catalyseurs, les xanthates sont cités, recommandés et exemplifiés.

Les monomères utilisés en précurseur sont le styrène, l'acrylate de méthyle, l'acétate de vinyle et l'acrylate d'éthyl-hexyle. Le deuxième bloc est réalisé avec du styrène ou de l'acrylate de méthyle.

Il n'y a aucune référence à un quelconque rendement et les polymères obtenus sont précipités avant les analyses CES.

La présente invention concerne les homopolymères de l'acide acrylique et les copolymères dudit acide avec l'un au moins des monomères hydrosolubles choisis parmi l'acide méthacrylique, l'acide itaconique, maléique, fumarique, l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique ainsi que tous leurs sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, le n-méthylolacrylamide, le n-acryloylmorpholine, le méthacrylate d'éthylène glycol, l'acrylate d'éthylène glycol, le méthacrylate de propylène glycol, l'acrylate de propylène glycol, l'acide propène phosphonique, le phosphate d'acrylate ou méthacrylate d'éthylène ou propylène glycol ou bien encore parmi la vinylpyrrolidone, le méthacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyldiallylchlorure d'ammonium, ainsi que leurs mélanges.

Il existe donc, malgré le progrès enregistré par la technologie « RAFT », un besoin important et reconnu pour un procédé, et des agents de transfert adaptés, d'homopolymérisation de l'acide acrylique ou de copolymérisation de l'acide acrylique avec au moins un monomère hydrosoluble tel que précité, remplissant les critères ci-dessus.

### Résumé de l'invention

L'invention concerne donc dans son aspect le plus général un procédé pour l'homopolymérisation de l'acide acrylique et de ses sels ou de copolymérisation de l'acide acrylique avec au moins un monomère hydrosoluble tel que précité, en solution, pour l'obtention de polymères non réticulés, caractérisé en ce qu'il utilise comme agent(s) de transfert des produits choisis parmi ceux définis par la formule générale :

R ------- X -------- C (S) ------ S -------- R'

dans laquelle :
X = O ou S,
R représente un groupe permettant de stabiliser la fonction R---X par une liaison covalente de type C---X,
R' représente un groupe tel que la liaison R'---S soit une liaison de type C---S.

Le procédé selon l'invention se caractérise de manière préférentielle en ce que le système solvant de la polymérisation est un système aqueux ou hydro-alcoolique, les alcools considérés possédant de 1 à 4 atomes de carbone inclus, et pouvant être primaires, secondaires ou tertiaires, de préférence primaires ou secondaires.

Il est à noter que par hydro-alcoolique, la Demanderesse entend tout milieu constitué d'eau et des alcools précités, la teneur en eau pouvant être aussi faible que 5 000 ppm par rapport au solvant.

De manière tout à fait préférée,
R est un groupe choisi parmi les groupes aryles ou alkyles ou phényles, ces groupes pouvant être substitués par des radicaux du type hétérocyclique, alkylthio, alkoxycarbonyle, aryloxycarbonyle, carboxy, acyloxy, carbamoyle, cyano, dialkyl-ou diaryl-phosphonato, dialkyl- ou diarylphosphinato ou carboxyles ou carbonyles ou éthers ou alcools ou leurs mélanges et
R' est un groupe comprenant au moins un atome de carbone secondaire ou tertiaire lié à l'atome de soufre,

De manière encore plus préférée,
si X = O,
R est un groupe aryle ou phényle ou phényle portant un ou plusieurs groupes esters, éthers, acides, alcools, amines, sulfates, sulfonates, phosphates, phosphonates ou cétones,
R' est un groupe attaché à l'atome de soufre par un carbone secondaire ou tertiaire dont l'un au moins des substituants est un groupe phényle ou carbonyle,
si X = S,
R = R' avec R' un groupe identique à celui déjà cité.

Enfin de manière tout à fait préférée, les agents de transfert sont choisis parmi

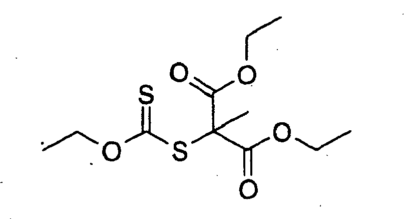

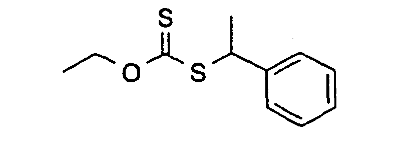

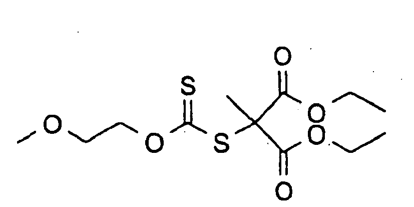

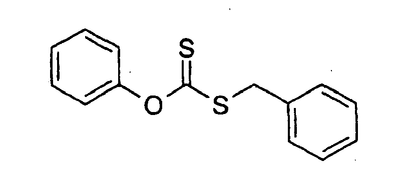

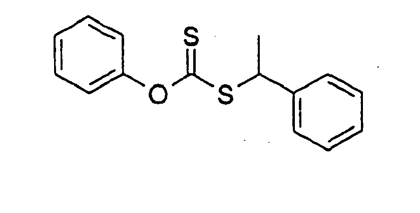

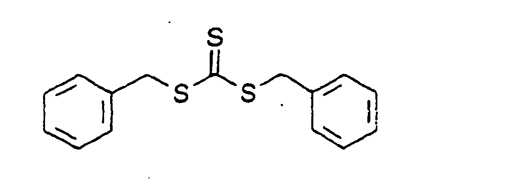

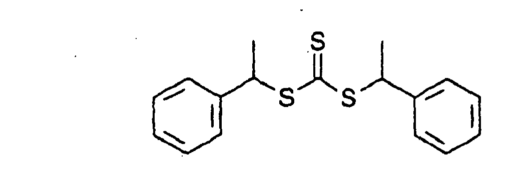

Le procédé est de plus caractérisé en ce que les paramètres de réaction et le choix des agents de transfert sont adaptés de telle sorte qu'il permet d'atteindre SIMULTANEMENT les critères ci-dessous :
a) IPᵥ très faible pour des masses molaires Mₙ supérieures à 1000, c'est-à-dire un IPₑₓₚ < 2 sans séparation physique ou physico-chimique et déterminé selon la méthode dite IP,
b) Absence de gel à la polymérisation même aux taux de conversion très élevés à savoir supérieurs à 90 %.
c) Taux de conversion très élevé (> 90 %) dans un temps de réaction raisonnable pour l'industrie, c'est-à-dire au bout de 4 heures à 100°C, de préférence au bout de 2 heures à 90°C et sous pression atmosphérique.
d) En utilisant une quantité d'agent(s) de transfert limitée et acceptable dans l'industrie, c'est-à-dire dans des limites qui seront par exemple dans le cas d'espèce de 0,001 % à 20 % (molaires) et 0,01 % à 50 % (massiques), plus particulièrement entre 0,01 % et 10 % et encore plus particulièrement entre 0,01 % et 5 %.

De manière encore plus préférentielle, on fera alors en sorte qu'un cinquième critère soit également simultanément atteint à savoir que les masses molaires en nombre augmentent de manière strictement monotone lorsque l'avancement de la réaction augmente.

Par « strictement » monotone, la Demanderesse entend le fait que les masses molaires en nombre augmentent en permanence, sans même un palier horizontal ; ni naturellement une régression ce qui serait contraire au caractère « monotone ».

L'invention concerne également les agents de transfert utilisés dans le procédé ci-dessus, ainsi que les polymères obtenus par le procédé ci-dessus, ainsi que les applications de ces polymères dans l'industrie, et les produits industriels, caractérisés en ce que ils ont été obtenus en employant lesdits polymères.

De manière plus particulière l'invention concerne l'application de ces polymères dans les domaines de l'industrie tels que notamment le domaine papetier et en particulier dans le couchage du papier et la charge de masse du papier, dans le domaine pétrolier, ou encore les domaines de la peinture, du traitement des eaux, de la détergence, de la céramique, des ciments ou des liants hydrauliques, des travaux publics, des encres et des vernis, de l'encollage des textiles ou encore du finissage du cuir, et plus particulièrement concerne l'application de ces polymères comme dispersant et/ou agent d'aide au broyage de matières minérales telles que le carbonate de calcium naturel, le carbonate de calcium précipité, le kaolin, le dioxyde de titane ou les argiles.

Ainsi, l'invention concerne les suspensions aqueuses de charges minérales contenant lesdits polymères et plus particulièrement contenant de 0,05 % à 5 % en poids sec dudit polymère par rapport au poids sec total des charges minérales.

Ces suspensions aqueuses de charges minérales se caractérisent également en ce que la charge minérale est choisie parmi le carbonate de calcium naturel tel que notamment la calcite, la craie ou encore le marbre, le carbonate de calcium synthétique encore appelé carbonate de calcium précipité, les dolomies, l'hydroxyde de magnésium, le kaolin, le talc, le gypse, l'oxyde de titane, ou encore l'hydroxyde d'aluminium ou toute autre charge minérale habituellement mise en oeuvre dans les domaines tels que notamment le domaine papetier en particulier dans le couchage du papier et la charge de masse du papier, pétrolier, de la peinture, du traitement des eaux, de la détergence, de la céramique, des ciments ou des liants hydrauliques, des travaux publics, des encres et des vernis, de l'encollage des textiles ou encore du finissage du cuir.

Les papiers fabriqués et/ou couchés selon l'invention se caractérisent en ce qu'ils contiennent les dites suspensions aqueuses de charges minérales selon l'invention.

Les formulations de peinture selon l'invention se caractérisent en ce qu'elles contiennent lesdites suspensions aqueuses de charges minérales selon l'invention. Les boues de forage selon l'invention se caractérisent en ce qu'elles contiennent lesdites suspensions aqueuses de charges minérales selon l'invention.

En pratique l'opération de délitage encore appelée opération de dispersion de la substance minérale à disperser peut s'effectuer de deux manières différentes.

Une des manières consiste à réaliser sous agitation la préparation d'une suspension de charges minérales en introduisant tout ou partie de l'agent dispersant selon l'invention dans la phase aqueuse, puis le matériau minéral, de manière à obtenir la suspension aqueuse de charges minérales mise en oeuvre dans les domaines d'applications précités.

Une autre des manières consiste à préparer la suspension de charges minérales en introduisant dans le gâteau de charge minérale la totalité de la quantité d'agent dispersant à tester de manière à obtenir la suspension aqueuse de charges minérales mise en oeuvre dans les domaines d'applications précités. Cette opération de délitage peut être consécutive à l'opération de broyage décrite ci-après ou bien peut être mise en oeuvre de manière totalement indépendante.

Ainsi, en pratique, l'opération de broyage de la substance minérale à affiner consiste à broyer la substance minérale avec un corps broyant en particules très fines dans un milieu aqueux contenant l'agent d'aide au broyage.

A la suspension aqueuse de la substance minérale à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR 2303681 qui décrit des éléments broyants formés 30 % à 70 % en poids d'oxyde de zirconium, 0,1 % à 5 % d'oxyde d'aluminium et de 5 à 20 % d'oxyde de silicium.

Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments. Le temps nécessaire pour aboutir à la finesse souhaitée de la substance minérale après broyage varie selon la nature et la quantité des substances minérales à broyer, et selon le mode d'agitation utilisé et la température du milieu pendant l'opération de broyage.

Les suspensions aqueuses ainsi obtenues peuvent être utilisées dans le domaine du papier en charge de masse ou en couchage.

Pendant la fabrication de la feuille de papier, c'est-à-dire pendant leur utilisation comme charge de masse, ces suspensions peuvent être mises en oeuvre avec les cassés de couchage.

Elles peuvent être également mises en oeuvre dans le domaine des peintures ou des boues de forage.

### Description détaillée de l'invention

L'invention concerne donc notamment un procédé tel que défini ci dessus, dont on donnera ci-dessous des modes préférés.

Par « agents de transfert » on désignera dans toute la présente demande, y compris les revendications, des agents de transfert de type de ceux employés dans la technologie RAFT, c'est-à-dire capables d'arrêter la croissance des chaînes polymères mais de manière NON irréversible.

Le ou les agents de transfert utilisés dans le procédé selon l'invention sont des produits choisis parmi ceux définis par la formule générale :

R ------- X -------- C (S) ------ S -------- R'

dans laquelle :
X = O ou S,
R représente un groupe permettant de stabiliser la fonction R---X par une liaison covalente de type C---X,
R' représente un groupe tel que la liaison R'---S soit une liaison de type C---S.

De manière tout à fait préférée,
R est un groupe choisi parmi les groupes aryles ou alkyles ou phényles, ces groupes pouvant être substitués par des radicaux du type hétérocyclique, alkylthio, alkoxycarbonyle, aryloxycarbonyle, carboxy, acyloxy, carbamoyle, cyano, dialkyl-ou diaryl-phosphonato, dialkyl- ou diarylphosphinato ou carboxyles ou carbonyles ou éthers ou alcools ou leurs mélanges et
R' est un groupe comprenant au moins un atome de carbone secondaire ou tertiaire lié à l'atome de soufre,

De manière encore plus préférée,
si X = O,
R est un groupe aryle ou phényle ou phényle portant un ou plusieurs groupes esters, éthers, acides, alcools, amines, sulfates, sulfonates, phosphates, phosphonates ou cétones,
R' est un groupe attaché à l'atome de soufre par un carbone secondaire ou tertiaire dont l'un au moins des substituants est un groupe phényle ou carbonyle,
si X = S,
R = R' avec R' un groupe identique à celui déjà cité.

Enfin de manière tout à fait préférée, les agents de transfert sont choisis parmi

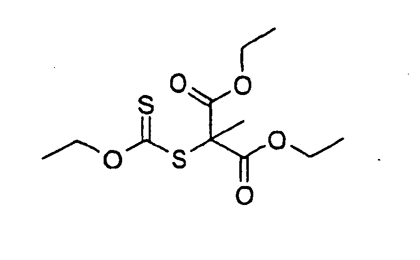

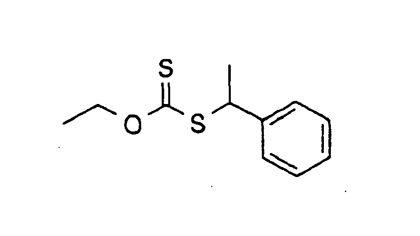

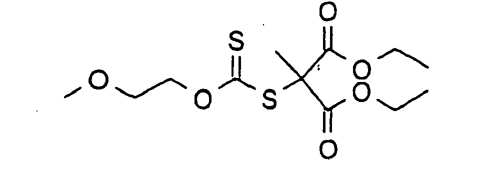

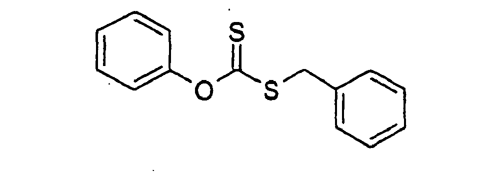

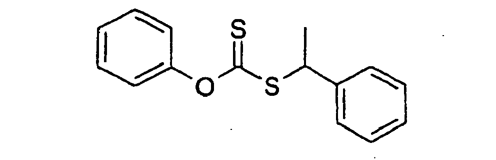

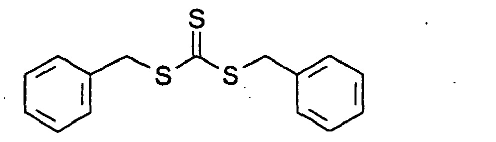

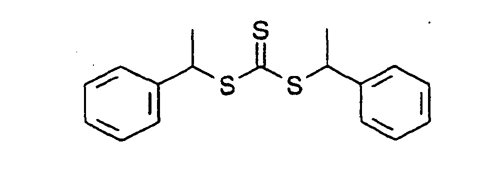

Selon un mode de réalisation tout à fait préféré, les agents de transferts sont choisis de telle manière qu'ils conduisent à une croissance des masses moléculaire en nombre, lorsque la réaction progresse, qui soit « strictement monotone ».

Selon encore un mode de réalisation préféré, les agents de transfert sont dans ce cas choisis parmi les suivants :

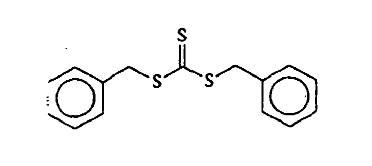

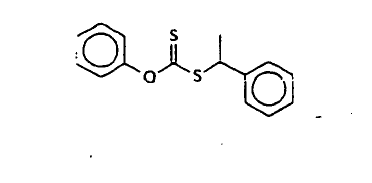

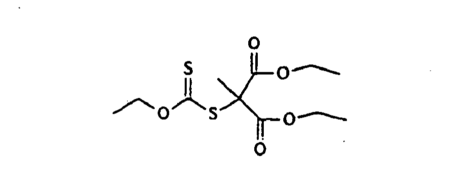

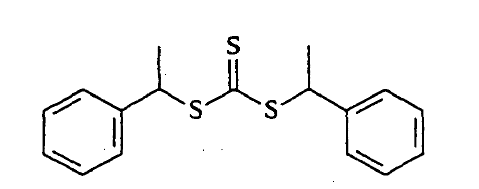

Cette disposition permet d'atteindre avec précision le poids moléculaire visé à partir des réactifs de départ, c'est-à-dire la propriété très appréciée dans l'industrie de pouvoir obtenir le poids moléculaire recherché. Si par exemple, lorsque le taux de conversion est de 90 %, la masse molaire en nombre est de 3 500 g / mole, on saura que, pour obtenir une masse molaire en nombre de seulement 1 800, il conviendra de stopper la polymérisation à 45 %.

L'invention vise des masses molaires Mₙ de l'ordre de 1000 à 1 million (1M) de Dalton, de préférence de 2 000 à 1 000 000, de préférence de 2 000 à 500 000, de préférence de 2 000 à 300 000, de préférence de 2 000 à 50 000, de préférence de 2 000 à 30 000, et de très grande préférence de 2 000 à 15 000 Dalton.

Selon encore un mode de réalisation préféré, les limites de quantité d'agent de transfert sont fixées de telle façon que le rapport molaire d'agent de transfert à monomère soit compris entre 0,001 % et 20 % et le rapport massique d'agent de transfert à monomère soit compris entre 0,01% et 50 %.

De préférence, le rapport molaire d'agent de transfert à monomère est compris entre 0,01 % et 10 % et le rapport massique d'agent de transfert à monomère est compris entre 0,01 et 10 %.

De préférence, le rapport molaire d'agent de transfert à monomère est compris entre 0,1 % et 5 % et le rapport massique d'agent de transfert à monomère est compris entre 0,01 et 5 %.

De manière tout à fait préférée, le rapport molaire d'agent de transfert à monomère est de 2% et le rapport massique d'agent de transfert à monomère est compris entre 0.01 % et 5%, préférentiellement entre 0,5% et 5%.

L'invention concerne donc les agents de transfert utilisés dans le procédé ci-dessus, ainsi que les polymères obtenus par le procédé ci-dessus, ainsi que les applications de ces polymères dans l'industrie, et les produits industriels, caractérisés en ce que ils ont été obtenus en employant lesdits polymères.

De manière plus particulière l'invention concerne l'application de ces polymères dans les domaines de l'industrie tels que notamment le domaine papetier et en particulier dans le couchage du papier et la charge de masse du papier, dans le domaine pétrolier, ou encore les domaines de la peinture, du traitement des eaux, de la détergence, de la céramique, des ciments ou des liants hydrauliques, des travaux publics, des encres et des vernis, de l'encollage des textiles ou encore du finissage du cuir, et plus particulièrement concerne l'application de ces polymères comme dispersant et/ou agent d'aide au broyage de matières minérales telles que le carbonate de calcium naturel, le carbonate de calcium précipité, le kaolin, le dioxyde de titane ou les argiles.

Les suspensions aqueuses de charges minérales selon l'invention se caractérisent en ce qu'elles contiennent lesdits polymères et plus particulièrement en ce qu'elles contiennent de 0,05 % à 5 % en poids sec dudit polymère par rapport au poids sec total des charges minérales.

Ces suspensions aqueuses de charges minérales se caractérisent également en ce que la charge minérale est choisie parmi le carbonate de calcium naturel tel que notamment la calcite, la craie ou encore le marbre, le carbonate de calcium synthétique encore appelé carbonate de calcium précipité, les dolomies, l'hydroxyde de magnésium, le kaolin, le talc, le gypse, l'oxyde de titane, ou encore l'hydroxyde d'aluminium ou toute autre charge minérale habituellement mise en oeuvre dans les domaines tels que notamment le domaine papetier en particulier dans le couchage du papier et la charge de masse du papier, pétrolier, de la peinture, du traitement des eaux, de la détergence, de la céramique, des ciments ou des liants hydrauliques, des travaux publics, des encres et des vernis, de l'encollage des textiles ou encore du finissage du cuir.

Les papiers fabriqués et/ou couchés selon l'invention se caractérisent en ce qu'ils contiennent les dites suspensions aqueuses de charges minérales selon l'invention.

Les formulations de peinture selon l'invention se caractérisent en ce qu'elles contiennent lesdites suspensions aqueuses de charges minérales selon l'invention.

Les boues de forage selon l'invention se caractérisent en ce qu'elles contiennent lesdites suspensions aqueuses de charges minérales selon l'invention.

D'autres caractéristiques et avantages de l'invention seront mieux compris à la lecture des exemples non limitatifs qui vont suivre.

Le taux de conversion de l'acide acrylique en poly(acide acrylique) est mesuré par deux méthodes distinctes et concordantes. Dans la première méthode, dite gravimétrique, on calcule la masse de matière sèche par masse de solution. Pour cela, on ajoute à une coupelle tarée, une quantité de solution. L'ensemble est évaporé sous vide de 1 mm de Hg (Mercure) à température ambiante puis dans un four à 140°C sous vide partiel à 17,4 mbars, pendant 5 heures. Le taux de matière sèche (MS) est obtenu par le rapport de la masse de solide restant dans la coupelle après traitement thermique par la masse de l'ensemble initialement introduite. La conversion en acide acrylique est donnée par le rapport des valeurs suivantes : $Conversion = \frac{{MS}_{expérimentale} - MS \left(t=0\right)}{MS \left(t=infini\right) - MS \left(t=0\right)}$
Les valeurs MS(t=0) et MS(t=infini) sont respectivement obtenues par le calcul des taux de matière sèche lorsque l'acide acrylique n'a pas encore polymérisé (MS(t=0)) et lorsque l'acide acrylique a complètement polymérisé (MS(t=infini)).

Dans la seconde méthode, la quantité d'acide acrylique résiduelle est obtenue par chromatographie liquide à haute pression (CHLP). Dans cette méthode, les composants constitutifs du mélange sont séparés sur une phase stationnaire, et détectés par un détecteur UV. Après étalonnage du détecteur, on peut à partir de l'aire du pic correspondant au composé acrylique obtenir la quantité d'acide acrylique résiduel. Cette méthode fait partie de l'état de l'art, et est décrite dans de nombreux ouvrages de référence, comme, par exemple, dans le manuel «Chimie Organique Expérimentale», par M. Chavanne, A. Julien, G. J. Beaudoin, E. Flamand, deuxième Edition, Editions Modulo, chapitre 18, pages 271-325.

Dans tous les exemples donnés ci-dessous les conditions expérimentales de CES sont les suivantes : 1 ml de la solution de polymérisation est mise sur une coupelle, qui est ensuite évaporée à température ambiante sous vide de pompe à palettes. Le soluté est repris par 1 ml de l'éluant de la CES, et l'ensemble est ensuite injecté dans l'appareil de CES. L'éluant de la CES est une solution de NaHC0₃: 0.05 mol/l, NaNO₃: 0.1 mol/l, triéthylamine 0.02 mol/l, NaN₃ 0.03 % massique. La chaîne de CES contient une pompe isocratique (Waters 515) dont le débit est réglé à 0.5 ml/min, un four contenant une précolonne de type «Guard Column Ultrahydrogel Waters™», une colonne linéaire de 7.8 mm de diamètre interne et 30cm de longueur de type «Ultrahydrogel Waters™» et un détecteur réfractométrique de type RI Waters™ 410. Le four est porté à la température de 60°C et le réfractomètre à 50°C. Le logiciel de détection et de traitement du chromatogramme est le logiciel SECential, fourni par «L.M.O.P.S. CNRS, Chemin du Canal, Venaison, 69277». La CES est étalonnée par une série de 5 étalons de poly(acrylate) de sodium fourni par Polymer Standards Service, sous les références PAA 18K, PAA 8K, PAA 5K, PAA 4K, PAA 3K.

### EXEMPLE 1 :

Cet exemple concerne la préparation de différents composés pouvant être utilisés comme agents de transfert.

### Essai n°1 :

Cet essai concerne la préparation du composé A 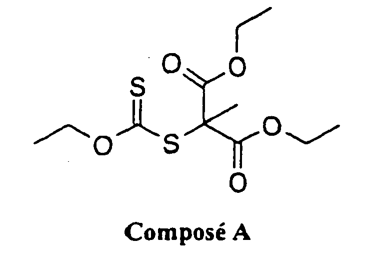 8.8 g d'*O*-éthyldithiocarbonate de potassium sont dissous dans 55 ml d'eau. Ensuite, 0.50 g d'Aliquat 336 et 13.9 g de 2-bromo-2-méthylmalonate de diéthyle sont ajoutés à la solution aqueuse. On agite l'ensemble vigoureusement avec un barreau magnétique à 15°C, jusqu'à ce que la phase aqueuse devienne incolore. 2.3 g d'*O-*éthyldithiocarbonate de potassium sont alors à nouveau ajoutés au mélange. On laisse agiter 20 minutes. Le produit est séparé de la phase aqueuse par extraction avec deux fois 60 ml de diéthyléther. La phase organique est ensuite lavée avec trois fois 10 ml d'eau. La phase organique est ensuite séchée avec du sulfate de magnésium pendant une heure. La solution est filtrée sur une colonne de silice de 5 cm de diamètre et 3 cm de hauteur. La phase organique collectée est ensuite évaporée sur évaporateur rotatif. On récupère 14.6 g d'une huile jaune foncé (rendement du composé **A** : 90 %).

### Essai n° 2 :

Cet essai concerne la préparation du composé **B** 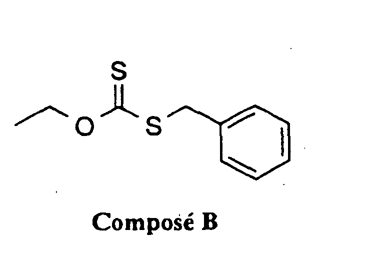 0.80 g d'*O*-éthyldithiocarbonate de potassium sont dissous dans 10ml d'éthanol à 50°C. Ensuite, 0.85 g de bromure de benzyle sont ajoutés goutte à goutte à la solution à cette température durant 5 minutes. On agite l'ensemble avec un barreau magnétique à 50°C durant 5 heures. Le mélange est ensuite dilué avec de l'eau (30 ml) et extrait avec trois fois 25 ml de diéthyléther. La phase organique est ensuite séchée avec du sulfate de magnésium, puis filtrée et enfin évaporée sur évaporateur rotatif. On récupère 0.90g du composé **B** sous la forme d'une huile jaune (rendement du composé **B :** 88 %). Le composé C est décrit dans le brevet WO 99/31144 (J. Chiefari, R.T.A. Mayadunne, G. Moad, E. Rizzardo, S.H. Thang, PCT Int. Appl. WO 99/31144).

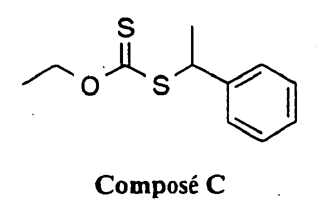

### Essai n° 3 :

Cet essai concerne la préparation du composé D 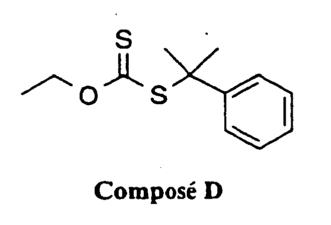 0.80 g d'*O*-éthyldithiocarbonate de **potassium** sont dissous dans 5 ml d'éthanol à 50°C. Ensuite, 1.00 g de (1-bromo-1-méthylétbyl) benzène est ajouté goutte à goutte à la solution à 50°C durant 10 minutes. On agite l'ensemble avec un barreau magnétique à 50°C durant 3 heures. Le mélange est ensuite dilué avec 30 ml d'eau et extrait avec trois fois 25 ml de diéthyléther. La phase organique est ensuite séchée avec du sulfate de magnésium, puis filtrée et enfin évaporée sur évaporateur rotatif. On récupère 0.41 g du composé **D** sous la forme d'une huile jaune (rendement du composé **D :** 34 %).

### Essai n° 4 :

Cet essai concerne la préparation du composé E 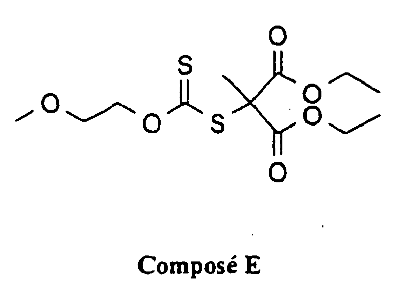 6.60 g de KOH (en poudre) sont dissous dans 15.2 g de 2-méthoxyéthanol. Après refroidissement de la solution à 10°C, 7.61 g de disulfure de carbone sont additionnés goutte à goutte durant 5 minutes. Le mélange est laissé une nuit sans agitation à température ambiante puis mis en suspension dans de l'éther. Le précipité est filtré, lavé avec de l'éther et séché. 18.3 g d'*O*-(2-méthoxyéthyl)dithiocarbonate de potassium sont récupérés (rendement : 96 %). 0.95 g de ce produit sont dissous dans 5 ml d'eau et neutralisés à l'aide d'une solution d'HCl (1:100). Ensuite, 50 mg d'Aliquat 336 et 1.27 g de 2-bromo-2-méthyl malonate de diéthyle sont ajoutés. Le mélange est alors agité vigoureusement à température ambiante jusqu'à ce que la phase aqueuse devienne incolore. Après quoi, 0.48 g d'*O*-(2-méthoxyéthyl)dithiocarbonate de potassium dissous dans 2.5 ml d'eau sont neutralisés et sont de nouveau ajoutés et le mélange est mis sous agitation durant une heure. Enfin, le produit est extrait avec de l'éther (1x60 ml, 1×30 ml). La phase organique extraite est lavée avec de l'eau (3x10 ml). Après séchage avec du sulfate de magnésium, la solution est filtrée sur une colonne de silice de 5 cm de diamètre et 1.5 cm de hauteur avec comme éluant de l'éther. L'évaporation conduis à 1.49 g d'une huile j aune (rendement du composé **E** : 92 %).

Le composé **F** a été synthétisé suivant la description du brevet WO 99/31144 (J.Chiefari, R.T.A. Mayadunne, E. Rizzardo, S.H. Thang, PCT Appl. WO 99/31144).

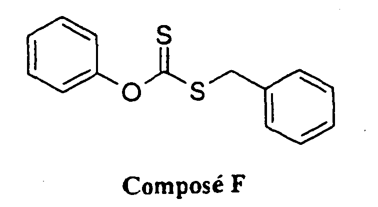

### Essai n° 5 :

Cet essai concerne la préparation du composé G 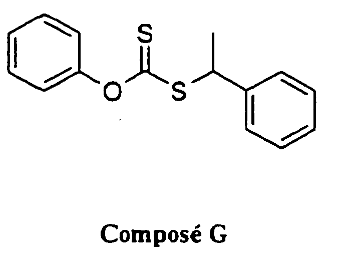 Un mélange de 0.40 g de NaOH et 0.86 g de 1-phényl éthanethiol dans 10 ml d'eau est agité pendant 15 minutes à température ambiante au moyen d'un barreau magnétique. 0.86 g de phénylchlorothionoformate sont ensuite ajoutés. On observe la formation d'une huile jaune, et après deux heures, on rajoute 30 ml de diéthyléther et 25 ml d'eau. La phase organique est séparée de la phase aqueuse. La phase aqueuse est ensuite traitée trois fois avec 10 ml de diéthyléther, et les phases organiques sont combinées. Celles ci sont ensuite lavées deux fois avec 10 ml d'eau. La phase organique est ensuite séchée avec du sulfate de magnésium pendant 1 heure. La solution est filtrée et évaporée sur évaporateur rotatif, pour donner 1.34 g d'une huile jaune (rendement du composé G : 85 %).

### Essai n° 6 :

Cet essai concerne la préparation du composé H 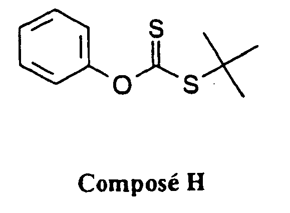 0.56 g de 2-méthyl-2-propanethiolate de sodium et 0.20 g de NaOH sont dissous dans 10 ml d'eau. Après 15 minutes à température ambiante, on ajoute 0.86 g phénylchlorothionoformate. Le mélange est agité durant 2 heures à température ambiante. Ensuite, le mélange est dilué avec de l'eau (25 ml) et extrait avec de l'éther (3x20 ml). La phase organique extraite est lavée avec de l'eau (2x 10 ml). Après séchage avec du sulfate de magnésium, la solution est filtrée et évaporée sur évaporateur rotatif. Le produit est purifié sur une colonne de silice avec comme éluants de l'éther de pétrole et ensuite d'un mélange d'éther de pétrole et d'acétate d'éthyle (98:2). 0.33 g de composé **H** sous la forme d'une huile jaune sont récupérés (rendement du composé **H :** 29 %).

Le composé **I** est commercialisé par Sigma-Alrich (L'Isle d'Abeau Chesnes-BP 701, 38297 Saint Quentin Fallavier, France), sous la référence 15,788-0.

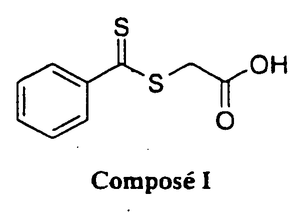

Le composé **J** a été décrit par G. Drosten, P. Mischke, J. Voss, Chem. Ber., 120, 1757-1762, (1987)

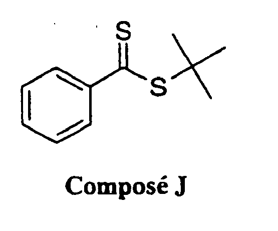

La synthèse du composé **K** est décrite dans la littérature N. H. Leon, R. S. Asquith, Tetrahedron, 26, 1719-1725, (1970).

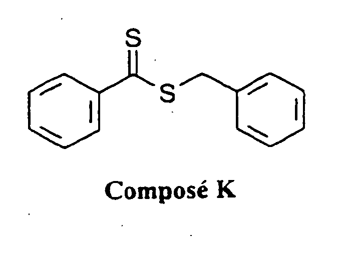

### Essai n° 7 :

Cet essai concerne la préparation du composé L 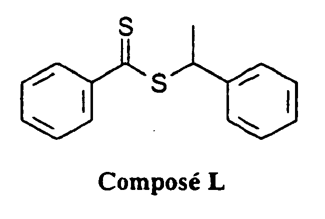 1.06 d'acide S-(thiobenzoyl)thioglycolique (composé **I**) et 0.40 g de NaOH sont dissous dans 40 ml d'eau à température ambiante. Puis, 0.76 g de 1-phényl éthanethiol sont ajoutés. Après agitation à température ambiante durant 2 heures, le produit est extrait à l'aide d'éther (1x60 ml, 1x30 ml). La phase organique extraite est lavée avec une solution aqueuse de NaOH (O.1N, 3x30 ml) et de l'eau (3x30 ml). Le séchage sur du sulfate de magnésium, la filtration et l'évaporation conduisent à 1.07 g d'un liquide rouge sombre (rendement du composé **L :** 83 %).

Les composés **M, N** et **P** ont été synthétisés suivant la description du brevet WO99/31144 (J.Chiefari, R.T.A. Mayadunne, E. Rizzardo, S.H. Thang, WO99/31144).

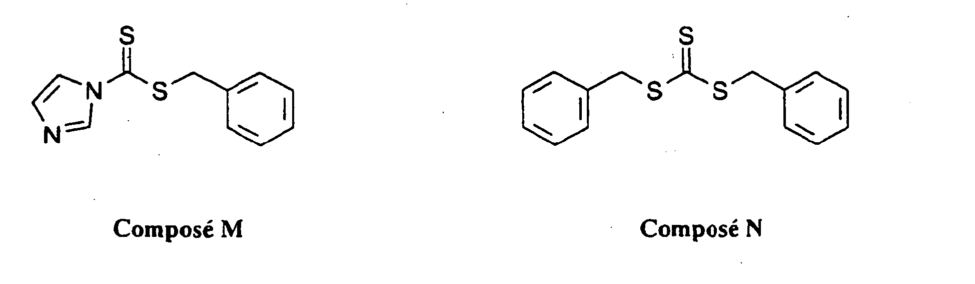

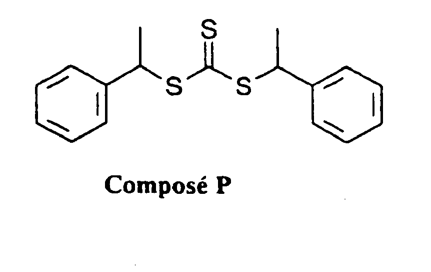

### Essai n° 8 :

Cet essai concerne la préparation du composé O 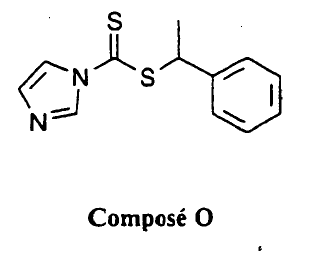 0.69 g de 1-phényléthanethiol sont additionnés à une solution de 0.89 g thiocarbonyl diimidazole dans 10ml de dichlorométhane à température ambiante durant 20 minutes. La solution est laissée pendant 16 heures sous agitation à la même température. Ensuite, le solvant est éliminé sous vide. Le mélange est filtré sur une colonne de silice avec comme éluant un mélange de l'éther de pétrole et de l'acétate d'éthyle (7:3). 0.63 g de **O** sous la forme d'une huile jaune (rendement du composé **O :** 54 %) et 0.38 g de **P** sous la forme d'une huile jaune sont obtenus.

### EXEMPLE 2 :

Cet exemple concerne le procédé de polymérisation mettant en oeuvre les agents de transfert de l'exemple 1.

### Essai n° 9 :

Cet essai illustre les quatre critères du procédé selon l'invention de polymérisation de l'acide acrylique en présence du composé A dans l'éthanol.

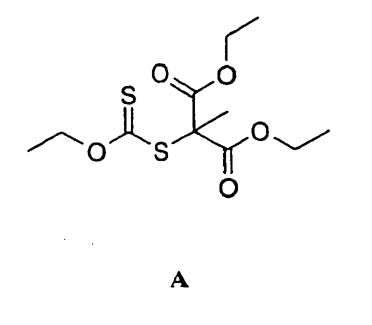

Dans un récipient en verre de 100 ml, 408 mg de composé A sont dissous dans 5.0 g d'acide acrylique préalablement distillé. 15 g d'éthanol absolu (Rectapur™ de Prolabo sous la référence 20 820.327) sont ajoutés à cette solution. Pendant une heure, la solution est dégazée par bullage d'argon. 39 mg de diacide 4,4'-azobis-4-cyanovalérique sont ajoutés à la solution. Le pourcentage massique d'acide acrylique dans la solution est de 25 %. L'ensemble est ensuite chauffé à l'abri de la lumière, par immersion dans un bain d'huile dont la température est fixée à 90°C. On arrête ensuite la polymérisation au bout de 2 heures en rajoutant environ 50 mg d'inhibiteur de polymérisation radicalaire (2,6-di-*tert*.-butyl-4-méthylphénol : BHT) et en laissant le milieu réactionnel se refroidir à température ambiante. Le polymère est formé en absence de gel. Le taux de conversion mesuré par les deux méthodes est alors supérieur à 99 %. Immédiatement après, une portion de soude de molarité 10 mol/l est alors ajoutée au milieu, jusqu'à ce que le pH devienne supérieur à 10. Le mélange est alors agité pendant deux heures à température ambiante. La masse molaire moyenne en nombre du polymère est de 2930 g/mol, et l'indice de polymolécularité expérimental est de 1.8.

Cette polymérisation obéit aux quatre critères a), b), c) et d) du procédé selon l'invention.

### Essai n° 10 :

Cet essai illustre le cinquième critère du procédé de polymérisation de l'acide acrylique en présence du composé A selon l'invention.

Les conditions opératoires sont similaires à celles décrites dans l'essai n° 9. L'expérience est reproduite deux fois (A, B) (Tableau 2). Cet exemple montre que la masse molaire évolue proportionnellement avec la conversion (Figure 4) et illustre le critère e) du procédé selon l'invention.

**TABLEAU 2 : Evolutions de la masse molaire moyenne en nombre M̅ₙ̅ et de l'indice de polymolécularité expérimental au cours de la polymérisation réalisée selon l'essai n° 10.**

| Expérience | Conversion | M̅ₙ̅ | IPₑₓₚ |
|---|---|---|---|
| | [%] | [g/mol] | |
| B | 26 | 1220 | 1.9 |
| B | 87 | 1850 | 2.0 |
| A | 91 | 2330 | 1.8 |
| B | 93 | 2870 | 1.8 |
| A | 96 | 2450 | 1.8 |
| A | 98 | 2840 | 1.7 |
| A | 99 | 2810 | 1.8 |
| A | 100 | 2930 | 1.8 |
| B | 100 | 2885 | 1.8 |

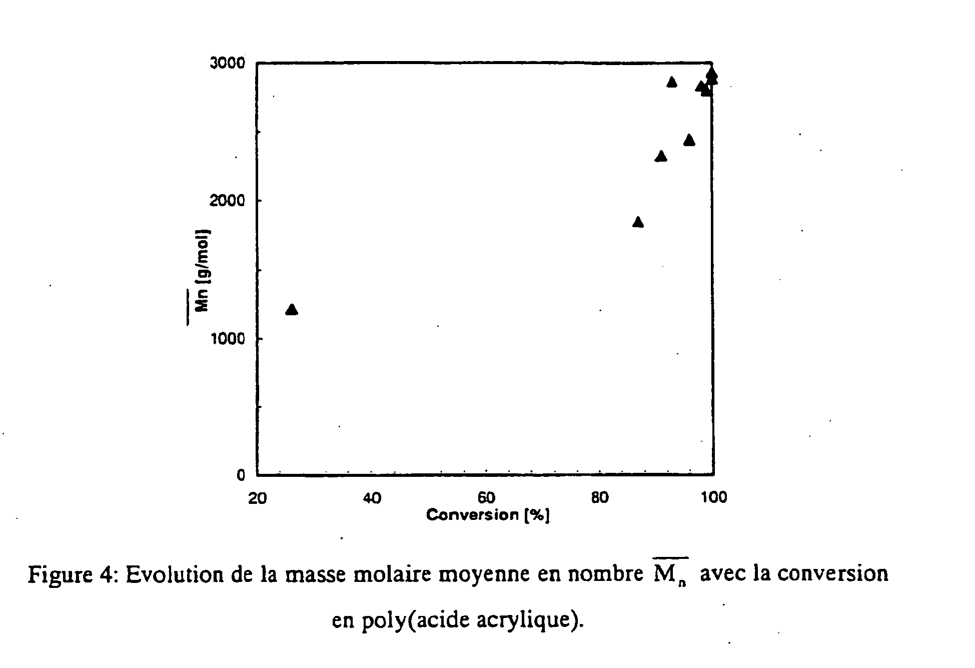

### Essai n° 11 :

Cet essai illustre l'invention et est relatif à la polymérisation de l'acide acrylique en présence du composé A avec multiplication par trente des quantités massiques.

Dans un réacteur en verre de 1 litre, 12.2 g du composé A sont dissous dans 150 g d'acide acrylique (rapport molaire AA:CTA = 50:1). 450 g d'éthanol absolu (Rectapur'" de Prolabo sous la référence 20 820.327) sont ajoutés à la solution, et après dégazage, 1.17 g de diacide 4,4'-azobis-4-cyanovalérique. L'agitation est réalisée à l'aide d'une ancre en verre à 210 rpm. Après une heure de polymérisation à reflux, on arrête la polymérisation en rajoutant BHT. On laisse le milieu réactionnel se refroidir à température ambiante. Immédiatement après, une portion de soude équimolaire par rapport à l'acide acrylique initialement introduit dissoute dans une quantité minimale d'eau est alors ajoutée au milieu. Le mélange est alors agité pendant deux heures et l'alcool distillé de manière à obtenir une solution aqueuse de polyacrylate.

Une comparaison des conversions (déterminées par gravimétrie), des masses molaires moyenne en nombre et des indices de polymolécularité expérimental obtenues au bout d'une heure selon le procédé de l'essai n° 9 (expérience A) et selon le procédé de l'essai n° 11 (expériences B et C) est présentée dans le tableau suivant.

**TABLEAU 3 : Evolutions de la masse molaire moyenne en nombre M̅ₙ̅ et de l'indice de polymolécularité expérimental au cours de la polymérisation réalisée selon l'essai n° 9 (A) et l'essai n° 11 (B et C).**

| Expérience | Conversion | M̅ₙ | IPₑₓₚ |
|---|---|---|---|
| (après 1 heure) | [%] | [g/mol] | |
| *A* | 98 | 2840 | 1,7 |
| *B* | 95 | 2780 | 1,8 |
| *C* | 92 | 2510 | 1,8 |

La polymérisation n'est pas affectée par une multiplication des quantités massiques en réactifs.

### Essai n° 12 :

Cet essai illustre l'invention et est relatif à la polymérisation de l'acide acrylique en présence du composé A dans l'isopropanol.

Les conditions opératoires sont similaires à celles décrites dans l'essai n° 9. Dans 5.0 g d'acide acrylique sont dissous 408 mg du composé **A**. 15 g d'isopropanol à 95 % dans l'eau sont ajoutés à la solution, et après dégazage, 39 mg de diacide 4,4'-azobis-4-cyanovalérique. Après deux heures de polymérisation, le taux de conversion est supérieur à 99 %, et la masse molaire moyenne en nombre du polymère est de 1680 g/mol, avec un indice de polymolécularité expérimental de 1.9.

Cette polymérisation obéit aux quatre critères a), b), c) et d) du procédé selon l'invention.

### Essai n° 13 :

Cet exemple illustre l'invention et est relatif à la polymérisation de l'acide acrylique en présence du composé A dans le méthanol.

Les conditions opératoires sont similaires à celles décrites dans l'essai n° 9. Dans 5.0 g d'acide acrylique sont dissous 408 mg du composé A. 15 g de méthanol à 95 % dans l'eau sont ajoutés à la solution, et après dégazage, 39 mg de diacide 4,4'-azobis-4-cyanovalérique. Après deux heures de polymérisation à 70°C, le taux de conversion est supérieur à 95 %, et la masse molaire moyenne en nombre du polymère est de 1880 g/mol, avec un indice de polymolécularité expérimental de 1.9.

Cette polymérisation obéit aux quatre critères a), b), c) et d) du procédé selon l'invention.

### Essai n° 14 :

Cet exemple illustre l'invention et est relatif à la polymérisation de l'acide acrylique en présence du composé A dans l'eau.

Les conditions opératoires sont similaires à celles décrites dans l'essai n° 9. L'inhibiteur de polymérisation radicalaire est dans ce cas du Cupferron et le pourcentage massique d'acide acrylique dans la solution est de 44 %. Dans 5.0 g d'acide acrylique sont dissous 408 mg du composé **A**. 5.8 g d'eau sont ajoutés à la solution, et après dégazage, 39 mg de diacide 4,4'-azobis-4-cyanovalérique. Après dix minutes de polymérisation à 90°C, le taux de conversion est supérieur à 99 %, et la masse molaire moyenne en nombre du polymère au bout de deux heures est de 3530 g/mol, avec un indice de polymolécularité expérimental de 1.9.

Cette polymérisation obéit aux quatre critères a), b), c) et d) du procédé selon l'invention.

### Essai n° 15 :

Cet exemple illustre un domaine hors de l'invention et est relatif à la polymérisation de l'acide acrylique en présence du composé B dans l'éthanol.

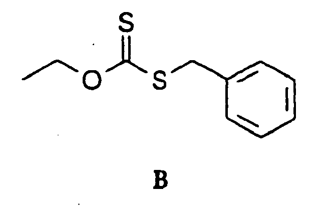

Les conditions opératoires sont similaires à celles décrites dans l'essai n° 9. Dans 5.0 g d'acide acrylique sont dissous 220 mg du composé **B.** 15 g d'éthanol absolu (Rectapur™ de Prolabo sous la référence 20 820.327) sont ajoutés à la solution, et après dégazage, 39 mg de diacide 4,4'-azobis-4-cyanovalérique. Après deux heures de polymérisation, le taux de conversion est supérieur à 99 %, et la masse molaire moyenne en nombre du polymère est de 5010 g/mol, avec un indice de polymolécularité expérimental de 3.4.

Cette polymérisation n'obéit pas au critère a) du procédé selon l'invention.

### Essai n° 16 :

Cet exemple illustre l'invention et est relatif à la polymérisation de l'acide acrylique en présence du composé C dans l'éthanol.

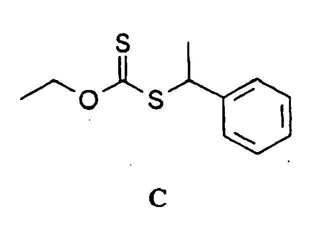

Les conditions opératoires sont similaires à celles décrites dans l'essai n° 9. Dans 5.0 g d'acide acrylique sont dissous 314 mg du composé **C.** 15 g d'éthanol absolu (Rectapur™ de Prolabo sous la référence 20 820.327) sont ajoutés à la solution, et après dégazage, 39 mg de diacide 4,4'-azobis-4-cyanovalérique. Après deux heures de polymérisation, le taux de conversion est de l'ordre de 95%, et la masse molaire moyenne en nombre du polymère est de 2740 g/mol, avec un indice de polymolécularité expérimental de 1.7.

Cette polymérisation obéit aux quatre critères a), b), c) et d) du procédé selon l'invention.

### Essai n° 17 :

Cet exemple illustre un domaine hors de l'invention et est relatif à la polymérisation de l'acide acrylique en présence du composé D dans l'éthanol. 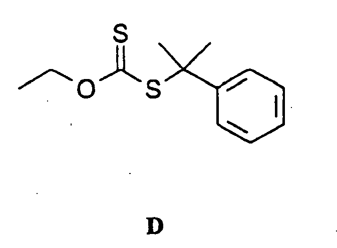 Les conditions opératoires sont similaires à celles décrites dans l'essai n° 9. Dans 4.34 g d'acide acrylique sont dissous 290 mg du composé D. 13 g d'éthanol absolu (Rectapur™ de Prolabo sous la référence 20 820.327) sont ajoutés à la solution, et après dégazage, 34 mg de diacide 4,4'-azobis-4-cyanovalérique. Après deux heures de polymérisation, le taux de conversion est inférieur à 30%, et la masse molaire moyenne en nombre du polymère est de 1840 g/mol, avec un indice de polymolécularité expérimental de 1.9.

Cette polymérisation n'obéit pas au critère b) du procédé selon l'invention.

### Essai n° 18 :

Cet exemple illustre le cinquième critère du procédé de polymérisation de l'acide acrylique en présence du composé D selon l'invention.

Les conditions opératoires sont similaires à celles décrites dans l'essai n° 9. Cet exemple montre que la masse molaire évolue linéairement avec la conversion (Figure 5).

**TABLEAU 3.b : Evolutions de la masse molaire moyenne en nombre Mₙ et de l'indice de polymolécularité expérimental au cours de la polymérisation réalisée selon l'essai n°17.**

| Conversion | M̅ₙ̅ | IPₑₓₚ |
|---|---|---|
| [%] | [g/mol] | |
| 11 | 975 | 2.0 |
| 22 | 1280 | 2.1 |
| 29 | 1840 | 1.9 |

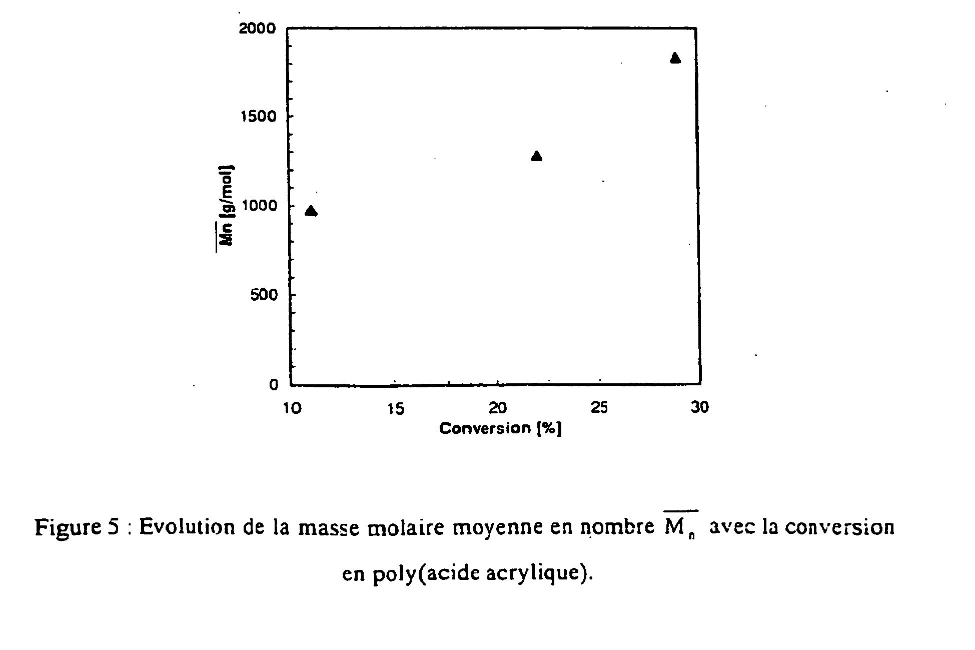

### Essai n° 19 :

Cet exemple illustre l'invention et est relatif à la polymérisation de l'acide acrylique en présence du composé E dans l'eau. 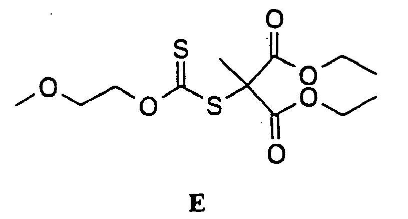 Les conditions opératoires sont similaires à celles décrites dans l'essai n° 9. L'inhibiteur de polymérisation radicalaire est dans ce cas du Cupferron et le pourcentage massique d'acide acrylique dans la solution est de 40 %. Dans 5.0 g d'acide acrylique sont dissous 450 mg du composé **E.** 7.0 g d'eau sont ajoutés à la solution, et après dégazage, 39 mg de diacide 4,4'-azobis-4-cyanovalérique. Après dix minutes de polymérisation, le taux de conversion est supérieur à 99%, et la masse molaire moyenne en nombre du polymère au bout de deux heures est de 3440 g/mol, avec un indice de polymolécularité expérimental de 1.8.

Cette polymérisation obéit aux quatre critères a), b), c) et d) du procédé selon l'invention.

### Essai n° 20 :

Cet exemple illustre l'invention et est relatif à la polymérisation de l'acide acrylique en présence du composé **F** dans l'éthanol. 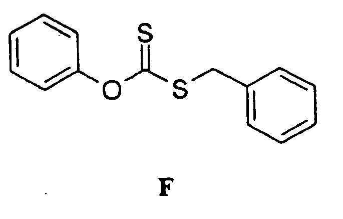 Les conditions opératoires sont similaires à celles décrites dans l'essai n° 9. Dans 5.0 g d'acide acrylique sont dissous 362 mg du composé **F.** 15 g d'éthanol absolu (Rectapur™ de Prolabo sous la référence 20 820.327) sont ajoutés à la solution, et après dégazage, 39 mg de diacide 4,4'-azobis-4-cyanovalérique. Après deux heures de polymérisation, le taux de conversion est supérieur à 90 %, et la masse molaire moyenne en nombre du polymère est de 2400 g/mol, avec un indice de polymolécularité expérimental de 1.8.

Cette polymérisation obéit aux quatre critères a), b), c) et d) du procédé selon l'invention.

### Essai n° 21 :

Cet exemple illustre l'invention et est relatif à la polymérisation de l'acide acrylique en présence du composé G dans l'éthanol. 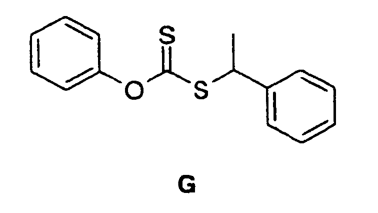 Les conditions opératoires sont similaires à celles décrites dans l'essai n° 9. Dans 5.0 g d'acide acrylique sont dissous 381 mg du composé **G.** 15 g d'éthanol absolu (Rectapur™ de Prolabo sous la référence 20 820.327) sont ajoutés à la solution, et après dégazage, 39 mg de diacide 4,4'-azobis-4-cyanovalérique. Après une heure et trente minutes de polymérisation, le taux de conversion est supérieur à 99%, et la masse molaire moyenne en nombre du polymère est de 4700 g/mol, avec un indice de polymolécularité expérimental de 1.4.

Cette polymérisation obéit aux quatre critères a), b), c) et d) du procédé selon l'invention.

### Essai n° 22 :

Cet exemple illustre le cinquième critère du procédé de polymérisation de l'acide acrylique en présence du composé G selon l'invention.

Les conditions opératoires sont similaires à celles décrites dans l'essai n° 21. L'expérience est reproduite trois fois (A, B, C) (Tableau 4). Cet exemple montre que la masse molaire croit de manière monotone avec la conversion (Figures 6 et 7) et illustre donc le cinquième critère du procédé selon l'invention.

**TABLEAU 4 : Evolutions de la masse molaire moyenne en nombre M̅ₙ et de l'indice de polymolécularité expérimental au cours de la polymérisation réalisée selon l'essai n° 21.**

| Expérience | Référence | Conversion | M̅ₙ | IPₑₓₚ |
|---|---|---|---|---|
| | CES | [%] | [g/mol] | |
| B | 1 | 24 | 1750 | 1.4 |
| C | 2 | 39 | 2400 | 1.4 |
| A | - | 65 | 3500 | 1.4 |
| C | 3 | 66 | 3800 | 1.3 |
| B | - | 72 | 3500 | 1.3 |
| C | 4 | 79 | 4100 | 1.3 |
| A | - | 88 | 4100 | 1.4 |
| B | 5 | 100 | 4700 | 1.4 |

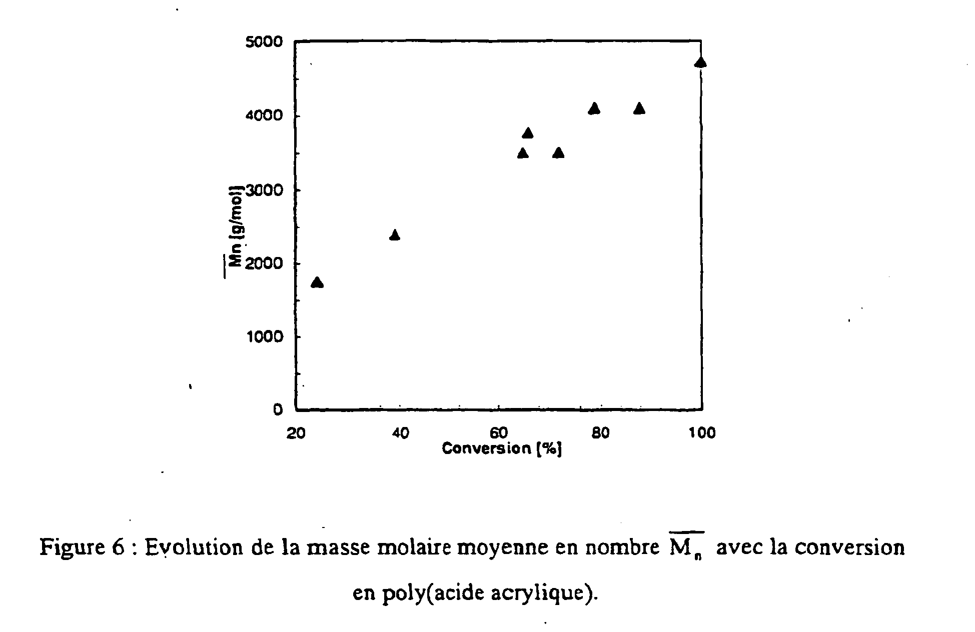

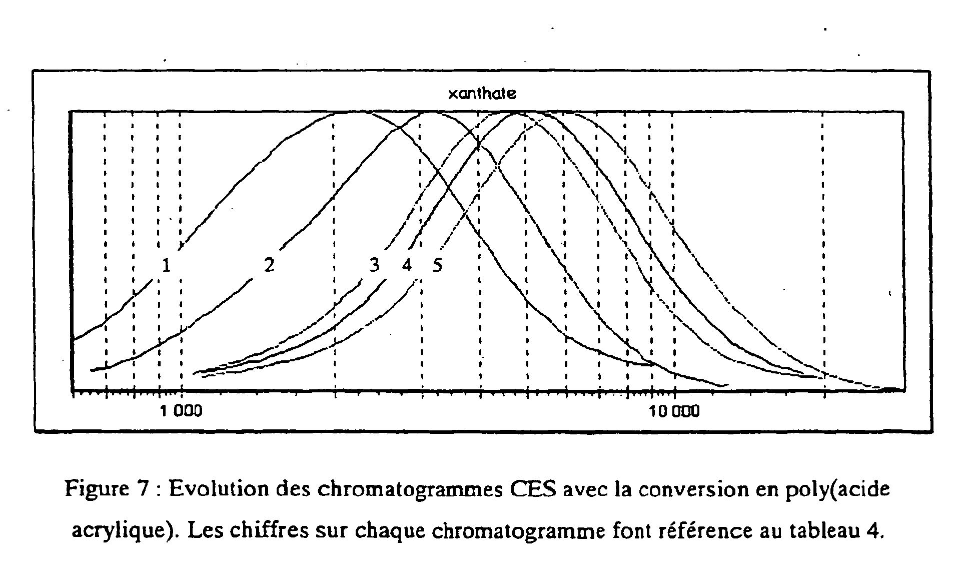

### Essai n° 23 :

Cet exemple illustre un domaine hors de l'invention et est relatif à la polymérisation de l'acide acrylique en présence du composé H dans l'éthanol.

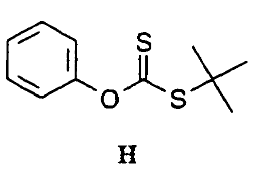

Les conditions opératoires sont similaires à celles décrites dans l'essai n° 9. Dans 4.17 g d'acide acrylique sont dissous 258 mg du composé **H.** 12.3 g d'éthanol absolu (Rectapur™ de Prolabo sous la référence 20 820.327) sont ajoutés à la solution, et après dégazage, 32 mg de diacide 4,4'-azobis-4-cyanovalérique. Après deux heures de polymérisation, le taux de conversion est supérieur à 99%, et la masse molaire moyenne en nombre du polymère est de 3640 g/mol, avec un indice de polymolécularité expérimental de 2.35.

Cette polymérisation n'obéit pas au critère a) du procédé selon l'invention.

### Essai n° 24 :

Cet exemple illustre un domaine hors de l'invention et est relatif à la polymérisation de l'acide acrylique en présence du composé I dans l'éthanol. 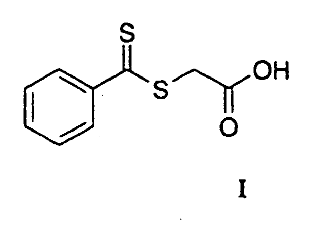 Les conditions opératoires sont similaires à celles décrites dans l'essai n° 9. Dans 5.0 g d'acide acrylique sont dissous 294 mg du composé **I.** 15 g d'éthanol absolu (Rectapur'" de Prolabo sous la référence 20 820.327) sont ajoutés à la solution, et après dégazage, 39 mg de diacide 4,4'-azobis-4-cyanovalérique. Après deux heures de polymérisation, le taux de conversion est inférieur à 10 %. La masse molaire moyenne en nombre est de 2700 g/mol et l'indice de polymolécularité expérimental est de 2.1.

Cette polymérisation n'obéit pas aux critères a) et b) du procédé selon l'invention.

### Essai n° 25 :

Cet exemple illustre un domaine hors de l'invention et est relatif à la polymérisation de l'acide acrylique en présence du composé J dans l'éthanol.

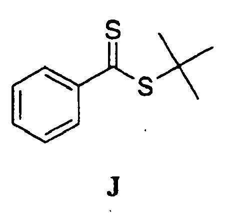

Les conditions opératoires sont similaires à celles décrites dans l'essai n° 9. Dans z.0 g d'acide acrylique sont dissous 292 mg du composé J. 15g d'éthanol absolu (Rectapur"' de Prolabo sous la référence 20 820.327) sont ajoutés à la solution, et après dégazage, 39 mg de diacide 4,4'-azobis-4-cyanovalérique. Après deux heures de polymérisation, le taux de conversion est inférieur à 20 %, et la masse molaire moyenne en nombre du polymère est de 930 g/mol, avec un indice de polymolécularité expérimental de 1.3.

Cette polymérisation n'obéit pas au critère b) du procédé selon l'invention.

### Essai n° 26 :

Cet exemple illustre un domaine hors de l'invention et est relatif à la polymérisation de l'acide acrylique en présence du composé K dans l'éthanol. 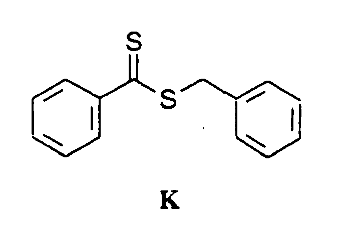 Les conditions opératoires sont similaires à celles décrites dans l'essai n° 9. Dans 5.0 g d'acide acrylique sont dissous 339 mg du composé K. 15 g d'éthanol absolu (Rectapur™ de Prolabo sous la référence 20 820.327) sont ajoutés à la solution, et après dégazage, 39 mg de diacide 4,4'-azobis-4-cyanovalérique. Après deux heures de polymérisation, le taux de conversion est inférieur à 15 %, et la masse molaire moyenne en nombre du polymère est de 980 g/mol, avec un indice de polymolécularité expérimental de 1.4.

Cette polymérisation n'obéit pas au critère b) du procédé selon l'invention.

### Essai n° 27 :

Cet exemple illustre un domaine hors de l'invention et est relatif à la polymérisation de l'acide acrylique en présence du composé L dans l'éthanol.

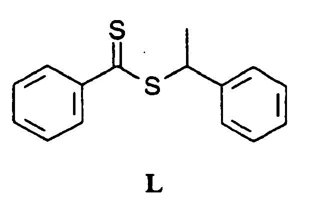

Les conditions opératoires sont similaires à celles décrites dans l'essai n° 9. Dans 5.0 g d'acide acrylique sont dissous 359 mg du composé L. 15 g d'éthanol absolu (Rectapur™ de Prolabo sous la référence 20 820.327) sont ajoutés à la solution, et après dégazage, 39 mg de diacide 4,4'-azobis-4-cyanovalérique. Après deux heures de polymérisation, le taux de conversion est de 30 %, et la masse molaire moyenne en nombre du polymère est de 980 g/mol, avec un indice de polymolécularité expérimental de 1.4.

Cette polymérisation n'obéit pas au critère b) du procédé selon l'invention.

### Essai n° 28 :

Cet exemple illustre un domaine hors de l'invention et est relatif à la polymérisation de l'acide acrylique en présence du composé M dans l'éthanol.

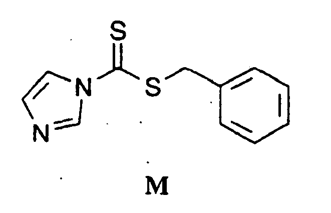

Les conditions opératoires sont similaires à celles décrites dans l'essai n° 9. Dans 5.0 g d'acide acrylique sont dissous 325 mg du composé M. 15 g d'éthanol absolu (Rectapur™ de Prolabo sous la référence 20 820.327) sont ajoutés à la solution, et après dégazage, 39 mg de diacide 4,4'-azobis-4-cyanovalérique. Après deux heures de polymérisation à reflux, le taux de conversion est supérieur à 99 %, et la masse molaire moyenne en nombre du polymère est de 3900 g/mol, avec un indice de polymolécularité expérimental de 3.3. Il est supposé que ce composé se dégrade durant la polymérisation.

Cette polymérisation n'obéit pas au critère a) du procédé selon l'invention.

### Essai n° 29 :

Cet exemple illustre un domaine hors de l'invention et est relatif à la polymérisation de l'acide acrylique en présence du composé O dans l'éthanol.

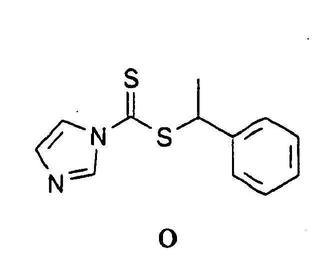

Les conditions opératoires sont similaires à celles décrites dans l'essai n° 9. Dans 5.0g d'acide acrylique sont dissous 345 mg du composé O. 15g d'éthanol absolu (Rectapur™ de Prolabo sous la référence 20 820.327) sont ajoutés à la solution, et après dégazage, 39 mg de diacide 4,4'-azobis-4-cyanovalérique. Après deux heures de polymérisation à reflux, le taux de conversion est de 93 %, et la masse molaire moyenne en nombre du polymère est de 3800 g/mol, avec un indice de polymolécularité expérimental de 3.0. Il est supposé que ce composé se dégrade également durant la polymérisation.

Cette polymérisation n'obéit pas au critère a) du procédé selon l'invention.

### Essai n° 30 :

Cet exemple illustre l'invention et est relatif à la polymérisation de l'acide acrylique en présence du composé N dans l'éthanol.

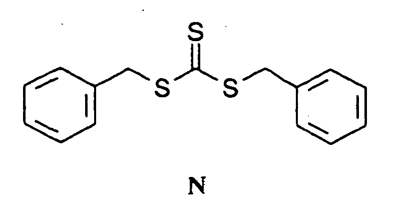

Les conditions opératoires sont similaires à celles décrites dans l'essai n° 9. Dans un récipient (1), 262 mg du composé N sont dissous dans 3.3 g d'acide acrylique (rapport molaire AA:CTA = 50:1). 9.8 g. d'éthanol absolu (Rectapur™ de Prolabo sous la référence 20 820.327) sont ajoutés à la solution, et après dégazage, 25 mg de diacide 4,4'-azobis-4-cyanovalérique. Après deux heures de polymérisation, le taux de conversion est supérieur à 99 %, et la masse molaire moyenne en nombre du polymère est de 1800 g/mol, avec un indice de polymolécularité expérimental de 1.4.

Dans un récipient (2), 202 mg du composé N sont dissous dans 5.0 g d'acide acrylique (rapport molaire AA:CTA = 100:1). 15 g d'éthanol absolu (Rectapur™ de Prolabo sous la référence 20 820.327) sont ajoutés à la solution, et après dégazage, 19 mg de diacide 4,4'-azobis-4-cyanovalérique. Après deux heures de polymérisation, le taux de conversion est supérieur à 99 %, et la masse molaire moyenne en nombre du polymère est de 2250 g/mol, avec un indice de polymolécularité expérimental de 1.5. Ces polymérisations obéissent aux quatre critères a), b), c) et d) du procédé selon l'invention.

### Essai n° 31 :

Cet exemple illustre l'invention et est relatif à la polymérisation de l'acide acrylique en présence du composé N dans l'éthanol à 95 % dans l'eau.
Les conditions opératoires sont similaires à celles décrites dans l'essai n° 9. Dans un récipient, 6,04 g du composé N sont dissous dans 150 g d'acide acrylique (rapport molaire AA:CTA = 100:1), 450 g d'éthanol (Vol RP Normapur™ de Prolabo sous la référence 20 823.293) sont ajoutés à la solution, et après dégazage, 0,582 g de diacide 4,4'-azobis-4-cyanovalérique. Après deux heures de polymérisation, le taux de conversion est égal à 98 %, et la masse molaire moyenne en nombre du polymère est de 3200 g/mol, avec un indice de polymolécularité expérimental de 1,56. Cette polymérisation obéit aux quatre critères a), b), c) et d) du procédé selon l'invention.

### Essai n° 32 :

Cet exemple illustre l'invention et est relatif à la polymérisation de l'acide acrylique en présence du composé N dans l'éthanol à 95 % dans l'eau.
Les conditions opératoires sont similaires à celles décrites dans l'essai n° 9. Dans un récipient, 4,03 g du composé N sont dissous dans 150 g d'acide acrylique (rapport molaire AA:CTA = 150:1), 450 g d'éthanol (Vol RP Normapur™ de Prolabo sous la référence 20 823.293) sont ajoutés à la solution, et après dégazage, 0,389 g de diacide 4,4'-azobis-4-cyanovalérique. Après deux heures de polymérisation, le taux de conversion est égal à 96 %, et la masse molaire moyenne en nombre du polymère est de 4000 g/mol, avec un indice de polymolécularité expérimental de 1,65.

Cette polymérisation obéit aux quatre critères a), b), c) et d) du procédé selon l'invention.

### Essai n° 33 :

Cet exemple illustre l'invention et est relatif à la polymérisation de l'acide acrylique en présence du composé N dans l'éthanol à 95 % dans l'eau.
Les conditions opératoires sont similaires à celles décrites dans l'essai n° 9. Dans un récipient, 3,02 g du composé N sont dissous dans 150 g d'acide acrylique (rapport molaire AA:CTA = 200:1), 450, g d'éthanol (Vol RP Normapur™ de Prolabo sous la référence 20 823.293) sont ajoutés à la solution, et après dégazage, 0,291 g de diacide 4,4'-azobis-4-cyanovalérique. Après deux heures de polymérisation, le taux de conversion est égal à 95 %, et la masse molaire moyenne en nombre du polymère est de 4800 g/mol, avec un indice de polymolécularité expérimental de 1,65.

Cette polymérisation obéit aux quatre critères a), b), c) et d) du procédé selon l'invention.

### Essai n° 34 :

Cet exemple illustre le cinquième critère du procédé de polymérisation de l'acide acrylique en présence du composé N selon l'invention.
Les conditions opératoires sont similaires à celles décrites dans l'essai n° 30 (récipient 1).
Cet exemple montre que la masse molaire évolue proportionnellement avec la conversion (Figure 8) et illustre le critère e) du procédé selon l'invention.

**TABLEAU 5 : Evolutions de la masse molaire moyenne en nombre M̅ₙ et de l'indice de polymolécularité expérimental au cours de la polymérisation réalisée selon l'essai n° 30.**

| Temps | Conversion | M̅ₙ̅ | IPₑₓₚ |
|---|---|---|---|
| [min] | [%] | [g/mol] | |
| 10 | 7 | 840 | 1.3 |
| 20 | 40 | 1140 | 1.4 |
| 30 | 66 | 1445 | 1.4 |
| 60 | 91 | 1640 | 1.4 |
| 90 | 100 | 1780 | 1.4 |
| 120 | 100 | 1785 | 1.4 |

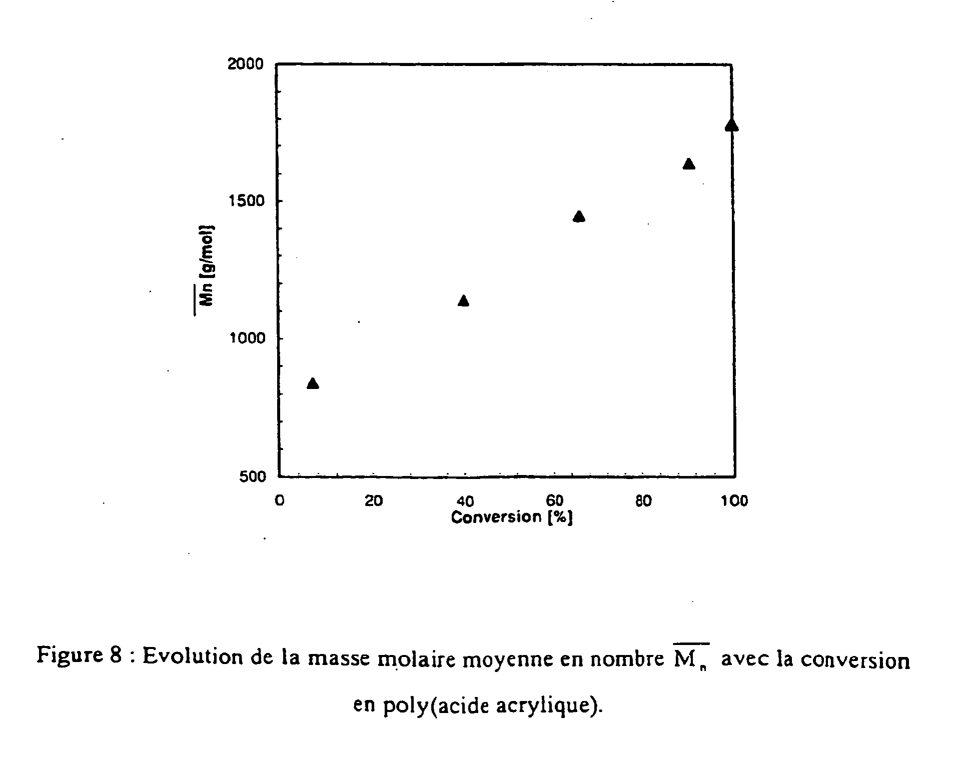

### Essai n° 35 :

Cet exemple illustre l'invention et est relatif à la polymérisation de l'acide acrylique en présence du composé P dans l'éthanol.

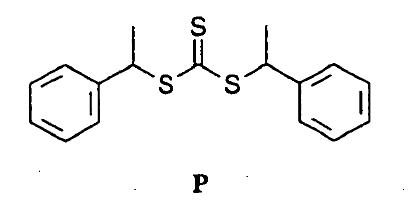

Les conditions opératoires sont similaires à celles décrites dans l'essai n° 9. Dans 5.0 g d'acide acrylique sont dissous 221 mg du composé **P** (rapport molaire AA:**P** = 100:1). 15 g d'éthanol absolu (Rectapur™ de Prolabo sous la référence 20 820.327) sont ajoutés à la solution, et après dégazage, 19mg de diacide 4,4'-azobis-4-cyanovalérique. Après deux heures de polymérisation, le taux de conversion est de 96 %, et la masse molaire moyenne en nombre du polymère est de 2900 g/mol, avec un indice de polymolécularité expérimental de 1.5.

Cette polymérisation obéit aux quatre critères a), b), c) et d) du procédé selon l'invention.

### Essai n° 36 :

Cet exemple illustre l'invention et est relatif à la polymérisation de l'acide acrylique en présence du composé P dans l'éthanol à 95 % dans l'eau.

Les conditions opératoires sont similaires à celles décrites dans l'essai n° 9. Dans 150 g d'acide acrylique sont dissous 4,424 g du composé **P** (rapport molaire AA:**P** = 150:1). 450 g d'éthanol (Vol RP Normapur'" de Prolabo sous la référence 20 823.293) sont ajoutés à la solution, et après dégazage, 0,389 g de diacide 4,4'-azobis-4-cyanovalérique. Après deux heures de polymérisation, le taux de conversion est de 96 %, et la masse molaire moyenne en nombre du polymère est de 4200 g/mol, avec un indice de polymolécularité expérimental de 1,8.

Cette polymérisation obéit aux quatre critères a), b), c) et d) du procédé selon l'invention.

### Essai n° 37 :

Cet exemple illustre l'invention et est relatif à la polymérisation de l'acide acrylique en présence du composé P dans l'éthanol à 95 % dans l'eau.

Les conditions opératoires sont similaires à celles décrites dans l'essai n° 9. Dans 150 g d'acide acrylique sont dissous 3,31 g du composé **P** (rapport molaire AA:**P** = 200:1). 450 g d'éthanol (Vol RP Normapur™ de Prolabo sous la référence 20 823.293) sont ajoutés à la solution, et après dégazage, 0,292 g de diacide 4,4'-azobis-4-cyanovalérique. Après deux heures de polymérisation, le taux de conversion est de 93 %, et la masse molaire moyenne en nombre du polymère est de 5090 g/mol, avec un indice de polymolécularité expérimental de 1,7.

Cette polymérisation obéit aux quatre critères a), b), c) et d) du procédé selon l'invention.

### Essai n° 38 :

Cet exemple illustre l'invention et est relatif à la polymérisation de l'acide acrylique en présence du composé P dans l'éthanol.

Les conditions opératoires sont similaires à celles décrites dans l'essai n° 9. Dans 205,4 g d'acide acrylique sont dissous 9,08 g du composé **P** (rapport molaire AA:**P** = 100:1). 616 g d'éthanol (Vol RP Normapur™ de Prolabo sous la référence 20 823.293) sont ajoutés à la solution, et après dégazage. 0,798 g de diacide 4,4'-azobis-4-cyanovalérique. Après deux heures de polymérisation, le taux de conversion est de 97 %, et la masse molaire moyenne en nombre du polymère est de 3200 g/mol, avec un indice de polymolécularité expérimental de 1,7.

Cette polymérisation obéit aux quatre critères a), b), c) et d) du procédé selon l'invention.

### Essai n° 39 :

Cet exemple illustre l'invention et est relatif à la polymérisation de l'acide acrylique en présence du composé P dans l'éthanol.

Les conditions opératoires sont similaires à celles décrites dans l'essai n° 9. Dans 37,8 g d'acide acrylique sont dissous 3,0 g du composé P (rapport molaire AA:P = 50:1). 112,5 g d'éthanol (Vol RP Normapur™ de Prolabo sous la référence 20 823.293) sont ajoutés à la solution, et après dégazage, 0,3 g de diacide 4,4'-azobis-4-cyanovalérique. Après deux heures de polymérisation, le taux de conversion est de 99 %, et la masse molaire moyenne en nombre du polymère est de 2030 g/mol, avec un indice de polymolécularité expérimental de 1,63.

Cette polymérisation obéit aux quatre critères a), b), c) et d) du procédé selon l'invention.

### Essai n° 40 :

Cet exemple illustre le cinquième critère du procédé de polymérisation de l'acide acrylique en présence du composé P selon l'invention.

Les conditions opératoires sont similaires à celles décrites dans l'essai n° 35. Cet exemple montre que la masse molaire évolue proportionnellement avec la conversion (Figure 9) et illustre le critère e) du procédé suivant l'invention.

**TABLEAU 6 : Evolutions de la masse molaire moyenne en nombre Mₙ et de l'indice de polymolécularité expérimental au cours de la polymérisation réalisée selon l'essai n° 35.**

| Temps | Conversion | M̅ₙ | IPₑₓₚ |
|---|---|---|---|
| [min] | [%] | [g/mol] | |
| 20 | 16 | 700 | 1.5 |
| 30 | 45 | 1300 | 1.4 |
| 60 | 90 | 2500 | 1.4 |
| 90 | 96 | 2850 | 1.4 |
| 120 | 96 | 2900 | 1.5 |

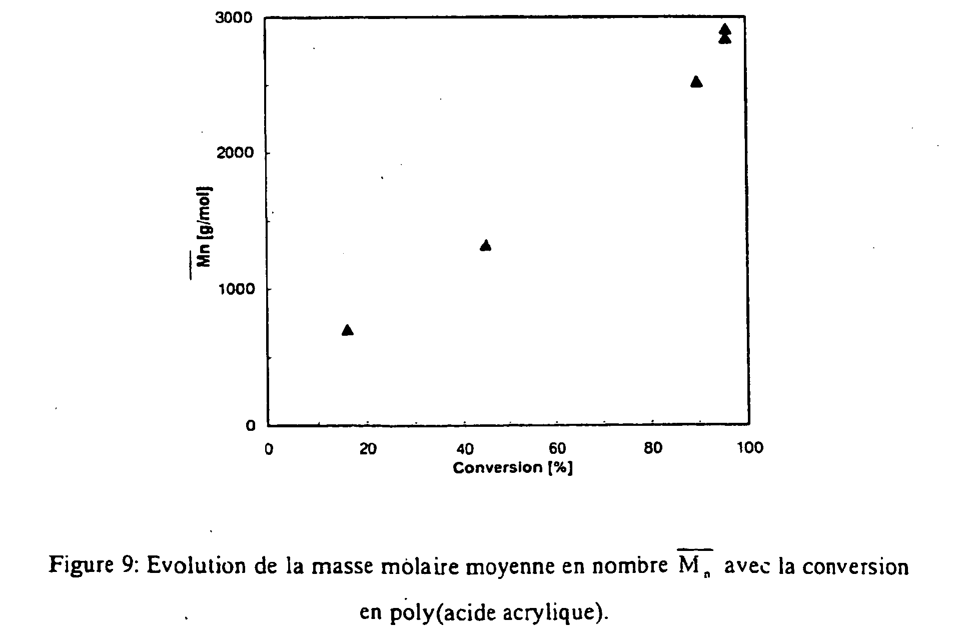

### Essai n° 41 :

Cet exemple illustre un domaine hors de l'invention et est relatif à la polymérisation de l'acide acrylique en absence d'agent de transfert.

Dans ce but, 5,0 g d'acide acrylique sont ajoutés à 15 g d'éthanol absolu (Rectapur^{™}, de Prolabo sous la référence 20 820.327). Après dégazage, 39 mg de diacide 4,4'-azobis-4-cyanovalérique sont ajoutés. Après dix minutes de polymérisation, le taux de conversion est supérieur à 99 %. Le polymère, extrêmement visqueux, forme un gel.qui se dissout partiellement dans l'eau. La masse molaire moyenne en nombre du polymère au bout de 2 heures est de 33100 g/mol, avec un indice de polymolécularité expérimental de 4.3 (présence d'insolubles).

Cette polymérisation n'obéit pas au critère a) du procédé selon l'invention.

### Essai n° 42

Cet essai illustre l'invention et est relatif à la copolymérisation de l'acide acrylique avec l'acrylamide en présence du composé N.

Pour ce faire, dans un récipient en verre contenant 112,5 g d'éthanol (Vol RP Normapur™ de Prolabo sous la référence 20 823.293), on dissout 33,8 g d'acide acrylique et 3,75 g d'acrylamide auxquels sont ajoutés 1,51 g du composé N et 0,15 g de diacide 4,4'-azobis-4-cyanovalérique. Après 3 heures de polymérisation à reflux, on obtient un taux de conversion égal à 94 % pour l'acide acrylique et à 100 % pour l'acrylamide.

La masse molaire moyenne en nombre du copolymère est de 3000 g/mol, avec un indice de polymolécularité expérimental de 1,61.

Cette polymérisation obéit aux quatre critères a), b), c) et d) du procédé selon l'invention.

### Essai n° 43

Cet essai illustre l'invention et est relatif à la copolymérisation de l'acide acrylique avec l'acide méthacrylique en présence du composé N.

Pour ce faire, dans un récipient en verre contenant 112,5 g d'éthanol (Vol RP Normapur™ de Prolabo sous la référence 20 823.293), on dissout 33,8 g d'acide acrylique et 4,54 g d'acide méthacrylique auxquels sont ajoutés 1,51 g du composé N et 0,15 g de diacide 4,4'-azobis-4-cyanovalérique. Après 3 heures de polymérisation à reflux, on obtient un taux de conversion égal à 100 % pour l'acide acrylique et l'acide méthacrylique.

La masse molaire moyenne en nombre du copolymère est de 3300 g/mol, avec un indice de polymolécularité expérimental de 1,86.

Cette polymérisation obéit aux quatre critères a), b), c) et d) du procédé selon l'invention.

### Essai n° 44

Cet essai illustre l'invention et est relatif à la copolymérisation de l'acide acrylique avec le chlorure de méthacrylate de triméthyl ammonium éthyl (MADQUAT) en présence du composé N.

Pour ce faire, dans un récipient en verre contenant 112,5 g d'éthanol (Vol RP Normapur™ de Prolabo sous la référence 20 823.293), on dissout 33,8 g d'acide acrylique et 11,25 g de MADQUAT auxquels sont ajoutés 1,51 g du composé N et 0,15 g de diacide 4,4'-azobis-4-cyanovalérique. Après 3 heures de polymérisation à reflux, on obtient un taux de conversion égal à 95 % pour l'acide acrylique et à 100 % pour le MADQUAT.

La masse molaire moyenne en nombre du copolymère est de 3200 g/mol, avec un indice de polymolécularité expérimental de 1,7.

Cette polymérisation obéit aux quatre critères a), b), c) et d) du procédé selon l'invention.

### Essai n° 45

Cet essai illustre l'invention et est relatif à la copolymérisation de l'acide acrylique avec l'acide acrylamido-méthyl-propane sulfonique (AMPS) en présence du composé N.

Pour ce faire, dans un récipient en verre contenant 112,5 g d'éthanol (Vol RP Normapur™ de Prolabo sous la référence 20 823.293), on dissout 33,8 g d'acide acrylique et 10,2 g d'AMPS auxquels sont ajoutés 1,51 g du composé N et 0,15 g de diacide 4,4'-azobis-4-cyanovalérique. Après 3 heures de polymérisation à reflux, on obtient un taux de conversion égal à 99 % pour l'acide acrylique et à 95 % pour l'AMPS.

La masse molaire moyenne en nombre du copolymère est de 3550 g/mol, avec un indice de polymolécularité expérimental de 1,66.

Cette polymérisation obéit aux quatre critères a), b), c) et d) du procédé selon l'invention.

### EXEMPLE 3 :

Cet exemple illustre la mise en oeuvre des polymères obtenus selon l'invention comme agent d'aide au broyage de matière minérale et plus particulièrement de carbonate de calcium. Cet exemple illustre également l'obtention de suspension aqueuse de carbonate de calcium selon l'invention.

Il est également à noter que ces suspensions de carbonate de calcium selon l'invention sont affinées, fortement concentrées en matière minérale et facilement manipulables par l'utilisateur final c'est-à-dire facilement utilisables aussi bien pour le couchage du papier que pour la charge de masse du papier.

### Essai n° 46 :

Cet essai, qui illustre l'invention, met en oeuvre le polymère de l'essai n° 9.

### Essai n° 47 :

Cet essai, qui illustre l'invention, met en oeuvre le polymère de l'essai n° 30.

### Essai n° 48 :

Cet essai, qui illustre l'invention, met en oeuvre le polymère de l'essai n° 38.

### Essai n° 49 :

Cet essai, qui illustre l'invention, met en oeuvre le polymère de l'essai n° 36.

### Essai n° 50 :

Cet essai, qui illustre l'invention, met en oeuvre le polymère de l'essai n° 37.

### Essai n° 51 :

Cet essai, qui illustre l'invention, met en oeuvre un polymère identique à celui de l'essai n° 38 en masse molaire moyenne en nombre et en indice de polymolécularité mais qui se différencie par la neutralisation effectuée à 50% par l'ion magnésium et à 50 % par l'ion sodium au lieu d'une neutralisation à 100% par l'ion sodium comme l'est le polymère de l'essai n° 38.

Pour chaque essai, on a préparé une suspension aqueuse à partir de carbonate de calcium provenant du gisement d'Orgon (France), de diamètre moyen de l'ordre de 50 micromètres.

La suspension aqueuse a une concentration en matière sèche de 76 % en poids par rapport à la masse totale.

L'agent d'aide au broyage est introduit dans cette suspension selon les quantités indiquées dans le tableau ci-après, exprimées en pour cent en poids sec par rapport à la masse de carbonate de calcium sec à broyer.

La suspension circule dans un broyeur du type Dyno-Mill™ à cylindre fixe et impulseur tournant, dont le corps broyant est constitué par des billes de corindon de diamètre compris dans l'intervalle 0,6 millimètre à 1,0 millimètre.

Le volume total occupé par le corps broyant est de 1 150 centimètres cubes tandis que sa masse est de 2 900 g.

La chambre de broyage a un volume de 1 400 centimètres cubes.

La vitesse circonférentielle du broyeur est de 10 mètres par seconde.

La suspension de carbonate de calcium est recyclée à raison de 18 litres par heure.

La sortie du broyeur Dyno-Mill™ est munie d'un séparateur de mailles 200 microns permettant de séparer la suspension résultant du broyage et le corps broyant.

La température lors de chaque essai de broyage est maintenue à 60°C environ.

A la fin du broyage (Tₒ), on récupère dans un flacon un échantillon de la suspension pigmentaire. La granulométrie de cette suspension (% des particules inférieures à 1 micromètre) est mesurée à l'aide d'un granulomètre Sédigraph™ 5100 de la société Micromeritics.

La viscosité Brookfield™ de la suspension est mesurée à l'aide d'un viscosimètre Brookfield™ type RVT, à une température de 20°C et des vitesses de rotation de 10 tours par minute et 100 tours par minute avec le mobile adéquat.

Après un temps de repos de 8 jours dans le flacon, la viscosité de la suspension est mesurée par introduction dans le flacon non agité du mobile adéquat du viscosimètre Brookfield™ type RVT, à une température de 20°C et des vitesses de rotation de 10 tours par minute et 100 tours par minute (viscosité AVAG = avant agitation).

Les mêmes mesures de viscosité sont également effectuées une fois le flacon agité et constituent les résultats de viscosité APAG (après agitation).

Tous ces résultats expérimentaux sont consignés dans le tableau 7 suivant, qui de plus indiquent la consommation en pourcentage en poids d'agent d'aide au broyage utilisé pour obtenir la granulométrie indiquée :

| **ESSAI N°** | **AGENT D'AIDE AU BROYAGE** | | | **GRANULOMETRIE (% particules < 1µm)** | **VISCOSITE BROOKFIELD DE LA SUSPENSION (à 20 °c en mPa.s) 8** | | |
|---|---|---|---|---|---|---|---|
| | **polymère Essai n°** | **Mₙ** | **Consommation en agent en % sec/sec** | | **TO 10 T/mln - 100 T/mln** | **jours AVAG 10 T/mLn . 10 T/min** | **8 jours APAG 10 T/min - 100 T/min** |
| 46 | 9 | 2930 | 1.06 | 80 | 1968-691 | 26000-3760 | 6708-1776 |
| 47 | 30 | 2250 | 0.92 | 80 | 2585-870 | 29423-3858 | 6835-1795 |
| 48 | 38 | 3200 | 0,87 | 80 | 8414-2207 | 38863-10270 | 34078-9625 |
| 49 | 36 | 4200 | 0,96 | 80 | 7557-1921 | 47846-7093 | 29813-5231 |
| 50 | 37 | 5090 | 1.04 | 80 | 13070-3127 | 54117-6639 | 41260-6324 |
| 51 | 51 | 3200 | 1,23 | 80 | 3755-998 | 6024-1467 | 3209-862 |

| | | | | | | | |
|---|---|---|---|---|---|---|---|
| AVAG : Mesure de la viscosité avant agitation de la suspension APAG : Mesure de la viscosité après agitation de la suspension | | | | | | | |

La lecture des résultats du tableau 7 montre qu'il est possible d'utiliser les polymères selon l'invention comme agent d'aide au broyage de matières minérales en suspension aqueuse, et en particulier de carbonate de calcium naturel, tout comme il est possible d'obtenir des suspensions aqueuses de carbonate de calcium naturel contenant le polymère selon l'invention.

### EXEMPLE 4 :

Cet exemple concerne la mise en évidence de l'utilisation des polymères selon l'invention comme agent dispersant du kaolin. Cet exemple illustre également l'obtention de suspension aqueuse de kaolin selon l'invention.

Dans ce but, on réalise des courbes de défloculation du kaolin (kaolin SPS de Imerys) à tester par introduction de quantité croissante de l'agent à tester dans la suspension aqueuse à 66 % en poids sec de kaolin.

### Essai n° 52 :

Cet essai illustre l'invention et met en oeuvre le polymère selon l'invention de l'essai n° 30.

### Essai n° 53 :

Cet essai illustre l'invention et met en oeuvre le polymère selon l'invention de l'essai n° 9.

Tous les résultats expérimentaux de viscosité Brookfield™ à 10 tr/min et 100 tr/min en fonction du taux de polymère utilisé, mesurés à l'aide d'un viscosimètre Brookfield™ type RVT, à une température de 20°C et des vitesses de rotation de 10 tours par minute et 100 tours par minute avec le mobile adéquat, sont consignés respectivement dans les tableaux 8 et 9 suivants :

**TABLEAU 8**

| Taux de dispersant (%) | Viscosités Brookfield (mPa.s) | |
|---|---|---|
| | 10 tr/min | 100 tr/min |
| 0,15 | 2860 | 600 |
| 0,17 | 940 | 320 |
| 0,19 | 750 | 260 |
| 0,22 | 690 | 240 |
| 0,24 | 700 | 240 |
| 0,26 | 700 | 240 |
| 0,28 | 800 | 250 |
| 0,30 | 830 | 255 |
| 0,32 | 900 | 270 |
| 0,34 | 1020 | 290 |
| 0,36 | 1230 | 320 |

**TABLEAU 9**

| Taux de dispersant (%) | Viscosités Brookfield (mPa.s) | |
|---|---|---|
| | 10 tr/min | 100 tr/min |
| 0,13 | 7400 | 1200 |
| 0,16 | 2100 | 690 |
| 0,19. | 1020 | 340 |
| 0,21 | 850 | 240 |
| 0,22 | 980 | 305 |
| 0,24 | 1000 | 305 |
| 0,27 | 1110 | 320 |
| 0,30 | 1210 | 345 |
| 0,33 | 1770 | 430 |

La lecture des résultats des tableaux 8 et 9 montre qu'il est possible d'utiliser les polymères selon l'invention comme agent dispersant ou de défloculation de matières minérales en suspension aqueuse, et en particulier de kaolin.

### EXEMPLE 5 :

Cet exemple concerne la mise en évidence de l'utilisation des polymères selon l'invention comme agent dispersant du carbonate de calcium précipité (PCC). Cet exemple illustre également l'obtention de suspension aqueuse de carbonate de calcium précipité selon l'invention.

Dans ce but, on réalise des courbes de défloculation du PCC (Socal P3 de Solvay) à tester par introduction de quantité croissante de l'agent à tester dans la suspension aqueuse à 68 % en poids sec de PCC.

### Essai n° 54 :

Cet essai illustre l'invention et met en oeuvre le polymère selon l'invention de l'essai n° 30.

### Essai n° 55 :

Cet essai illustre l'invention et met en oeuvre le polymère selon l'invention de l'essai n° 9.

Tous les résultats expérimentaux de viscosité Brookfield™ à 10 tr/min et 100 tr/min en fonction du taux de polymère utilisé, mesurés à l'aide d'un viscosimètre Brookfield^{™} type RVT, à une température de 20°C et des vitesses de rotation de 10 tours par minute et 100 tours par minute avec le mobile adéquat, sont consignés respectivement dans les tableaux 10 et 11 suivants :

**TABLEAU 10**

| Taux de dispersant (%) | Viscosités Brookfield (mPa.s) | |
|---|---|---|
| | 10 tr/min | 100 tr/min |
| 0,25 | 31500 | 7050 |
| 0,35 | 9640 | 1400 |
| 0,40 | 6000 | 950 |
| 0,45 | 5200 | 840 |
| 0,50 | 5040 | 810 |
| 0,55 | 3880 | 680 |
| 0,60 | 3700 | 640 |
| 0,65 | 3500 | 610 |
| 0,70 | 3200 | 580 |
| 0,75 | 3200 | 575 |
| 0,80 | 3100 | 550 |
| 0,85 | 3100 | 550 |
| 0,90 | 3100 | 575 |
| 0,95 | 3100 | 590 |
| 1,0 | 3200 | 600 |

**TABLEAU 11**

| Taux de dispersant (%) | Viscosités Brookfield (mPa.s) | |
|---|---|---|
| | 10 tr/min | 100 tr/min |
| 0,25 | 20800 | 3200 |
| 0,30 | 13400 | 2340 |
| 0,35 | 5200 | 870 |
| 0,40 | 3700 | . 660 |
| 0,45 | 3350 | 600 |
| 0,50 | 2880 | 540 |
| 0,55 | 2690 | 530 |
| 0,60 | 2600 | 530 |
| 0,65 | 2500 | 520 |
| 0,7 | 2600 | 550 |
| 0,75 | 2700 | 570 |
| 0,80 | 2800 | 590 |
| 0,85 | 2910 | 610 |
| 0,9 | 3040 | 620 |

La lecture des résultats des tableaux 10 et 11 montre qu'il est possible d'utiliser les polymères selon l'invention comme agent dispersant ou de défloculation de matières minérales en suspension aqueuse, et en particulier du carbonate de calcium précipité.

### EXEMPLE 6 :

Cet exemple concerne la mise en évidence de l'utilisation des polymères selon l'invention comme agent dispersant du dioxyde de titane. Cet exemple illustre également l'obtention de suspension aqueuse de dioxyde de titane selon l'invention.

Dans ce but, on réalise des courbes de défloculation du dioxyde de titane (RHD2 de Elementis) à tester par introduction de quantité croissante de l'agent à tester dans la suspension aqueuse à 75 % en poids sec de dioxyde de titane.

### Essai n° 56 :

Cet essai illustre l'invention et met en oeuvre le polymère selon l'invention de l'essai n° 30.

### Essai n° 57 :

Cet essai illustre l'invention et met en oeuvre le polymère selon l'invention de l'essai n° 9.

Tous les résultats expérimentaux de viscosité Brookfield™ à 10 tr/min et 100 tr/min en fonction du taux de polymère utilisé, mesurés à l'aide d'un viscosimètre Brookfield™ type RVT, à une température de 20°C et des vitesses de rotation de 10 tours par minute et 100 tours par minute avec le mobile adéquat, sont consignés respectivement dans les tableaux 12 et 13 suivants :

**TABLEAU 12**

| % sec de polymère | Viscosité Brookfield (mPa.s) | |
|---|---|---|
| | 10 tr/min | 100 tr/min |
| 0,25 | 4400 | 630 |
| 0,3 | 1100 | 280 |
| 0,4 | 900 | 220 |
| 0,5 | 1300 | 280 |
| 0,6 | 1700 | 340 |
| 0,8 | 2400 | 430 |
| 1 | 3700 | 620 |

**TABLEAU 13**

| % sec de polymère | Viscosité Brookfield (mPa.s) | |
|---|---|---|
| | 10 tr/min | 100 tr/min |
| 0,25 | 1300 | 300 |
| 0,3 | 500 | 170 |
| 0,4 | 800 | 200 |
| 0,5 | 1400 | 300 |
| 0,6 | 1900 | 360 |
| 0,8 | 2800 | 500 |
| 1 | 4700 | 840 |

La lecture des résultats des tableaux 12 et 13 montre qu'il est possible d'utiliser les polymères selon l'invention comme agent dispersant ou de défloculation de matières minérales en suspension aqueuse, et en particulier du dioxyde de titane.

### EXEMPLE 7 :

Cet exemple concerne mise en évidence de l'utilisation des polymères selon l'invention agent de dispersion permettant la mise en suspension aqueuse de carbonate de calcium naturel broyé sans dispersant à une granulométrie dont 73 % des particules ont un diamètre inférieur à un micromètre déterminé par la mesure Sédigraph 5100 de la société Micromeritics et issu d'une reconcentration mécanique du type centrifugation consécutive à ce broyage en voie humide à faible concentration en matière sèche et sans dispersant.

Ce carbonate de calcium naturel est un marbre.

Pour chaque essai, on a préparé la suspension aqueuse de marbre par introduction, dans le gâteau issu de la centrifugation, de 0,525 % en poids sec d'agent de dispersion à tester par rapport au poids sec dudit gâteau à mettre en suspension et de 0,225 % en poids d'acide phosphorique de manière à obtenir une suspension aqueuse de carbonate de calcium à une concentration en matière sèche égale à 72 %.

Après 20 minutes d'agitation, on récupère dans un flacon un échantillon de la suspension de carbonate de calcium obtenue et on en mesure la viscosité Brookfield'" (Viscosité T = 0) à l'aide d'un viscosimètre Brookfield™ type RVT, à une température de 25°C et une vitesse de rotation de 10 tours et 100 tours par minute avec le mobile adéquat.

Après un temps de 8 jours dans le flacon, la viscosité Brookfield™ de la suspension est mesurée par introduction, dans le flacon non agité, du mobile adéquat du viscosimètre Brookfield™ type RVT, à une température de 25°C et une vitesse de rotation de 10 et 100 tours par minute (viscosité AVAG = viscosité Brookfield™ avant agitation).

Le flacon est ensuite fortement agité et soumis à la détermination de la viscosité Brookfield™ de la suspension à une température de 25°C et une vitesse de rotation de 10 et 100 tours par minute (viscosité APAG = viscosité Brookfield™ après agitation) à l'aide du mobile adéquat du viscosimètre Brookfield™ type RVT.

Les différents polymères testés sont :

### Essai n° 58 :

Pour cet essai, qui illustre l'invention, le polymère de l'essai n° 37.

### Essai n° 59 :

Pour cet essai, qui illustre l'invention, le polymère de l'essai n° 36.

### Essai n° 60 :

Pour cet essai, qui illustre l'invention, le polymère de l'essai n° 38.

### Essai n° 61 :

Pour cet essai, qui illustre l'invention, le polymère de l'essai n° 31.

### Essai n° 62 :

Pour cet essai, qui illustre l'invention, le polymère de l'essai n° 32.

### Essai n° 63 :

Pour cet essai, qui illustre l'invention, le polymère de l'essai n° 33.

Tous les résultats expérimentaux sont consignés dans le tableau 14 suivant.

| **ESSAI N°** | **Polymère Essai n°** | **Mₙ** | **VISCOSITE BROOKFIELD (mPa.s)** | | | | | |
|---|---|---|---|---|---|---|---|---|
| | | | **Viscosité T=0** | | **AVAG** | | **APAG** | |
| | | | **10 t/min** | **100 t/min** | **10 t/min** | **100 t/min** | 10 t/min | 100 Umin |
| 58 | 37 | 5090 | 600 | 262 | 1210 | 471 | 560 | 253 |
| 59 | 36 | 4200 | 810 | 326 | 1170 | 416 | 700 | 263 |
| 60 | 38 | 3200 | 1180 | 367 | 1760 | 486 | 1910 | 429 |
| 61 | 31 | 3200 | 1410 | 420 | 950 | 527 | 1370 | 387 |
| 62 | 32 | 4000 | 940 | 336 | 1420 | 477 | 480 | 244 |
| 63 | 33 | 4800 | 580 | 294 | 540 | 475 | 470 | 247 |

| | | | | | | | | |
|---|---|---|---|---|---|---|---|---|
| AVAG : Mesure de la viscosité avant agitation de la suspension APAG : Mesure de la viscosité après agitation de la suspension | | | | | | | | |

La lecture des résultats du tableau 14 permet de voir qu'il est possible d'utiliser les polymères selon l'invention comme agent dispersant de carbonate de calcium naturel.

### EXEMPLE 8 :

Cet exemple concerne l'utilisation des polymères selon l'invention dans une peinture aqueuse mate intérieure. Dans ce but, on évalue l'efficacité dispersante des polymères selon l'invention contenus dans les suspensions aqueuses de matériaux minéraux selon l'invention mises en oeuvre dans une formulation peinture mate intérieure.

Ainsi, pour les essais n° 64 et 65, nous rajoutons sous agitation 0,16 % en poids sec du dispersant testé, par rapport au poids total d'une même formulation peinture aqueuse mate, dans un récipient contenant déjà 176,3 g d'eau et 1 g d'ammoniaque à 28 %. Après quelques secondes d'agitation suivant l'introduction du polymère à tester dans l'eau ammoniaquée, on introduit successivement les autres constituants de la dite peinture aqueuse mate qui sont :

| | |
|---|---|
| 2,3 g | d'un biocide commercialisé par la société TROY sous le nom de MERGAL™ K6N |
| 2,3 g | d'un antimousse commercialisé par la société TEGO sous le nom de TEGO 1488 |
| 90 g | d'oxyde de titane rutile commercialisé par la société MILLENIUM sous le nom TIONA RL68 |
| 272 g | de carbonate de calcium naturel commercialisé par la société OMYA sous le nom DURCAL™ 5. |
| 223 g | de carbonate de calcium naturel commercialisé par la société OMYA sous le nom HYDROCARB™ |
| 130 g | d'un liant styrène-acrylique en dispersion commercialisé par la société CLARIANT sous le nom de MOWILITH LDM 1871 |
| 22 g | d'un épaississant commercialisé par la société COATEX sous le nom COAPUR™ 5535 |
| qsp 1000 g en eau. | |

### Les divers essais sont :

### Essai n° 64 :

Cet essai illustre l'invention et met en oeuvre le polymère selon l'invention de l'essai n° 30.

### Essai n° 65 :

Cet essai illustre l'invention et met en oeuvre le polymère selon l'invention de l'essai n° 9.

Pour chacun de ces essais, après quelques minutes d'agitation de la composition aqueuse ainsi réalisée, on mesure les viscosités Brookfield™ des différentes compositions à 25°C, à 10 tours par minute et 100 tours par minute à l'aide d'un viscosimètre Brookfield™ type RVT équipé du mobile adéquat.

La stabilité rhéologique dans le temps et en température des formulations est déterminée par la mesure des viscosités Brookfield™ à 10 tours par minute et 100 tours par minute à 25°C de ces formulations après un stockage sans agitation de 24 heures, d'une semaine et d'un mois à température ambiante.
Elle est également déterminée par la viscosité ICI, qui est la viscosité à haut gradient de vitesse de cisaillement (10000 s⁻¹) mesurée à l'aide d'un viscosimètre cone plan.

On mesure également la viscosité Stormer (KU) exprimée en Krebs Unit déterminée à l'aide d'un viscosimètre Stormer.

Tous les résultats sont rassemblés dans le tableau 15 suivant :

**TABLEAU 15**

| Essai n° | | 64 | 65 |
|---|---|---|---|
| **T = 24H** | ICI (P) | 2,2 | 2,2 |
| Viscosité Brookfield (mPa.s) | 10 tr/min | 20400 | 19100 |
| | 100 tr/min | 4300 | 4200 |
| Viscosité Stormer (K.U) | | 116 | 115 |
| **T =** 1 **sem.** | ICI (P) | 2,2 | 2,2 |
| Viscosité Brookfield (mPa.s) | 10 tr/min | 18200 | 17300 |
| | 100 tr/min | 4100 | 3900 |
| Viscosité Stormer (K.U) | | 117 | 114 |
| **T =** 1 **sem. 50°C** | ICI (P) | 2,2 | 2,1 |
| Viscosité Brookfield (mPa.s) | 10 tr/min | 20400 | 20100 |
| | 100 tr/min | 4300 | 4000 |
| Viscosité Stormer (K.U) | | 121 | 123 |
| **T =1 mois** | ICI (P) | 2,2 | 2,2 |
| Viscosité Brookfield (mPa.s) | 10 tr/min | 19100 | 18400 |
| | 100 tr/min | 4200 | 3800 |
| Viscosité Stormer (K.U) | | 118 | 115 |
| **T = 1 mois 50°C** | ICI (P) | 2,2 | 2,1 |
| Viscosité Brookfield (mPa.s) | 10 tr/min | 20800 | 20600 |
| | 100 tr/min | 4200 | 4100 |
| Viscosité Stormer (K.U) | | 123 | 126 |

La lecture du tableau 15 permet de constater que les polymères selon l'invention peuvent être utilisés dans le domaine de la peinture.

### EXEMPLE 9 :

Cet exemple concerne l'utilisation des polymères selon l'invention dans le domaine de la céramique.

Dans ce but, on évalue l'efficacité dispersante des polymères selon l'invention contenus dans les suspensions aqueuses d'argile selon l'invention mises en oeuvre dans le domaine de la céramique.

Pour ce faire et pour chacun des essais n° 66 à 68, 300 g d'argile standard pour barbotine sont introduits dans un bêcher en plastique de litre et muni d'une pâle d'agitation de 60 mm de diamètre. L'argile introduite est empâtée avec 122,5 g d'eau correspondant ainsi à une concentration en matière sèche de 71 %.

On rajoute alors 0,20 % en poids sec du dispersant testé, par rapport au poids sec d'argile, puis après 10 minutes d'agitation à une vitesse de 750 tours par minute, on mesure la viscosité de la barbotine par mesure du temps d'écoulement de la barbotine dans une pipette de 100 ml.
Il est à noter que pour l'essai témoin, la suspension est trop visqueuse et le mesure de viscosité impossible.

Après la mesure de cette viscosité, on introduit à nouveau dans le bêcher 0,031 % en poids sec du polymère testé, par rapport au poids sec d'argile, puis après les 10 minutes d'agitation à la même vitesse, on mesure la viscosité de la barbotine obtenue et ainsi de suite pour les ajouts successifs du polymère à tester.
Ces ajouts correspondent aux doses totales égales respectivement à 0,25 %, 0,275 %, 0,312 %, 0,347 %.

Les divers essais sont les suivants :

### Essai n° 66 :

Cet essai est un témoin et met en oeuvre un polyacrylate de sodium classique obtenu par un procédé de polymérisation classique

### Essai n° 67

Cet essai illustre l'invention et met en oeuvre le polymère selon l'invention de l'essai n° 39.

### Essai n° 68 :

Cet essai illustre l'invention et met en oeuvre le polymère selon l'invention de l'essai n° 31.

Tous les résultats expérimentaux sont consignés dans le tableau 16 qui suit.

**TABLEAU 16**

| | **TEMPS D'ECOULEMENT A LA PIPETTE (s)** | | |
|---|---|---|---|
| **ESSAI N°** | **Témoin 66** | **Invention 67** | **Invention 68** |
| 0.2 | - | 36 | 96 |
| 0,231 | 144,06 | 25 | 37,8 |
| 0.25 | 67,9 | 20,94 | 30,5 |
| 0,275 | 37,98 | 18,7 | 26,2. |
| 0,312 | 28,51 | 17,5 | 23,5 |
| 0,347 | 24,72 | 17,2 | 23,9 |

La lecture des résultats du tableau 16 montre que l'utilisation des polymères dans le domaine de la céramique est possible et que les barbotines ou suspensions d'argile selon l'invention sont meilleures que celle de l'art antérieur.

### EXEMPLE 10 :

Cet exemple concerne l'utilisation d'une suspension aqueuse de charge minérale selon l'invention dans le domaine du papier.

Il concerne plus particulièrement la détermination des différentes valeurs de viscosité Brookfield™ d'une sauce de couchage 100 % kaolin.

### Essai n° 69 :

Pour ce faire, on réalise une sauce de couchage illustrant l'invention par introduction, dans un bêcher de 500 ml, de 0,15 % en poids sec, par rapport au poids sec de kaolin, du polymère de l'essai n° 39 selon l'invention et de la quantité d'eau nécessaire pour obtenir un extrait sec final de 65 %.

On agite ensuite pendant 2 minutes puis on ajoute sous agitation 500 g de kaolin pulvérulent (kaolin SPS vendu par Imerys) en veillant à avoir un pH de l'ordre de 8,6 ± 0,2 par ajustement à la soude à 12,5%.

L'ajout terminé, l'agitation est maintenue pendant 15 minutes avant l'introduction de 12 % en poids sec, par rapport au poids sec de kaolin, d'un latex styrène-butadiène commercialisé par la société DOW sous le nom de DL 950.

Après 10 minutes d'agitation, la concentration en matière sèche de la sauce obtenue est ajustée à 65 %.

Les viscosités Brookfield™ sont alors déterminées à 10 et 100 tours par minute à 25°C à l'aide d'un viscosimètre Brookfield™ de type DV-1 équipé du mobile adéquat et ont pour valeur :
Viscosité Brookfield™ 10 t/min. = 900 mPa.s
Viscosité Brookfield™ 100 t/min. = 300 mPa.s.

La lecture de ces résultats montrent que les caractéristiques rhéologiques de la sauce de couchage selon l'invention permettent d'utiliser les suspensions aqueuses selon l'invention dans le domaine papetier et en particulier le couchage du papier.

## Revendications

1. Procédé pour l'homopolymérisation de l'acide acrylique et de ses sels ou de copolymérisation de l'acide acrylique avec un ou plusieurs monomères hydrosolubles, en solution, pour l'obtention de polymères non réticulés, **caractérisé en ce qu'**il utilise comme agent(s) de transfert des produits choisis parmi ceux définis par la formule générale :
R ------- X -------- C (S) -- S ------ R'
dans laquelle :
X=O ou S,
R représente un groupe permettant de stabiliser la fonction R--X par une liaison covalente de type C--X.
R' représente un groupe tel que la liaison R'---S soit une liaison de type C---S, et **en ce que** les paramètres de réaction et le choix des agents de transfert sont adaptés de telle sorte qu'il permet d'atteindre SIMULTANEMENT les critères ci-dessus
a) IP très faible pour des masses molaires Mₙ supérieures à 1 000, c'est-à-dire un IPₑₓₚ < 2 sans séparation physique ou physico-chimique et déterminé selon la méthode dite IP,
b) Absence de gel à la polymérisation même aux taux de conversion très élevés à savoir supérieurs à 90 %.
c) Taux de conversion très élevé (> 90 %) dans un temps de réaction raisonnable pour l'industrie, c'est-à-dire au bout de 4 heures à 100°C, de préférence au bout de 2 heures à 90°C et sous pression atmosphérique.
d) En utilisant une quantité d'agent(s) de transfert comprise entre 0,001 % à 20 % (molaires) et 0,01 % à 50 % (massiques), plus particulièrement entre 0,01 % et 10 % et encore plus particulièrement entre 0,01 % et 5 %.

2. Procédé selon la revendication 1 **caractérisé en ce que** le système solvant de la polymérisation est un système aqueux ou hydro-alcoolique, les alcools considérés possédant de 1 à 4 atomes de carbone inclus, et pouvant être primaires, secondaires ou tertiaires, de préférence primaires ou secondaires.

3. Procédé selon l'une des revendications 1 ou 2 **caractérisé en ce que** dans la formule générale des produits utilisés comme agent(s) de transfert,
R est un groupe choisi parmi les groupes aryles ou alkyles ou phényles, ces groupes pouvant être substitués par des radicaux du type hétérocyclique, alkylthio, alkoxycarbonyle, aryloxycarbonyle, carboxy, acyloxy, carbamoyle, cyano, dialkyl-ou diaryl-phosphonato, dialkyl- ou diarylphosphinato ou carboxyles ou carbonyles ou éthers ou alcools ou leurs mélanges et
R' est un groupe comprenant au moins un atome de carbone secondaire ou tertiaire lié à l'atome de soufre.

4. Procédé selon l'une des revendications 1 à 3, **caractérisé en ce que** dans la formule générale des produits utilisés comme agent(s) de transfert,
si X = O,
R est un groupe aryle ou phényle ou phényle portant un ou plusieurs groupes esters, éthers, acides, alcools, amines, sulfates, sulfonates, phosphates, phosphonates ou cétones,
R' est un groupe attaché à l'atome de soufre par un carbone secondaire ou tertiaire dont l'un au moins des substituants est un groupe phényle ou carbonyle.
si X = S,
R = R'
avec R' un groupe attaché à l'atome de soufre par un carbone secondaire ou tertiaire dont l'un au moins des substituants est un groupe phényle ou carbonyle.

5. Procédé selon l'une des revendications 1 à 4, **caractérisé en ce que** les produits utilisés comme agents de transfert sont choisis parmi

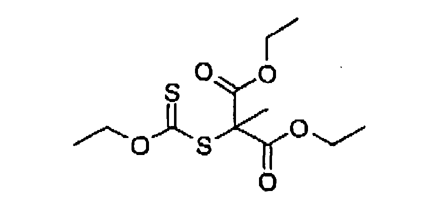

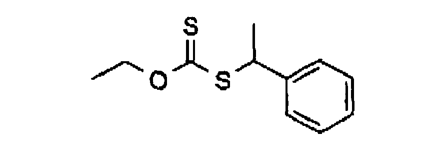

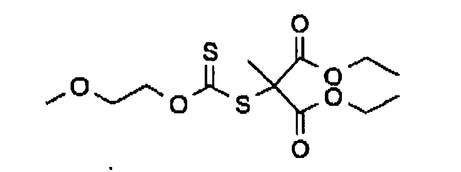

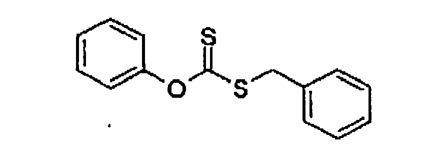

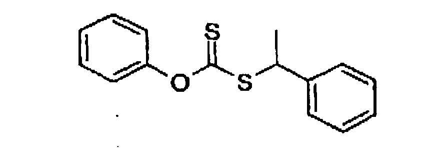

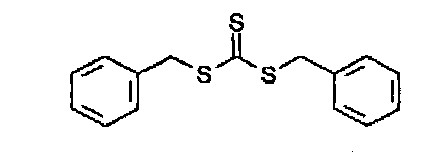

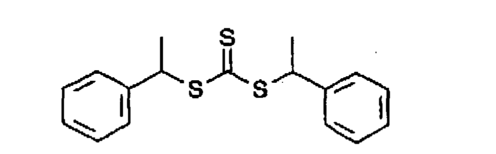

6. Procédé selon l'une des revendications 1. à 5, **caractérisé en ce que** les produits utilisés comme agents de transfert sont Choisis parmi

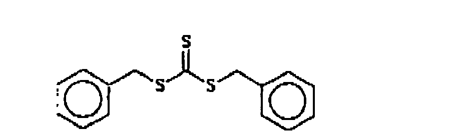

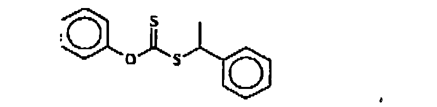

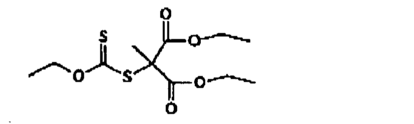

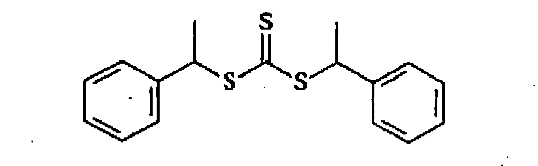

7. Procédé selon la revendication 1 **caractérisé en ce qu'**un cinquième critère soit également simultanément atteint à savoir que les masses molaires en nombre augmentent de manière strictement monotone lorsque l'avancement de la réaction augmente.

8. Procédé selon la revendication 7 **caractérisé en ce que** les produits utilisés comme agents de transfert sont choisis parmi

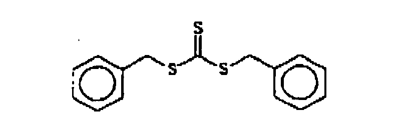

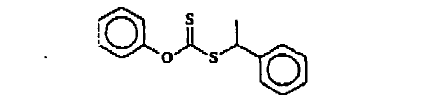

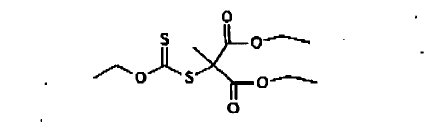

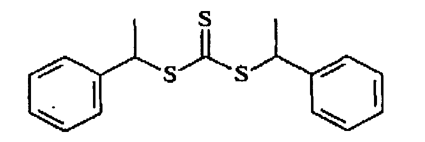

9. Procédé selon l'une quelconque des revendications 1 à 8 **caractérisé en ce que** l'on obtient des masses molaires Mₙ de l'ordre de 1000 à 1 million (1M) de Dalton, de préférence de 2000 à 1M, de préférence de 2000 à 500 000, de préférence de 2000 à 300 000, de préférence de 2000 à 50 000, de préférence de 2000 à 30 000, et de préférence de 2000 à 15 000 Dalton,

10. Procédé selon l'une quelconque des revendications 1 à 9 **caractérisé en ce que** les limites de quantité d'agent de transfert sont fixées de telle façon que le rapport molaire d'agent de transfert à monomère soit compris entre 0,001 % et 20 % et le rapport massique d'agent de transfert à monomère soit compris entre 0,01 et 50 %.

11. Procédé selon la revendication 10 **caractérisé en ce que** le rapport molaire d'agent de transfert à monomère est compris entre 0,01 % et 10 % et le rapport massique d'agent de transfert à monomère est compris entre 0,01 et 10 %.

12. Procédé selon la revendication 11, **caractérisé en ce que** le rapport molaire d'agent de transfert à monomère est compris entre 0,1 % et 5 % et le rapport massique d'agent de transfert à monomère est compris entre 0,01 et 5 %.

13. Procédé selon l'une quelconque des revendication 8 à 10 **caractérisé en ce que** le rapport molaire d'agent de transfert à monomère est de 2 % et le rapport massique d'agent de transfert à monomère est compris entre 0,01 et 5 %, préférentiellement entre 0,5 % et 5 %.

14. Procédé selon l'une quelconque des revendications 1 à 13 **caractérisé en ce que** le ou les monomères copolymérisés hydrosolubles sont choisis parmi l'acide méthacrylique, l'acide itaconique, maléique, fumarique, l'acide 2-acrylmnido-2- ' méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisé, l'acide allylsulfonique, l'acide méthallylsulfonique, l'acide allyloxybenzène sulfonique, l'acide méthallyloxybenzène sulfonique, l'acide 2-hydroky-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique ainsi que tous leurs sels, l'acide vinyl sulfonique, le méthallylsulfonate de sodium, l'acrylate ou méthacrylate de sulfopropyle, le sulfométhylacrylamide, le sulfométhylméthacrilamide ou encore parmi l'acrylamide, le methylacrylamide, le n-méthylolacrylamide, le n-acryloylmorpholine, le méthacrylate d'éthylène glycol, l'acrylate d'éthylène glycol, le méthacrylate de propylène glycol, l'acrylate de propylène glycol, l'acide propène phosphonique, le phosphate d'acrylate ou méthacrylate d'éthylène ou propylène glycol ou bien encore parmi la vinylpyrrolidone, le méthacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyidiallylchlorure d'ammonium, ainsi que leurs mélanges.

15. Utilisation d'agents de transfert pour la polymérisation en solution de l'acide acrylique, visant à obtenir un IPₑₓₚ < 2, **caractérisés en ce que** ils sont utilisés dans le procédé selon l'une quelconque des revendications 1 à 14, et sont définis par la formule générale :
R ---- X -------- C (S) ---S ---R'
dans laquelle
X = O ou S,
R représente un groupe permettant de stabiliser la fonction R---X par une liaison covalente de type C---X,
R' représente un groupe tel que la liaison R'--S soit une liaison de type C---S, et **en ce que en ce que** les paramètres de réaction et le choix des agents de transfert sont adaptés de telle sorte qu'il permet d'atteindre SIMULTANEMENT les deux critères ci-dessous :
a) IP, très faible pour des masses molaires Mₐ supérieures à 1 000, c'est-à-dire un IPₑₓₚ < 2 sans séparation physique ou physico-chimique et déterminé selon la méthode dite IP,
b) Absence de gel à la polymérisation même aux taux de conversion très élevés à savoir supérieurs à 90 %.

16. Utilisation d'agents de transfert selon la revendication 15 **caractérisée en ce que** dans leur formule générale
R est un groupe choisi parmi les groupes aryles ou alkyles ou phényles, ces groupes pouvant être substitués par des radicaux du type hétérocyclique, alkylthio, alkoxycarbonyle, aryloxycarbonyle, carboxy, acyloxy, carbamoyle, cyano, dialkyl-ou diaryl-phosphonato, dialkyl- ou diarylphosphinato ou carboxyles ou carbonyles ou éthers ou alcools ou leurs mélanges et
R' est un groupe comprenant au moins un atome de carbone secondaire ou tertiaire lié à l'atome de soufre.

17. Utilisation d'agents de transfert selon la revendication 16 **caractérisée en ce que** dans leur formule générale
si X = O,
R est un groupe aryle ou phényle ou phényle portant un ou plusieurs groupes esters, éthers, acides, alcools, amines, sulfates, sulfonates, phosphates, phosphonates ou cétones,
R' est un groupe attaché à l'atome de soufre par un carbone secondaire ou tertiaire dont l'un au moins des substituants est un groupe phényle ou carbonyle,
si X = S,
R = R'
avec R' un groupe attaché à l'atome de soufre par un carbone secondaire ou tertiaire dont l'un au moins des substituants est un groupe phényle ou carbonyle.

18. Utilisation d'agents de transfert selon la revendication 17 **caractérisée en ce que** lesdits agents de transfert sont choisis parmi

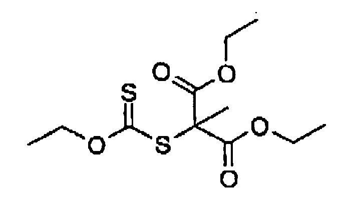

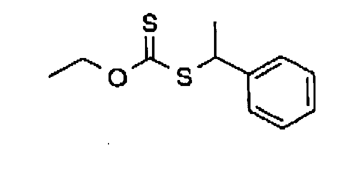

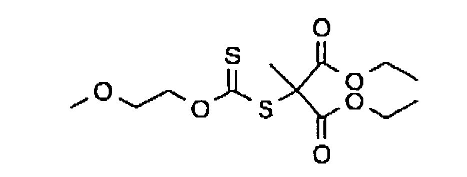

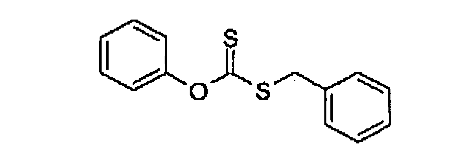

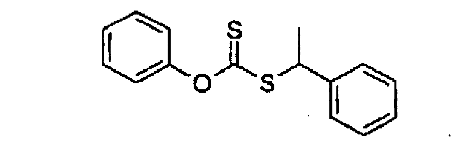

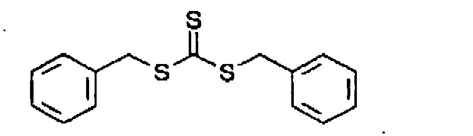

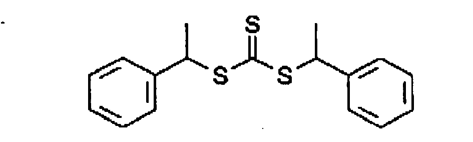

19. Utilisation d'agents de transfert selon la revendication 18 **caractérisée en ce que** lesdits agents de transfert sont choisis parmi

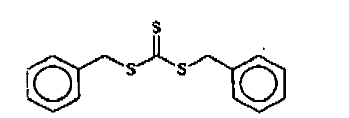

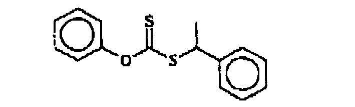

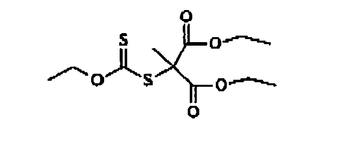

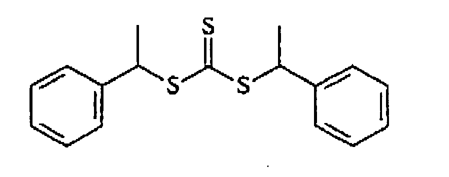

20. Utilisation d'agents de transfert selon la revendication 19, **caractérisée en ce que** les paramètres de réaction et le choix des agents de transfert sont adaptés de telle sorte qu'il permet d'atteindre SIMULTANEMENT les quatre critères ci-dessous :
a) IP, très faible pour des masses molaires Mₙ supérieures à 1000, c'est-à-dire un IPₑₓₚ < 2 sans séparation physique ou physieo-chimique et déterminé selon la méthode dite IP,
b) Absence de gel à la polymérisation même aux taux de conversion très élevés à savoir supérieurs à 90 %.
c) Taux de conversion très élevé (> 90 %) dans un temps de réaction raisonnable pour l'industrie, c'est-à-dire au bout de 4 heures à 100°C, de préférence au bout de 2 heures à 90°C et sous pression atmosphérique.
d) En utilisant une quantité d'agent(s) de transfert comprise entre 0,001 % à 20 % (molaires) et 0,01 % à 50 % (massiques), plus particulièrement entre 0,01 % et 10 % et encore plus particulièrement entre 0,01 % et 5 %.

21. Utilisation d'agents de transfert selon la revendication 20, **caractérisée en ce que** qu'un cinquième critère soit également simultanément atteint à savoir que les masses molaires en nombre augmentent de manière strictement monotone lorsque l'avancement de la réaction augmente.

22. Utilisation d'agents de transfert selon la revendication 21, **caractérisée en ce que** lesdits agents de transfert sont choisis parmi

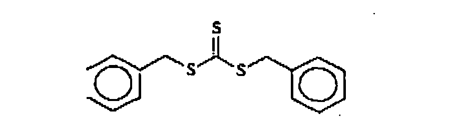

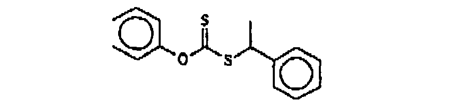

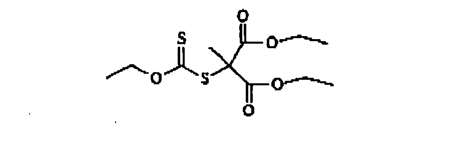

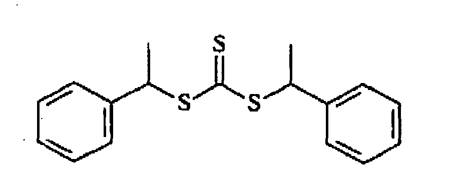

23. Utilisation d'agents de transfert selon l'une quelconque des revendications 19 à 22, **caractérisée en ce que** le ou les monomères copolymérisés hydrosolubles sont choisis parmi l'acide méthacrylique, l'acide itaconique, maléique, fumarique, l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisée, l'acide allylsulfonique, l'acide methallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique ainsi que tous leurs sels, l'acide vinyl sulfonique, le méthallylsulfonate de sodium, l'acrylate ou méthacrylate de sulfopropyle, le sulfométhylacrylalnide, le sulfométhylmêthacrylamide ou encore parmi l'acrylamide, le méthylacrylamide, le n-méthylolacrylamide, le n-acryloylmorpholine, le méthacrylate d'éthylène glycol, l'acrylate d'éthylène glycol, le méthacrylate de propylène glycol, l'acrylate de propylène glycol, l'acide propène phosphonique, le phosphate d'acrylate ou méthacrylate d'éthylène ou propylène glycol ou bien encore parmi la vinylpyrrolidone, le méthacrylamido propyl triméthyl ammonium chlorure ou sulfate, le méthacrylate de triméthyl ammonium éthyl chlorure ou sulfate, ainsi que leurs homologues en acrylate et en acrylamide quaternisés ou non et/ou le diméthyldiallylchlorure d'ammonium, ainsi que leurs mélanges.

24. Polymère d'acide acrylique et de ses sels, **caractérisé en ce qu'**il est obtenu par le procédé selon l'une quelconque des revendications 1 à 14 ou à l'aide de l'utilisation d'un agent de transfert selon l'une quelconque des revendications 15 à 23.

25. Applications des polymères de la revendication 24 dans le domaine papetier en particulier dans le couchage du papier et la charge de masse du papier, pétrolier, de la peinture, du traitement des eaux, de la détergence, de la céramique, des ciments ou des liants hydrauliques, des travaux publics, des encres et des vernis, de l'encollage des textiles ou encore du finissage du cuir, et plus particulièrement comme dispersant et/ou agent d'aide au broyage de matières minérales telles que le carbonate de calcium naturel, le carbonate de calcium précipité, le kaolin, le dioxyde de titane ou les argiles.

26. Suspension aqueuse de charges minérales **caractérisée en ce qu'**elle contient le polymère selon la revendication 24 et plus particulièrement **en ce qu'**elle contient de 0,05 % à 5 % en poids sec dudit polymère par rapport au poids sec total des charges minérales.

27. Suspension aqueuse de charges minérales selon la revendication 26 **caractérisée en ce que** la charge minérale est choisie parmi le carbonate de calcium naturel tel que la calcite, la craie ou encore le marbre, le carbonate de calcium synthétique encore appelé carbonate de calcium précipité, les dolomies, l'hydroxyde de magnésium, le kaolin, le talc, le gypse, l'oxyde de titane, ou encore l'hydroxyde d'aluminium.

28. Papier fabriqué et/ou couché **caractérisé en ce qu'**il contient la suspension aqueuse de charges minérales selon l'une quelconque des revendications 26 ou 27.

29. Formulation de peinture **caractérisée en ce qu'**elle contient la suspension aqueuse de charges minérales selon l'une quelconque des revendications 26 ou 27.

30. Boue de forage **caractérisée en ce qu'**elle contient la suspension aqueuse de charges minérales selon l'une quelconque des revendications 26 ou 27.

## Claims

1. Method for the homopolymerisation of acrylic acid and of the salts thereof, or the copolymerisation of acrylic acid with one or more water-soluble monomers, in solution, for obtaining non cross-linked polymers, **characterised in that**, as a transfer agent or agents, it uses products chosen from amongst those defined by the general formula:
R-------X-------C(S)------S-------R'
in which:
X = O or S,
R represents a group enabling the function R---X to be stabilized by a covalent bond of the C---X type,
R' represents a group such that the R'---S bond is a bond of the C---S type, and **in that** the reaction parameters and the choice of the transfer agents are adapted so that it is made possible to SIMULTANEOUSLY achieve the following criteria:
a) very low IPᵥ for molar masses Mₙ greater than 1000, i.e., an IPₑₓₚ < 2 without physical or physico-chemical separation and determined according to the so-called IP method,
b) absence of gel upon polymerisation even at very high conversion rates, namely greater than 90%.
c) very high conversion rate (> 90%) in a reasonable reaction time for industry, i.e., after 4 hours at 100°C, preferably after 2 hours at 90°C and at atmospheric pressure,
d) using a quantity of transfer agent or agents of between 0.001% to 20% (molar) and 0.01% to 50% (by weight), more particularly between 0.01% and 10% and even more particularly between 0.01% and 5%.

2. Method of claim 1, **characterised in that** the polymerisation solvent system is an aqueous or water-alcohol system, the alcohols in question having 1 to 4 carbon atoms inclusive, and being capable of being primary, secondary or tertiary, preferably primary or secondary.

3. Method as claimed in one of claims 1 or 2,
**characterised in that**, in the general formula of the products used as a transfer agent or agents,
R is a group chosen from amongst the aryl or alkyl or phenyl groups, these groups being substitutable by radicals of the heterocyclic, alkylthio, alkoxycarbonyl, aryloxycarbonyl, carboxy, acyloxy, carbamoyl, cyano, dialkyl- or diaryl-phosphonato, dialkyl- or diarylphosphinato type or carboxyls or carbonyls or ethers or alcohols or the mixtures thereof, and
R' is a group comprising at least one secondary or tertiary carbon atom bonded to the sulphur atom.

4. Method as claimed in one of claims 1 to 3, **characterised in that**, in the general formula of the products used as a transfer agent or agents,
if X = 0
R is an aryl or phenyl group or phenyl carrying one or more ester, ether, acid, alcohol, amine, sulphate, sulphonate, phosphate, phosphonate or ketone groups,
R' is a group attached to the sulphur atom by a secondary or tertiary carbon, at least one of the substituents of which is a phenyl or carbonyl group,
if X = S,
R = R'
with R' being a group attached to the sulphur atom by a secondary or tertiary carbon, at least one of the constituents of which is a phenyl or carbonyl group.

5. Method as claimed in one of claims 1 to 4, **characterised in that** the products used as a transfer agent or agents are chosen from amongst

6. Method as claimed in one of claims 1 to 5, **characterised in that** the products used as a transfer agent or agents are chosen from amongst

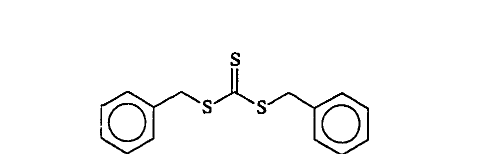

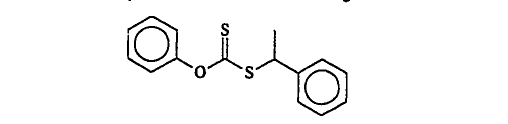

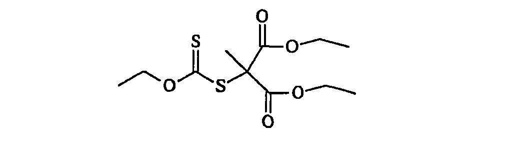

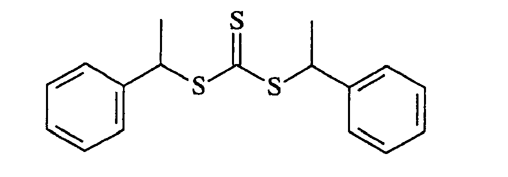

7. Method of claim 1, **characterised in that** a fifth criterion is likewise simultaneously achieved, namely that the molar masses by number increase strictly monotonically when the degree of advancement of the reaction increases.

8. Method of claim 7, **characterised in that** the products used as transfer agents are chosen from amongst

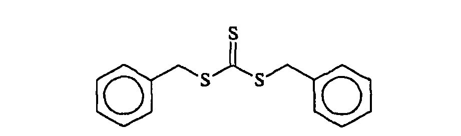

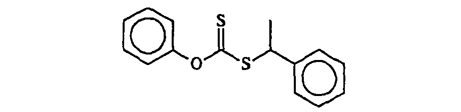

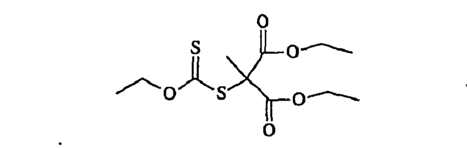

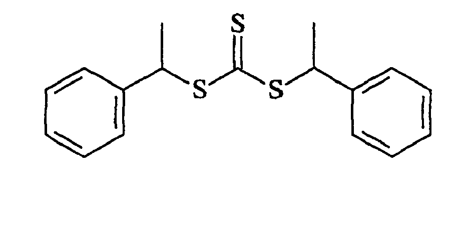

9. Method as claimed in any of claims 1 to 8, **characterised in that** molar masses Mₙ are obtained of the order of 1000 to 1 million (1M) daltons, preferably 2000 to 1M, preferably 2000 to 500,000, preferably 2000 to 300,000, preferably 2000 to 50,000, preferably 2000 to 30,000 and preferably 2000 to 15,000 daltons.

10. Method as claimed in any of claims 1 to 9, **characterised in that** the transfer agent quantity limits are fixed such that the molar ratio of transfer agent to monomer is between 0.001% and 20% and the ratio by weight of transfer agent to monomer is between 0.01 and 50%.

11. Method of claim 10, **characterised in that** the molar ratio of transfer agent to monomer is between 0.01% and 10% and the ratio by weight of transfer agent to monomer is between 0.01 and 10%.

12. Method of claim 11, **characterised in that** the molar ratio of transfer agent to monomer is between 0.1% and 5% and the ratio by weight of transfer agent to monomer is between 0.01 and 5%.

13. Method as claimed in any of claims 8 to 10, **characterised in that** the molar ratio of transfer agent to monomer is 2% and the ratio by weight of transfer agent to monomer is between 0.01 and 5%, preferably between 0.5% and 5%.

14. Method as claimed in any of claims 1 to 13, **characterised in that** the water-soluble copolymerised monomer or monomers are chosen from amongst methacrylic acid, itaconic, maleic or fumaric acid, 2-acrylamido-2-methyl-1-propane sulphonic acid in acidic or partially neutralised form, 2-methacrylamido-2-methyl-1-propane sulphonic acid in acidic or partially neutralised form, 3-methacrylamido-2-hydroxy-1-propane sulphonic acid in acidic or partially neutralised form, allylsulphonic acid, methallylsulphonic acid, allyloxybenzene sulphonic acid, methallyloxybenzene sulphonic acid, 2-hydroxy-3-(2-propenyloxy)propane sulphonic acid, 2-methyl-2-propene-1-sulphonic acid, ethylene sulphonic acid, propene sulphonic acid, 2-methyl sulphonic acid, styrene sulphonic acid as well as all the salts thereof, vinyl sulphonic acid, sodium methallylsulphonate, sulphopropyl acrylate or methacrylate, sulphomethylacrylamide, sulphomethylmethacrylamide or else from amongst acrylamide, methacrylamide, n-methylolacrylamide, n-acryloylmorpholine, ethylene glycol methacrylate, ethylene glycol acrylate, propylene glycol methacrylate, propylene glycol acrylate, propene phosphonic acid, ethylene or propylene glycol acrylate or methacrylate phosphate or else also from amongst vinylpyrrolidone, methacrylamido propyl trimethyl ammonium chloride or sulphate, trimethyl ammonium ethyl chloride or sulphate methacrylate, as well as the quaternised or non-quaternised acrylate or acrylamide homologues thereof and/or ammonium dimethyldiallylchloride, as well as mixtures thereof.

15. The use of transfer agents for the polymerisation in solution of acrylic acid, aimed at obtaining IPₑₓₚ < 2, **characterised in that** they are used in the method as claimed in any of claims 1 to 14, and are defined by the general formula:
R-------X------C(S)-----S------R'
in which:
X = O or S,
R represents a group enabling the function R---X to be stabilised by a covalent bond of the C---X type,
R' represents a group such that the R'---S bond is a bond of the C---S type, and **in that** the reaction parameters and the choice of the transfer agents are adapted such that it is made possible to SIMULTANEOUSLY achieve the following two criteria:
a) very low IPᵥ for molar masses Mₙ greater than 1000, i.e., an IPₑₓₚ < 2 without physical or physico-chemical separation and determined according to the so-called IP method,
b) absence of gel upon polymerization, even at very high conversion rates, namely greater than 90%.

16. The use of transfer agents of claim 15, **characterised in that**, in the general formula thereof
R is a group chosen from amongst the aryl or alkyl or phenyl groups, these groups being substitutable by radicals of the heterocyclic, alkylthio, alkoxycarbonyl, aryloxycarbonyl, carboxy, acyloxy, carbamoyl, cyano, dialkyl- or diaryl-phosphonato, dialkyl- or diarylphosphinato type or carboxyls or carbonyls or ethers or alcohols or the mixtures thereof, and
R' is a group comprising at least one secondary or tertiary carbon atom bonded to the sulphur atom.

17. The use of transfer agents of claim 16, **characterised in that**, in the general formula thereof
if X = O,
R is an aryl or phenyl group or phenyl carrying one or more ester, ether, acid, alcohol, amine, sulphate, sulphonate, phosphate, phosphonate or ketone groups,
R' is a group attached to the sulphur atom by a secondary or tertiary carbon, at least one of the substituents of which is a phenyl or carbonyl group,
if X = S,
R = R'
with R' being a group attached to the sulphur atom by a secondary or tertiary carbon, at least one of the constituents of which is a phenyl or carbonyl group.

18. The use of transfer agents of claim 17, **characterised in that** the transfer agents are chosen from amongst

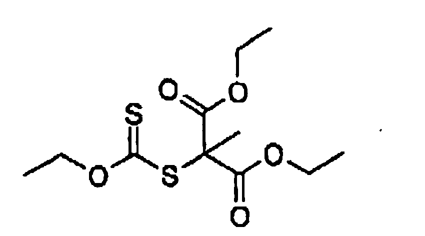

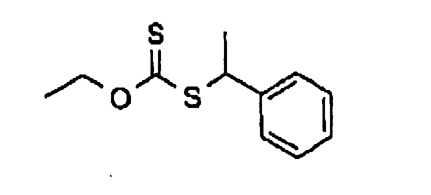

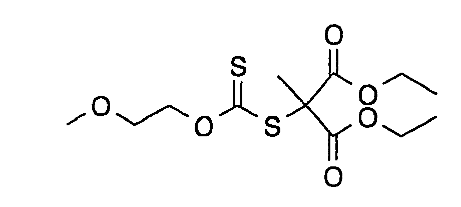

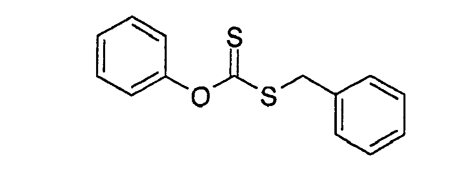

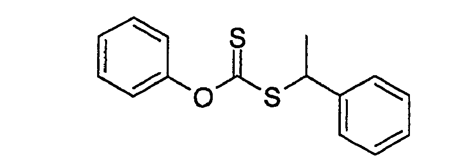

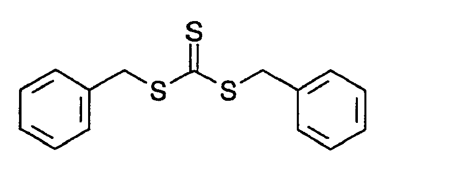

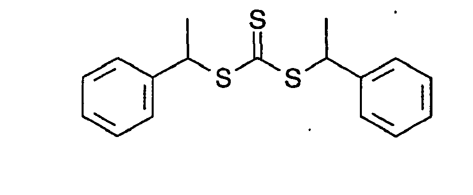

19. The use of transfer agents of claim 18, **characterised in that** the transfer agents are chosen from amongst

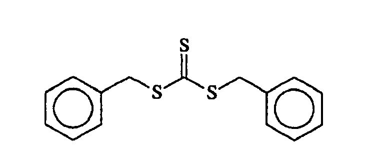

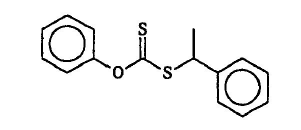

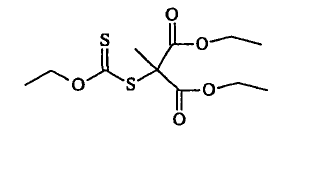

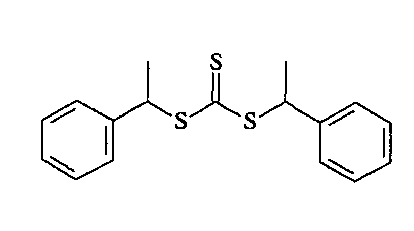

20. The use of transfer agents of claim 19, **characterised in that** the reaction parameters and the choice of transfer agents are adapted such that it is made possible to SIMULTANEOUSLY achieve the following four criteria:
a) very low IPᵥ for molar masses Mₙ greater than 1000, i.e., an IPₑₓₚ < 2 without physical or physico-chemical separation and determined according to the so-called IP method,
b) absence of gel upon polymerisation even at very high conversion rates, namely greater than 90%,
c) very high conversion rate (> 90%) in a reasonable reaction time for industry, i.e., after 4 hours at 100°C, preferably after 2 hours at 90°C, and at atmospheric pressure,
d) using a quantity of transfer agent or agents of between 0.001% to 20% (molar) and 0.01% to 50% (by weight), more particularly between 0.01% and 10% and even more particularly between 0.01% and 5%.

21. The use of transfer agents of claim 20, **characterised in that** a fifth criterion is likewise simultaneously achieved, namely that the molar masses by number increase strictly monotonically when the degree of advancement of the reaction increases.

22. The use of transfer agents of claim 21, **characterised in that** the transfer agents are chosen from amongst

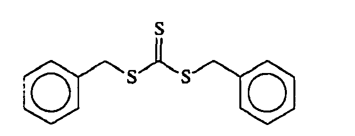

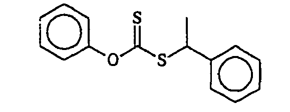

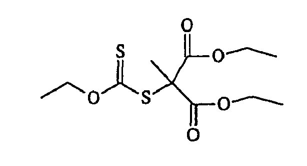

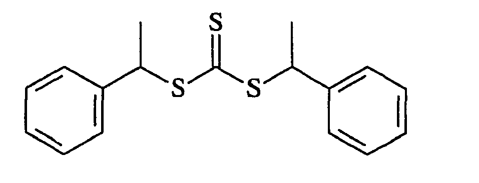

23. The use of transfer agents as claimed in any of claims 19 to 22, **characterised in that** the water-soluble copolymerised monomer or monomers are chosen from amongst methacrylic acid, itaconic, maleic or fumaric acid, 2-acrylamido-2-methyl-1-propane sulphonic acid in acidic or partially neutralised form, 2-methacrylamido-2-methyl-1-propane sulphonic acid in acidic or partially neutralised form, 3-methacrylamido-2-hydroxy-1-propane sulphonic acid in acidic or partially neutralised form, allylsulphonic acid, methallylsulphonic acid, allyloxybenzene sulphonic acid, methallyloxybenzene sulphonic acid, 2-hydroxy-3-(2-propenyloxy)propane sulphonic acid, 2-methyl-2-propene-1-sulphonic acid, ethylene sulphonic acid, propene sulphonic acid, 2-methyl sulphonic acid, styrene sulphonic acid as well as all of the salts thereof, vinyl sulphonic acid, sodium methallylsulphonate, sulphopropyl acrylate or methacrylate, sulphomethylacrylamide, sulphomethylmethacrylamide or else from amongst acrylamide, methacrylamide, n-methylolacrylamide, n-acryloylmorpholine, ethylene glycol methacrylate, ethylene glycol acrylate, propylene glycol methacrylate, propylene glycol acrylate, propene phosphonic acid, ethylene or propylene glycol acrylate or methacrylate phosphate or else also from amongst vinylpyrrolidone, methacrylamido propyl trimethyl ammonium chloride or sulphate, trimethyl ammonium ethyl chloride or sulphate methacrylate, as well as the quaternised or non-quaternised acrylate or acrylamide homologues and/or ammonium dimethyldiallylchloride, as well as the mixtures thereof.

24. A polymer of acrylic acid and of the salts thereof, **characterised in that** it is obtained by the method as claimed in any of claims 1 to 14 or by means of the use of a transfer agent as claimed in any of claims 15 to 23.

25. Applications of the polymers of claim 24 to the papermaking field, in particular with respect to the coating of paper and to paper fillers, and to the fields of petroleum, paint, water treatment, detergents, ceramics, cements or cementing materials, public works, inks and varnishes, the sizing of textiles or the finishing of leather, and more particularly as a dispersing agent and/or agent assisting in the grinding of mineral materials such as natural calcium carbonate, precipitated calcium carbonate, kaolin, titanium dioxide or clays.

26. An aqueous suspension of mineral fillers, **characterised in that** it contains the polymer of claim 24, and more particularly **in that** it contains from 0.05% to 5% by dry weight of the said polymer with respect to the total dry weight of the mineral fillers.

27. An aqueous suspension of mineral fillers of claim 26, **characterised in that** the mineral filler is chosen from amongst natural calcium carbonate such as calcite, chalk or marble, synthetic calcium carbonate, also known as precipitated calcium carbonate, dolomites, magnesium hydroxide, kaolin, talc, gypsum, titanium oxide or aluminium hydroxide.

28. A manufactured and/or coated paper, **characterised in that** it contains the aqueous suspension of mineral fillers as claimed in either of claims 26 or 27.

29. A paint formulation **characterised in that** it contains the aqueous suspension of mineral fillers as claimed in either of claims 26 or 27.

30. A drilling mud **characterised in that** it contains the aqueous suspension of mineral fillers as claimed in either of claims 26 or 27.

## Patentansprüche

1. Verfahren zur Lösungshomopolymerisation von Acrylsäure und deren Salzen oder Lösungscopolymerisation von Acrylsäure mit einem oder mehreren wasserlöslichen Monomeren, um unvernetzte Polymere zu erhalten, **dadurch gekennzeichnet, dass** das Verfahren als einen Überträger oder mehrere Überträger Produkte verwendet, die aus den von der allgemeinen Formel:
R-------X--------C(S)------S--------R'
definierten Produkten ausgewählt sind, in der:
X = O oder S,
R für eine Gruppe steht, die das Stabilisieren der Funktion R---X durch eine kovalente Bindung des Typs C-X ermöglicht,
R' für eine Gruppe wie die Bindung R'---S oder eine Bindung des Typs C---S steht,
und dass die Reaktionsparameter und die Wahl der Überträger derart angepasst werden, dass ermöglicht wird, die folgenden Kriterien gleichzeitig zu erreichen:
a) Einen sehr niedrigen IPᵥ für Molmassen Mₙ von mehr als 1000, das heißt ein IPₑₓₚ < 2, ohne physikalische oder physikalisch-chemische Trennung und gemäß dem IP genannten Verfahren bestimmt,
b) die Abwesenheit von Gel bei der Polymerisation, selbst bei sehr hohen Umsatzgraden, und zwar von mehr als 90%,
c) einen sehr hohen Umsatzgrad (> 90%) in einer für die Industrie vertretbaren Reaktionszeit, das heißt nach 4 Stunden bei 100 °C, vorzugsweise nach 2 Stunden bei 90 °C und bei atmosphärischem Druck,
d) die Verwendung einer Menge eines Überträgers oder mehrerer Überträger zwischen 0,001% und 20% (Mol-%) und 0,01% und 50% (Gew.-%), mehr bevorzugt zwischen 0,01% und 10% und noch mehr bevorzugt zwischen 0,01% und 5%.

2. Verfahren nach Anspruch 1, **dadurch gekennzeichnet, dass** das Lösungsmittelsystem der Polymerisation ein wässriges oder wässrig-alkoholisches System ist, wobei die berücksichtigten Alkohole über 1 bis 4 Kohlenstoffatome einschließlich verfügen und primär, sekundär oder tertiär, vorzugsweise primär oder sekundär sein können.

3. Verfahren nach einem der Ansprüche 1 oder 2, **dadurch gekennzeichnet, dass**, in der allgemeinen Formel der Produkte, die als ein Überträger oder mehrere Überträger verwendet werden,
R eine Gruppe ist, die aus Aryl- oder Alkyl- oder Phenylgruppen, wobei diese Gruppen durch Radikale des Typs Heterocyclus, Alkylthio, Alkoxycarbonyl, Aryloxycarbonyl, Carboxy, Acyloxy, Carbamoyl, Cyano, Dialkyl- oder Diarylphosphonato, Dialkyl- oder Diarylphosphinato substituiert sein können, oder Carboxyl- oder Carbonyl- oder Ether- oder Alkoholgruppen oder deren Gemischen ausgewählt ist, und
R' eine Gruppe ist, die mindestens ein sekundäres oder tertiäres Kohlenstoffatom umfasst, das mit dem Schwefelatom verbunden ist.

4. Verfahren nach einem der Ansprüche 1 bis 3, **dadurch gekennzeichnet, dass**, in der allgemeinen Formel der Produkte, die als ein Überträger oder mehrere Überträger verwendet werden,
wenn X = O,
R eine Aryl- oder Phenylgruppe ist, die eine oder mehrere Ester-, Ether-, Säure-, Alkohol-, Amin-, Sulfat-, Sulfonat-, Phosphat-, Phosphonat- oder Ketongruppen trägt,
R' eine Gruppe ist, die durch einen sekundären oder tertiären Kohlenstoff an das Schwefelatom angelagert ist, wobei mindestens einer der Substituenten eine Phenyl-oder Carbonylgruppe ist,
wenn X = S,
R = R',
wobei R' eine Gruppe ist, durch einen sekundären oder tertiären Kohlenstoff an das Schwefelatom angelagert ist, wobei mindestens einer der Substituenten eine Phenyl-oder Carbonylgruppe ist.

5. Verfahren nach einem der Ansprüche 1 bis 4, **dadurch gekennzeichnet, dass** die Produkte, die als Überträger verwendet werden, aus
ausgewählt sind.

6. Verfahren nach einem der Ansprüche 1 bis 5, **dadurch gekennzeichnet, dass** die Produkte, die als Überträger verwendet werden, aus 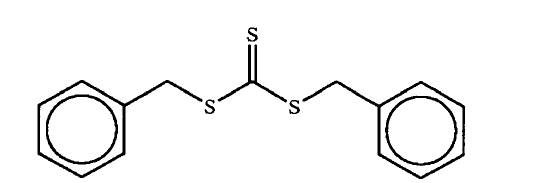 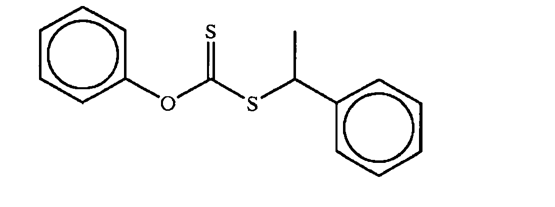 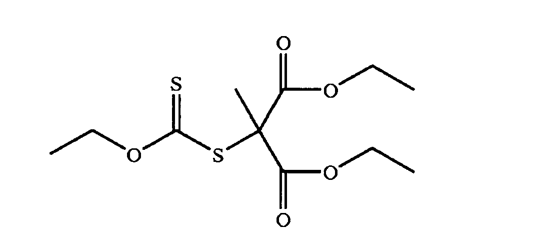 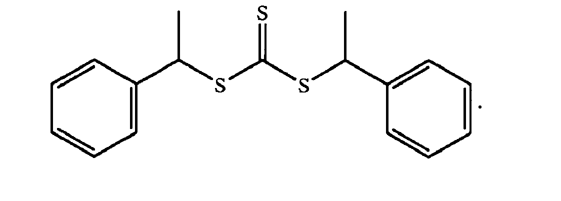 ausgewählt sind.

7. Verfahren nach Anspruch 1, **dadurch gekennzeichnet, dass** ein fünftes Kriterium ebenfalls gleichzeitig erreicht wird, und zwar dass die zahlenmittleren Molmassen streng monoton ansteigen, wenn der Fortschritt der Reaktion vorangeht.

8. Verfahren nach Anspruch 7, **dadurch gekennzeichnet, dass** die Produkte, die als Überträger verwendet werden, aus 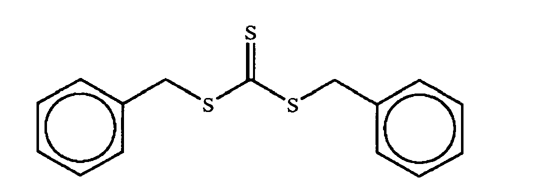 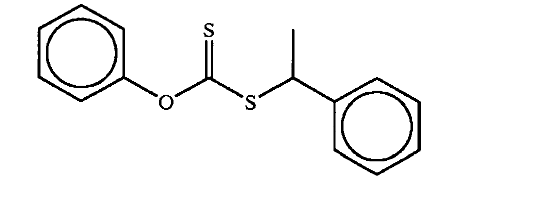 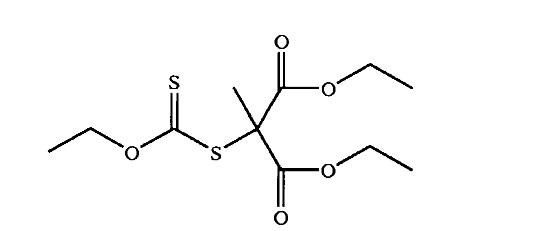 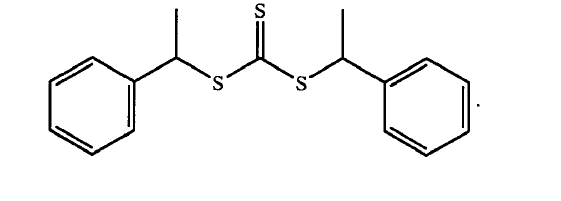 ausgewählt sind.

9. Verfahren nach einem der Ansprüche 1 bis 8, **dadurch gekennzeichnet, dass** man Molmassen Mₙ in einer Größenordnung von 1000 bis 1 Million (1 M) Dalton, vorzugsweise von 2000 bis 1 M, vorzugsweise von 2000 bis 500.000, vorzugsweise von 2000 bis 300.000, vorzugsweise von 2000 bis 50.000, vorzugsweise von 2000 bis 30.000 und vorzugsweise von 2000 bis 15.000 Dalton erhält.

10. Verfahren nach einem der Ansprüche 1 bis 9, **dadurch gekennzeichnet, dass** die Grenzwerte der Überträgermenge derart festgelegt sind, dass das Molverhältnis von Überträger zu Monomer zwischen 0,001% und 20% beträgt und das Gewichtsverhältnis von Überträger zu Monomer zwischen 0,01 und 50% beträgt.

11. Verfahren nach Anspruch 10, **dadurch gekennzeichnet, dass** das Molverhältnis von Überträger zu Monomer zwischen 0,01% und 10% beträgt und das Gewichtsverhältnis von Überträger zu Monomer zwischen 0,01 und 10% beträgt.

12. Verfahren nach Anspruch 11, **dadurch gekennzeichnet, dass** das Molverhältnis von Überträger zu Monomer zwischen 0,1% und 5% beträgt und das Gewichtsverhältnis von Überträger zu Monomer zwischen 0,01 und 5% beträgt.

13. Verfahren nach einem der Ansprüche 8 bis 10, **dadurch gekennzeichnet, dass** das Molverhältnis von Überträger zu Monomer 2% beträgt und das Gewichtsverhältnis von Überträger zu Monomer zwischen 0,01 und 5%, vorzugsweise zwischen 0,5% und 5% beträgt.

14. Verfahren nach einem der Ansprüche 1 bis 13, **dadurch gekennzeichnet, dass** das copolymerisierte wasserlösliche Monomer oder die copolymerisierten wasserlöslichen Monomere aus Methacrylsäure, Itaconsäure, Maleinsäure, Fumarsäure, 2-Acrylamido-2-methyl-1-propansulfonsäure in saurer oder partiell neutralisierter Form, 2-Methacrylamido-2-methyl-1-propansulfonsäure in saurer oder partiell neutralisierter Form, 3-Methacrylamido-2-hydroxy-1-propansulfonsäure in saurer oder partiell neutralisierter Form, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Ethylensulfonsäure, Propensulfonsäure, 2-Methylsulfonsäure, Styrolsulfonsäure sowie all deren Salzen, Vinylsulfonsäure, Natriummethallylsulfonat, Sulfopropylacrylat oder -methacrylat, Sulfomethylacrylamid, Sulfomethylmethacrylamid oder auch aus Acrylamid, Methacrylamid, n-Methylolacrylamid, n-Acryloylmorpholin, Ethylenglykolmethacrylat, Ethylenglykolacrylat, Propylenglykolmethacrylat, Propylenglykolacrylat, Propenphosphonsäure, Ethylenglykolacrylatphosphat oder -methacrylatphosphat oder Propylenglykolacrylatphosphat oder -methacrylatphosphat oder sogar auch aus Vinylpyrrolidon, Methacrylamidopropyltrimethylammoniumchlorid oder -sulfat, Trimethylammoniumethylchloridmethacrylat oder -sulfatmethacrylat sowie deren quaternierten oder nicht quaternierten Acrylat- oder Acrylamid-Homologa und/oder Dimethyldiallylammoniumchlorid sowie deren Gemischen ausgewählt ist bzw. sind.

15. Verwendung von Überträgern zur Lösungspolymerisation von Acrylsäure, mit dem Zweck, einen IPₑₓₚ < 2 zu erhalten, **dadurch gekennzeichnet, dass** sie in dem Verfahren nach einem der Ansprüche 1 bis 14 verwendet werden und von der allgemeinen Formel:
R-------X--------C(S)------S--------R'
definiert werden, in der
X = O oder S,
R für eine Gruppe steht, die das Stabilisieren der Funktion R---X durch eine kovalente Bindung des Typs C-X ermöglicht,
R' für eine Gruppe wie die Bindung R'---S oder eine Bindung des Typs C---S steht,
und dass die Reaktionsparameter und die Wahl der Überträger derart angepasst werden, dass ermöglicht wird, die folgenden zwei Kriterien gleichzeitig zu erreichen:
a) Einen sehr niedrigen IPᵥ für Molmassen Mₙ von mehr als 1000, das heißt ein IPₑₓₚ < 2, ohne physikalische oder physikalisch-chemische Trennung und gemäß dem IP genannten Verfahren bestimmt,
b) die Abwesenheit von Gel bei der Polymerisation, selbst bei sehr hohen Umsatzgraden, und zwar von mehr als 90%.

16. Verwendung von Überträgern nach Anspruch 15, **dadurch gekennzeichnet, dass**, in deren allgemeiner Formel,
R eine Gruppe ist, die aus Aryl- oder Alkyl- oder Phenylgruppen, wobei diese Gruppen durch Radikale des Typs Heterocyclus, Alkylthio, Alkoxycarbonyl, Aryloxycarbonyl, Carboxy, Acyloxy, Carbamoyl, Cyano, Dialkyl- oder Diarylphosphonato, Dialkyl- oder Diarylphosphinato substituiert sein können, oder Carboxyl- oder Carbonyl- oder Ether- oder Alkoholgruppen oder deren Gemischen ausgewählt ist, und
R' eine Gruppe ist, die mindestens ein sekundäres oder tertiäres Kohlenstoffatom umfasst, das mit dem Schwefelatom verbunden ist.

17. Verwendung von Überträgern nach Anspruch 16, **dadurch gekennzeichnet, dass**, in deren allgemeiner Formel,
wenn X = O,
R eine Aryl- oder Phenylgruppe ist, die eine oder mehrere Ester-, Ether-, Säure-, Alkohol-, Amin-, Sulfat-, Sulfonat-, Phosphat-, Phosphonat- oder Ketongruppen trägt,
R' eine Gruppe ist, die durch einen sekundären oder tertiären Kohlenstoff an das Schwefelatom angelagert ist, wobei mindestens einer der Substituenten eine Phenyl-oder Carbonylgruppe ist,
wenn X = S,
R = R',
wobei R' eine Gruppe ist, durch einen sekundären oder tertiären Kohlenstoff an das Schwefelatom angelagert ist, wobei mindestens einer der Substituenten eine Phenyl-oder Carbonylgruppe ist.

18. Verwendung von Überträgern nach Anspruch 17, **dadurch gekennzeichnet, dass** die genannten Überträger aus
ausgewählt sind.

19. Verwendung von Überträgern nach Anspruch 18, **dadurch gekennzeichnet, dass** die genannten Überträger aus 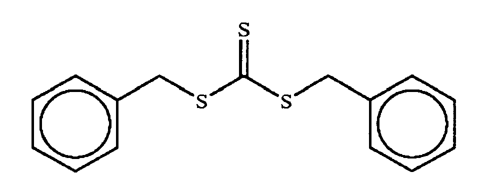 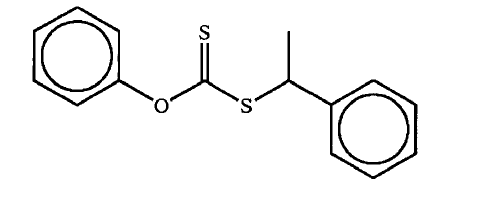 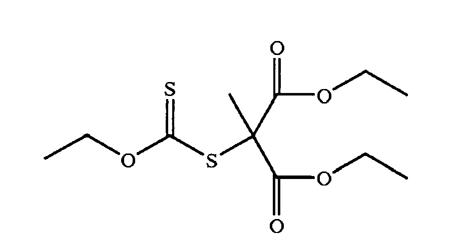 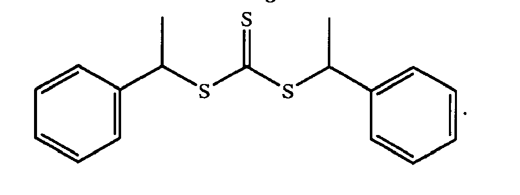 ausgewählt sind.

20. Verwendung von Überträgern nach Anspruch 19, **dadurch gekennzeichnet, dass** die Reaktionsparameter und die Wahl der Überträger derart angepasst werden, dass ermöglicht wird, die folgenden vier Kriterien gleichzeitig zu erreichen:
a) Einen sehr niedrigen IPᵥ für Molmassen Mₙ von mehr als 1000, das heißt ein IPₑₓₚ < 2, ohne physikalische oder physikalisch-chemische Trennung und gemäß dem IP genannten Verfahren bestimmt,
b) die Abwesenheit von Gel bei der Polymerisation, selbst bei sehr hohen Umsatzgraden, und zwar von mehr als 90%,
c) einen sehr hohen Umsatzgrad (> 90%) in einer für die Industrie vertretbaren Reaktionszeit, das heißt nach 4 Stunden bei 100 °C, vorzugsweise nach 2 Stunden bei 90°C und bei atmosphärischem Druck,
d) die Verwendung einer Menge eines Überträgers oder mehrerer Überträger zwischen 0,001% und 20% (Mol-%) und 0,01% und 50% (Gew.-%), mehr bevorzugt zwischen 0,01% und 10% und noch mehr bevorzugt zwischen 0,01% und 5%.

21. Verwendung von Überträgern nach Anspruch 20, **dadurch gekennzeichnet, dass** ein fünftes Kriterium ebenfalls gleichzeitig erreicht wird, und zwar dass die zahlenmittleren Molmassen streng monoton ansteigen, wenn der Fortschritt der Reaktion vorangeht.

22. Verwendung von Überträgern nach Anspruch 21, **dadurch gekennzeichnet, dass** die genannten Überträger aus 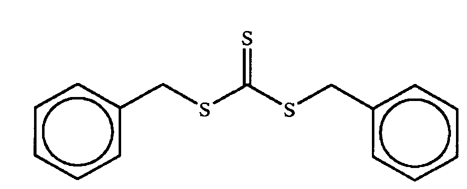 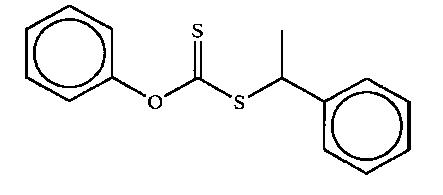 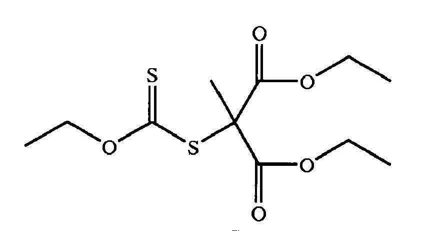 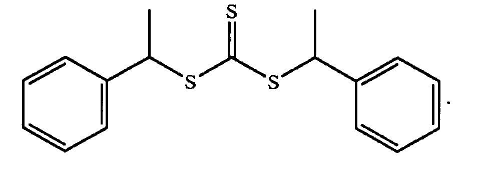 ausgewählt sind.

23. Verwendung von Überträgern nach einem der Ansprüche 19 bis 22, **dadurch gekennzeichnet, dass** das copolymerisierte wasserlösliche Monomer oder die copolymerisierten wasserlöslichen Monomere aus Methacrylsäure, Itaconsäure, Maleinsäure, Fumarsäure, 2-Acrylamido-2-methyl-1-propansulfonsäure in saurer oder partiell neutralisierter Form, 2-Methacrylamido-2-methyl-1-propansulfonsäure in saurer oder partiell neutralisierter Form, 3-Methacrylamido-2-hydroxy-1-propansulfonsäure in saurer oder partiell neutralisierter Form, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Ethylensulfonsäure, Propensulfonsäure, 2-Methylsulfonsäure, Styrolsulfonsäure sowie all deren Salzen, Vinylsulfonsäure, Natriummethallylsulfonat, Sulfopropylacrylat oder -methacrylat, Sulfomethylacrylamid, Sulfomethylmethacrylamid oder auch aus Acrylamid, Methacrylamid, n-Methylolacrylamid, n-Acryloylmorpholin, Ethylenglykolmethacrylat, Ethylenglykolacrylat, Propylenglykolmethacrylat, Propylenglykolacrylat, Propenphosphonsäure, Ethylenglykolacrylatphosphat oder -methacrylatphosphat oder Propylenglykolacrylatphosphat oder -methacrylatphosphat oder sogar auch aus Vinylpyrrolidon, Methacrylamidopropyltrimethylammoniumchlorid oder -sulfat, Trimethylammoniumethylchloridmethacrylat oder -sulfatmethacrylat sowie deren quaternierten oder nicht quaternierten Acrylat- oder Acrylamid-Homologa und/oder Dimethyldiallylammoniumchlorid sowie deren Gemischen ausgewählt ist bzw. sind.

24. Polymer von Acrylsäure und deren Salzen, **dadurch gekennzeichnet, dass** es mit dem Verfahren nach einem der Ansprüche 1 bis 14 oder mithilfe der Verwendung eines Überträgers nach einem der Ansprüche 15 bis 23 erhalten wird.

25. Anwendungen von Polymeren nach Anspruch 24 im Gebiet der Papierherstellung, insbesondere beim Kaschieren von Papier und beim Füllen von Papier, des Erdöls, der Farben, der Wasseraufbereitung, der Reinigungsmittel, der Keramik, der Zemente oder der hydraulischen Binder, des öffentlichen Baus, der Tinten und der Lacke, des Schlichtens von Textilien oder auch der Veredelung von Leder und ganz besonders als Dispersionsmittel und/oder Mahlhilfsmittel für anorganische Substanzen wie natürliches Calciumcarbonat, gefälltes Calciumcarbonat, Kaolin, Titandioxid oder Tone.

26. Wässrige Suspension anorganischer Füllstoffe, **dadurch gekennzeichnet, dass** sie das Polymer nach Anspruch 24 enthält und ganz besonders dass sie 0,05% bis 5% (Trockengewicht) des genannten Polymers im Verhältnis zum Gesamttrockengewicht der anorganischen Füllstoffe enthält.

27. Wässrige Suspension anorganischer Füllstoffe nach Anspruch 26, **dadurch gekennzeichnet, dass** der anorganische Füllstoff aus natürlichem Calciumcarbonat wie Kalkspat, Kreide oder auch Marmor, synthetischem Calciumcarbonat, das auch gefälltes Calciumcarbonat genannt wird, Dolomiten, Magnesiumhydroxid, Kaolin, Talk, Gips, Titandioxid oder auch Aluminiumhydroxid ausgewählt ist.

28. Gefertigtes und/oder beschichtetes Papier, **dadurch gekennzeichnet, dass** es die wässrige Suspension anorganischer Füllstoffe nach einem der Ansprüche 26 oder 27 enthält.

29. Farbformulierung, **dadurch gekennzeichnet, dass** sie die wässrige Suspension anorganischer Füllstoffe nach einem der Ansprüche 26 oder 27 enthält.

30. Bohrschlamm, **dadurch gekennzeichnet, dass** er die wässrige Suspension anorganischer Füllstoffe nach einem der Ansprüche 26 oder 27 enthält.
